# EUROPÄISCHE PATENTANMELDUNG

(11) **EP 4 059 913 A1**
(43) Veröffentlichungstag der Anmeldung: **21.09.2022**
(21) Anmeldenummer: 22162738.3
(22) Anmeldetag: 17.03.2022
(51) Int. Cl.: C05F 11/00, A23K 40/30

(54) **AGRARMITTEL ZUR BEDARFSGERECHTEN ANWENDUNG IN DER AGRARWIRTSCHAFT**

(30) Priorität: 17.03.2021 DE 102021202590
(71) Anmelder: Fraunhofer-Gesellschaft zur Förderung der angewandten Forschung e.V., 80686 München (DE)
(72) Erfinder: Richter, Michael, 94365 Parkstetten (DE); Iwanow, Melanie, 94353 Haibach (DE); Diener, Julia, 94372 Rattiszell (DE); Roth, Steffen, 94315 Straubing (DE)
(74) Vertreter: Schrell, Andreas

(57) **Zusammenfassung**

Die vorliegende Erfindung betrifft ein Agrarmittel, insbesondere Dünge- oder Futtermittel, umfassend mindestens eine poröse sorptionsfähige organische Komponente und mindestens ein von der porösen sorptionsfähigen organischen Komponente sorbiertes Medium, insbesondere ausgewählt aus der Gruppe bestehend aus einem stark eutektischen Lösungsmittel (DES), Wasser und Öl, ein Verfahren zur Herstellung des Agrarmittels und dessen Verwendung als Dünge- oder Futtermittel sowie die Verwendung eines stark eutektischen Lösungsmittels (DES) als Dünge- oder Futtermittel.

## Beschreibung

Die vorliegende Erfindung betrifft ein Agrarmittel, insbesondere Dünge- oder Futtermittel, umfassend mindestens eine poröse sorptionsfähige organische Komponente und mindestens ein von der porösen sorptionsfähigen organischen Komponente sorbiertes Medium, insbesondere ausgewählt aus der Gruppe bestehend aus einem stark eutektischen Lösungsmittel (DES), Wasser und Öl, ein Verfahren zur Herstellung des Agrarmittels und dessen Verwendung als Dünge- oder Futtermittel sowie die Verwendung eines stark eutektischen Lösungsmittels (DES) als Dünge- oder Futtermittel.

Agrarmittel, also Dünge- und Futtermittel, sind seit langem in der Agrarwirtschaft bekannte Mittel zur Steigerung der Effizienz der menschlichen Nahrungsmittelversorgung.

Als Düngemittel stehen hauptsächlich zwei verschiedene Arten zur Verfügung, nämlich mineralische und organische Düngemittel. Es wird generell zwischen schnell wirkenden (Kurzzeit-) und langsam wirkenden (Langzeit-) Düngemitteln unterschieden. Mineralische Düngemittel werden in genauen Zusammensetzungen aus mineralischen Salzen hergestellt. Diese werden durch Abbau in fossilen Lagerstätten als stabile und schwer lösliche Verbindungen erhalten und zu leicht löslichen ionischen Verbindungen modifiziert, was einen hohen Energieaufwand und aufwendige Prozessketten bedeutet. Zudem zählt einer der wichtigsten Düngemittelbestandteile, das Phosphatgestein, nach Ansicht der europäischen Kommission zu den kritischen Rohstoffen und 100 % des Phosphors für Phosphatdüngemittel werden eingeführt. Die Inhaltsstoffe stehen den Pflanzen schnell zur Verfügung. Damit die Bestandteile des Düngemittels langfristig zur Verfügung stehen, werden sie oft beispielsweise mit gesundheitsschädlichen und umweltbelastenden Polymer-Coatings versehen. Es kommen auch andere erdölbasierte Polymerklassen zur Anwendung. Diese sind überwiegend langsam oder nicht vollständig biologisch abbaubar, was zu einer Akkumulation in Böden und Pflanzen führt. Als biobasierte Alternative stehen organische Düngemittel aus tierischen und pflanzlichen Ursprüngen zur Verfügung, welche vor allem aus Gülle, Mist, Klärschlamm und Gärresten hergestellt werden. Organische Düngemittel aus tierischen Reststoffen weisen meist eine hohe Schwermetallbelastung auf oder sind mit Antibiotika- und Hormonrückständen belastet. Die diverse Zusammensetzung der organischen Düngemittel basiert großteils auf den Ausgangsstoffen und Komponenten. Vollkommen biobasierte Langzeit- und Spezial-Dünger in einer optimalen Zusammensetzung maßgeschneidert herstellen zu können, stellt jedoch eine große Herausforderung dar.

Des Weiteren kommt es in der Landwirtschaft (Bereich Futtermittel/Tierernährung) oft zu enormen finanziellen Schäden durch einen Mangel an Mengen- und Spurenelementen in der Tierhaltung. Diese müssen den Tieren bei der Fütterung gezielt zugeführt werden. Die Mangelerscheinungen äußern sich in vermindertem Wachstum, einem schlechteren Immunsystem der Tiere, einer verminderten Fruchtbarkeit und einer verringerten Milchleistung. Ein prominentes Beispiel dafür ist das sogenannte Milchfieber bei Kühen. Dieses wird durch einen Calciummangel im Anschluss an die Kalbung ausgelöst. Dieser Mangel führt zu einer partiellen Lähmung von Muskeln, wodurch das Muttertier nicht mehr aufstehen kann. Ein Verenden des Tieres aufgrund eines Milchfieberfalls ist nicht ausgeschlossen.

Um biobasierte Düngemittel ohne Schadstoffe zu erhalten, fokussieren sich Forschungsaktivitäten beispielsweise auf die Identifikation und Entfernung von Antibiotikarückständen aus organischen Düngemitteln. Ebenso werden neue Rohstoffquellen, wie Abfälle, aus papier- und holzverarbeitenden Betrieben erschlossen.

Die Zusammensetzung der Düngemittel kann durch die Auswahl der Komponenten und Ausgangsstoffe gesteuert werden. Zum Beispiel enthält Rindermist verglichen mit Pferdemist mehr Stickstoff, dafür ist der Kaliumgehalt im Pferdemist höher. Eine weitere nachhaltige Methode ist die Herstellung von Jauchen mit Komponenten aus Pflanzen wie Schachtelhalm, Scharfgarbe, Löwenzahn oder Brennnessel. Diese weisen auch unterschiedlich hohe Nährstoffgehalte auf.

Um eine Langzeitwirkung der Düngemittel zu gewährleisten, werden Pflanzennährstoffe oft mit einer Polymerschicht ummantelt. Je nach Zusammensetzung und Dicke dieser Schicht werden die Pflanzennährstoffe über eine gewisse Periode aus den Partikeln abgegeben.

Eine weitere Lösung, welche sogar Gegenstand einer Lebensmittelzulassung ist, stellt Kaolin als Inhaltsstoff in Düngemitteln dar. In Kombination mit Mikroorganismen und pflanzlichen Rest-Komponenten wird es als vollkommen biobasiertes Düngemittel angeboten.

Im Handel sind bereits Nahrungsergänzungsmittel zum Beispiel gegen den Calciummangel erhältlich, jedoch dürfen diese nicht in der ökologischen Landwirtschaft als Futtermittel eingesetzt werden. Zudem werden viele Futtermittelsorten mit Mengen- und/oder Spurenelementen von Tieren verschmäht. Treten bereits akut Symptome aufgrund der mangelhaften Fütterung bei Tieren auf, ist eine tierärztliche Behandlung notwendig, bei der das entsprechende Mengen- und/oder Spurenelement über Infusionen zugeführt wird.

Das der vorliegenden Erfindung zugrundeliegende technische Problem liegt daher darin, die vorgenannten Nachteile zu überwinden. Insbesondere liegt das der vorliegenden Erfindung zugrundeliegende technische Problem darin, Agrarmittel bereitzustellen, die sich aufgrund ihrer Zusammensetzung gut als Düngemittel beziehungsweise Futtermittel eignen und auf nachhaltige Weise ohne gesundheitsschädliche und/oder umweltbelastende Schadstoffe, Antibiotika und/oder Hormonrückstände und/oder Schwermetallbelastungen herstellen lassen, das heißt diese Substanzen nicht aufweisen. Insbesondere liegt das der vorliegenden Erfindung zugrundeliegende technische Problem ebenfalls darin, Mittel und Verfahren bereitzustellen, die es ermöglichen, ein Agrarmittel, insbesondere Dünge- oder Futtermittel, nachhaltig und ohne gesundheitsschädliche und/oder umweltbelastende Schadstoffe, Antibiotika- und/oder Hormonrückstände und/oder Schwermetallbelastungen zu erhalten, welche darüber hinaus energieeffizient und ohne aufwendige Verfahrensschritte die Herstellung des Agrarmittels sicherstellen. Der vorliegenden Erfindung liegt auch das technische Problem zugrunde, ein individuell und spezifisch auf eine bestimmte Anwendung zugeschnittenes Agrarmittel bereitzustellen, welches, obwohl es aus natürlichen Quellen stammenden Rohstoffen hergestellt werden kann, ein gezielt bereitgestelltes, bevorzugt spezifisches, Zusammensetzungs- und Anwendungsprofil aufweisen kann.

Das technische Problem wird durch die Lehre der vorliegenden Erfindung gelöst, insbesondere der unabhängigen und abhängigen Patentansprüche sowie der zugehörigen Beschreibung, insbesondere durch ein Agrarmittel, insbesondere Dünge- oder Futtermittel, umfassend mindestens eine poröse sorptionsfähige organische Komponente und mindestens ein von der porösen sorptionsfähigen organischen Komponente sorbiertes stark eutektisches Lösungsmittel (DES).

Insbesondere wird das technische Problem durch ein Agrarmittel gelöst, insbesondere Dünge- oder Futtermittel, umfassend mindestens eine poröse sorptionsfähige organische Komponente und mindestens ein von der porösen sorptionsfähigen organischen Komponente sorbiertes flüssiges Medium, insbesondere ausgewählt aus der Gruppe bestehend aus einem verflüssigten stark eutektischen Lösungsmittel (DES), Wasser und Öl, insbesondere ein verflüssigtes stark eutektisches Lösungsmittel (DES).

Demgemäß ist erfindungsgemäß vorgesehen, dass das erfindungsgemäße Agrarmittel ein DES, insbesondere verflüssigtes DES, umfasst, wobei ein DES eine Mischung aus mindestens zwei Ausgangsstoffen A und B ist, bei der die Mischung der mindestens zwei Ausgangsstoffe A und B einen niedrigeren Schmelzpunkt als die jeweiligen Schmelzpunkte der mindestens zwei Ausgangsstoffe A und B aufweist, insbesondere einen Schmelzpunkt unter 150 °C, bevorzugt unter 100 °C.

Erfindungsgemäß ist demgemäß bevorzugt vorgesehen, ein Agrarmittel bereitzustellen, das als Dünge- oder Futtermittel eingesetzt werden kann beziehungsweise ein solches darstellt, wobei das Agrarmittel mindestens eine poröse sorptionsfähige organische Komponente und mindestens ein Medium, insbesondere ein flüssiges Medium ausgewählt aus der Gruppe bestehend aus einem stark eutektischen Lösungsmittel (DES), Wasser und Öl, insbesondere einem verflüssigten stark eutektischen Lösungsmittel (DES), umfasst, welches von der porösen sorptionsfähigen organischen Komponente sorbiert wurde, das heißt insbesondere, dass sich das Medium, insbesondere flüssige Medium, in, an oder in und an der porösen sorptionsfähigen organischen Komponente befindet. Das Medium, insbesondere flüssige Medium, kann in Hohlräumen, zum Beispiel Poren, Maschen und/oder Zwischenräumen der porösen sorptionsfähigen organischen Komponente vorhanden sein, also von der organischen Komponente absorbiert sein, das heißt in die organische Komponente eingelagert sein oder es kann an die organische Komponente adsorbiert sein oder in einer Kombination dieser Formen vorliegen. In bevorzugter Ausführungsform kann durch die Einlagerung des Mediums, insbesondere flüssigen Mediums, das Volumen der organischen Komponente erhöht sein, das heißt aufquellen. In einer weiteren bevorzugten Ausführungsform kann das Medium, insbesondere flüssige Medium, ohne Volumenänderung der organischen Komponente in deren Hohlräumen vorliegen und/oder an deren Oberfläche adsorbiert sein.

Erfindungsgemäß ist bevorzugt vorgesehen, dass das erfindungsgemäße Agrarmittel mindestens eine poröse sorptionsfähige organische Komponente umfasst, die insbesondere aufgrund ihrer Zusammensetzung und/oder ihrer ihr zukommenden porösen Struktur, insbesondere Mikrostruktur, fähig ist, mindestens ein Medium, insbesondere flüssiges Medium, zu sorbieren. Diese Eigenschaft macht sie zu einem exzellenten reversiblen Sorptions- und Transportmaterial für beispielsweise einen in dem flüssigen Medium gelösten Funktionsstoff.

Ein Funktionsstoff im Zusammenhang mit der vorliegenden Erfindung umfasst, insbesondere besteht aus, mindestens ein Pflanzen- und/oder Mikronährstoff, insbesondere mindestens ein Metallsalz oder Metalloxid, und/oder einen organischen Zusatzstoff. Die Produktion der porösen sorptionsfähigen organischen Komponente kommt dabei vorteilhafterweise insbesondere ohne Fungizide, Herbizide und Insektizide aus und stellt somit selbst einen nachhaltigen Prozess dar.

Erfindungsgemäß ist bevorzugt vorgesehen, dass das erfindungsgemäße Agrarmittel mindestens ein Medium, insbesondere flüssiges Medium, insbesondere ausgewählt aus der Gruppe bestehend aus einem stark eutektischen Lösungsmittel, Wasser und Öl, insbesondere verflüssigten stark eutektischen Lösungsmittel (DES), umfasst, das vorteilhafterweise insbesondere fähig ist, einen Funktionsstoff zu lösen und somit das gezielte Einführen eines Funktionsstoffs ermöglicht, ausgewählt aus der Gruppe umfassend, insbesondere bestehend aus, mindestens ein Mikronährstoff und/oder Pflanzennährstoff, insbesondere mindestens ein Metallsalz oder Metalloxid, und/oder einen organischen Zusatzstoff.

Durch Auswahl der porösen sorptionsfähigen organischen Komponente, des Mediums, insbesondere flüssigen Mediums, insbesondere eines verflüssigten DES, und optional der Auswahl eines Funktionsstoffs, insbesondere mindestens eines Pflanzennährstoffs, kann so individuell und spezifisch zum Beispiel ein Düngemittel hergestellt werden. Beispielsweise kann durch eine vorgeschaltete Bodenanalyse ermittelt werden, welche Pflanzennährstoffe dem zu düngenden Boden fehlen. Aufgrund dieser Ergebnisse können dann individuell und spezifisch zusammengestellte Düngemittel hergestellt und dem Bauern zur Verfügung gestellt werden, um insbesondere eine Überdüngung zu vermeiden. Zum Beispiel kann der Stickstoffgehalt des erfindungsgemäßen Agrarmittels gezielt eingestellt werden. Die gute Löslichkeit des mindestens einen Funktionsstoffs, insbesondere Pflanzennährstoffs, insbesondere mindestens einen Metallsalzes oder Metalloxids, in mindestens einem Medium, insbesondere flüssigen Medium, insbesondere verflüssigten DES, erlaubt es zudem, die gewünschten definierten Phosphorgehalte des erfindungsgemäßen Agrarmittels, insbesondere Düngemittels, durch Lösen der entsprechenden Phosphorsalze in einem flüssigen Medium, insbesondere verflüssigten DES, zu erhalten. Dabei ist es in einer erfindungsgemäßen Ausführungsform des Agrarmittels möglich, Phosphate aus Reststoffen, zum Beispiel Klärschlamm, durch Herauslösen der Phosphorverbindungen, insbesondere Phosphorsalze, insbesondere mittels eines verflüssigten DES, rückzugewinnen.

Das verflüssigte DES kann so selbst zur Düngewirkung beispielsweise in Form einer Erhöhung des Stickstoffanteils in dem erfindungsgemäßen Agrarmittel beitragen.

Erfindungsgemäß ist ebenfalls vorgesehen, durch das erfindungsgemäße Agrarmittel, insbesondere durch eine Kombination mindestens einer porösen sorptionsfähigen organischen Komponente, mindestens eines von der porösen sorptionsfähigen organischen Komponente sorbierten Mediums, insbesondere flüssigen Mediums, und optional eines Funktionsstoffs, Tieren zum einen Rohfaser und Proteine durch die mindestens eine poröse sorptionsfähige organische Komponente des erfindungsgemäßen Agrarmittels zur Verfügung zu stellen und zum anderen eine ausgeglichene Mikronährstoff-Versorgung durch den im erfindungsgemäßen Agrarmittel optional enthaltenen mindestens einen Funktionsstoff, insbesondere Mikronährstoff, sicher zu stellen. Aufgrund der individuell und spezifisch anpassbaren Zusammensetzungen und Konzentrationen eines Funktionsstoffs, die durch das mindestens eine Medium, insbesondere flüssige Medium, insbesondere verflüssigte DES, in die mindestens eine poröse sorptionsfähige organische Komponente des erfindungsgemäßen Agrarmittels eingebracht werden kann, kann eine ausgewogene Versorgung der Tiere in Abhängigkeit vom eigenen Futter unter Zusatz oder Ersatz des Futters durch das erfindungsgemäße Agrarmittel sichergestellt werden. Beispielsweise kann durch eine vorgeschaltete Analyse der vom Bauern selbst hergestellten Silage ermittelt werden, welche Mikronährstoffe dem Futtermittel fehlen. Aufgrund dieser Ergebnisse können dann individuell und spezifisch zusammengestellte Futtermittel als Futterersatz oder Futterzusatz hergestellt und dem Bauern zur Verfügung gestellt werden. Dabei wird die mindestens eine poröse sorptionsfähige organische Komponente mit mindestens einem Funktionsstoff beladen, das heißt, dass der mindestens eine Funktionsstoff in mindestens ein Medium, insbesondere flüssiges Medium, insbesondere verflüssigtes DES, eingebracht wird und die mindestens eine poröse sorptionsfähige organische Komponente das mindestens eine mindestens einen Funktionsstoff enthaltene Medium, insbesondere flüssige Medium, insbesondere verflüssigte DES, sorbiert. Aus dem erfindungsgemäßen Agrarmittel können zum Beispiel Pellets hergestellt werden, die den Tieren als Nahrungsergänzungsmittel dienen.

Die mindestens eine poröse sorptionsfähige organische Komponente, das mindestens eine Medium, insbesondere flüssige Medium, und optional der Funktionsstoff zur Herstellung des erfindungsgemäßen Agrarmittels sind vorteilhafterweise kostengünstig, umfänglich verfügbar und bedarfsgerecht sowie technologisch einfach und maßgeschneidert herzustellen. Somit kann diese mindestens eine poröse sorptionsfähige organische Komponente, das mindestens eine Medium, insbesondere flüssige Medium, und optional der mindestens eine Funktionsstoff durch die variabel und bedarfsgerecht gestaltbaren Zusammensetzungen umfänglich als verschiedene erfindungsgemäße Agrarmittel, insbesondere Dünge- oder Futtermittel eingesetzt werden. Somit bietet die vorliegende Erfindung einen ökonomisch und ökologisch zeitgemäßen Zugang zu neuen Agrarmitteln.

Die vorliegende Erfindung ermöglicht somit die modulare Konzeption und Herstellung neuartiger Agrarmittel mittels einfacher Technologie für diverse Anwendungsfelder. Zu dieser Herstellung von Agrarmitteln mit individuell anpassbaren Zusammensetzungen wird mindestens eine poröse sorptionsfähige organische Komponente und mindestens ein Medium, insbesondere flüssiges Medium genutzt. Sowohl die mindestens eine poröse sorptionsfähige organische Komponente als auch das erfindungsgemäße Agrarmittel kann vorteilhafterweise bis zu 100 % in den natürlichen Biomassekreislauf rückgeführt werden, was bei biobasierten Agrarmitteln bisher nicht möglich war und somit einzigartig ist. Vorteilhafterweise kann ein wenig zur Schimmelbildung neigendes Agrarmittel festgestellt werden.

Ein weiterer Gegenstand der Erfindung ist es, ein Verfahren zur Herstellung des erfindungsgemäßen Agrarmittels bereitzustellen, wobei das Verfahren in einem Verfahrensschritt a) das Bereitstellen mindestens einer porösen sorptionsfähigen organischen Komponente und mindestens eines stark eutektischen Lösungsmittels (DES), insbesondere eines verflüssigten stark eutektischen Lösungsmittels (DES), in einem Verfahrensschritt b) das Mischen der in Verfahrensschritt a) bereitgestellten mindestens einen porösen sorptionsfähigen organischen Komponente und dem mindestens einen stark eutektischen Lösungsmittel (DES), insbesondere einen verflüssigten stark eutektischen Lösungsmittel (DES), und in einem Verfahrensschritt c) das Erhalten des erfindungsgemäßen Agrarmittels umfasst.

Erfindungsgemäß ist bevorzugt vorgesehen, optional neben dem Bereitstellen einer porösen sorptionsfähigen organischen Komponente und mindestens eines Mediums, insbesondere flüssigen Mediums, in Verfahrensschritt a) zusätzlich mindestens einen Funktionsstoff umfassend mindestens einen Mikronährstoff und/oder Pflanzennährstoff und/oder organischen Zusatzstoff bereitzustellen, wobei bevorzugt der Mikronährstoff und/oder der Pflanzennährstoff jeweils als mindestens ein Metallsalz oder Metalloxid aufgeführt sein kann.

Das erfindungsgemäße Verfahren sieht daher das Bereitstellen isoliert voneinander vorliegender einzelner Komponenten, nämlich einer porösen sorptionsfähigen organischen Komponente und eines stark eutektischen Lösungsmittels (DES), insbesondere eines verflüssigten stark eutektischen Lösungsmittels (DES), vor, wobei diese beiden Komponenten gegebenenfalls zusammen mit dem optional vorliegenden Funktionsstoff miteinander gemischt werden und so ein gezielt und synthetisch erzeugtes gleichwohl vorteilhafterweise und in bevorzugter Ausführungsform allein aus nachhaltigen, bioabbaubaren und insbesondere allein aus natürlicherweise vorkommenden, Quellen gewonnenes Agrarmittel bereitgestellt wird.

Überraschenderweise ist das erfindungsgemäße Agrarmittel, insbesondere auch bei einer Temperatur von 37 °C, über einen Zeitraum von mindestens 20 Tagen lagerbar, insbesondere in einem abgeschlossenen Behältnis, ohne eine Fäulniserscheinung, insbesondere Schimmelbildung, aufzuweisen.

In einer bevorzugten Ausführungsform der vorliegenden Erfindung ist das bereitgestellte Agrarmittel umfassend mindestens eine poröse sorptionsfähige organische Komponente, insbesondere Hanfschäben, und ein von der organischen Komponente sorbiertes Medium, insbesondere DES, insbesondere DES bestehend aus Glucose und Urea, mindestens 300 Tage, insbesondere mindestens 340 Tage, bei 20 °C an der Umgebungsluft lagerbar, ohne eine Fäulniserscheinung, insbesondere Schimmelbildung, aufzuweisen.

Ein weiterer Gegenstand der Erfindung ist es, die einzelnen Agrarmittelbestandteile modular einzusetzen, das heißt, dass insbesondere das DES und optional das DES mit einem bevorzugt in dem DES gelösten Pflanzennährstoff und/oder Mikronährstoff als Düngemittel, insbesondere als Kurzzeit- oder Langzeitdüngemittel oder als Futtermittel, insbesondere als Futtermittelzusatz, eingesetzt werden kann.

In einer besonders bevorzugten Ausführungsform der vorliegenden Erfindung wird ein Agrarmittel bereitgestellt, umfassend mindestens eine organische Komponente und ein von der organischen Komponente sorbiertes stark eutektisches Lösungsmittel (DES), insbesondere verflüssigtes stark eutektisches Lösungsmittel (DES).

In einer besonders bevorzugten Ausführungsform der vorliegenden Erfindung wird ein Agrarmittel bereitgestellt, umfassend mindestens eine poröse sorptionsfähige organische Komponente und ein von der porösen sorptionsfähigen organischen Komponente sorbiertes Medium, insbesondere flüssiges Medium, insbesondere ausgewählt aus der Gruppe bestehend aus einem stark eutektischen Lösungsmittel (DES), Wasser und Öl, insbesondere verflüssigtes stark eutektisches Lösungsmittel (DES), wobei die poröse sorptionsfähige organische Komponente Stroh, insbesondere Hanfstroh, insbesondere Hanfschäben, insbesondere gemahlene Hanfschäben, ist.

In einer besonders bevorzugten Ausführungsform der vorliegenden Erfindung wird ein Agrarmittel bereitgestellt, umfassend mindestens eine poröse sorptionsfähige organische Komponente und ein von der porösen sorptionsfähigen organischen Komponente sorbiertes Medium, insbesondere flüssiges Medium, insbesondere ausgewählt aus der Gruppe bestehend aus einem stark eutektischen Lösungsmittel (DES), Wasser und Öl, insbesondere verflüssigtes stark eutektisches Lösungsmittel (DES), wobei die poröse sorptionsfähige organische Komponente Schalen, insbesondere Rapsschalen, Sojaschalen oder Hanfschalen, sind.

In einer weiteren bevorzugten Ausführungsform der vorliegenden Erfindung wird ein Agrarmittel bereitgestellt, umfassend mindestens eine poröse sorptionsfähige organische Komponente und mindestens ein von der porösen sorptionsfähigen organischen Komponente sorbiertes Medium, insbesondere flüssiges Medium, welches ein stark eutektisches Lösungsmittel (DES), insbesondere ein verflüssigtes stark eutektisches Lösungsmittel (DES) ist, insbesondere ein NADES.

In einer weiteren bevorzugten Ausführungsform der vorliegenden Erfindung wird ein Agrarmittel bereitgestellt, umfassend mindestens eine poröse sorptionsfähige organische Komponente, wobei die poröse sorptionsfähige organische Komponente Stroh, insbesondere Hanfstroh, insbesondere Hanfschäben, insbesondere gemahlene Hanfschäben, sind und mindestens ein von der porösen sorptionsfähigen organischen Komponente sorbiertes Medium, insbesondere flüssiges Medium, welches ein stark eutektisches Lösungsmittel (DES), insbesondere ein verflüssigtes stark eutektisches Lösungsmittel (DES), ist, insbesondere ein NADES.

In einer weiteren bevorzugten Ausführungsform der vorliegenden Erfindung wird ein Agrarmittel bereitgestellt, umfassend mindestens eine organische Komponente, wobei die organische Komponente Stroh, insbesondere Hanfstroh, insbesondere Hanfschäben, insbesondere gemahlene Hanfschäben, ist und mindestens ein von der organischen Komponente sorbiertes Medium, insbesondere flüssiges Medium, welches ein stark eutektisches Lösungsmittel (DES), insbesondere ein verflüssigtes stark eutektisches Lösungsmittel (DES), ist, insbesondere ein NADES.

In einer weiteren bevorzugten Ausführungsform der vorliegenden Erfindung wird ein Agrarmittel bereitgestellt, umfassend mindestens eine poröse sorptionsfähige organische Komponente, wobei die poröse sorptionsfähige organische Komponente Schalen, insbesondere Rapsschalen, Sojaschalen oder Hanfschalen, sind und mindestens ein von der porösen sorptionsfähigen organischen Komponente sorbiertes Medium, insbesondere flüssiges Medium, welches ein stark eutektisches Lösungsmittel (DES), insbesondere ein verflüssigtes stark eutektisches Lösungsmittel (DES), insbesondere ein NADES, ist.

In einer weiteren bevorzugten Ausführungsform der vorliegenden Erfindung wird ein Agrarmittel bereitgestellt, umfassend mindestens eine organische Komponente, wobei die organische Komponente Schalen, insbesondere Rapsschalen, Sojaschalen oder Hanfschalen, sind und mindestens ein von der organischen Komponente sorbiertes Medium, insbesondere flüssiges Medium, welches ein stark eutektisches Lösungsmittel (DES), insbesondere ein verflüssigtes stark eutektisches Lösungsmittel (DES), insbesondere ein NADES, ist.

In einer weiteren bevorzugten Ausführungsform der vorliegenden Erfindung wird ein Agrarmittel bereitgestellt, umfassend mindestens eine organische Komponente und mindestens ein von der organischen Komponente sorbiertes stark eutektisches Lösungsmittel (DES), insbesondere verflüssigtes stark eutektisches Lösungsmittel (DES) wobei das Agrarmittel zusätzlich mindestens ein Metallsalz oder Metalloxid aufweist. Insbesondere ist die organische Komponente Stroh, insbesondere Hanfstroh, insbesondere Schäben, insbesondere Hanfschäben, und/oder Samenschalen, insbesondere Rapsschalen, Sojaschalen oder Hanfschalen.

In einer weiteren bevorzugten Ausführungsform der vorliegenden Erfindung wird ein Agrarmittel bereitgestellt, umfassend mindestens eine poröse sorptionsfähige organische Komponente und mindestens ein von der porösen sorptionsfähigen organischen Komponente adsorbiertes Medium, insbesondere flüssiges Medium, welches ausgewählt ist aus der Gruppe bestehend aus einem stark eutektischen Lösungsmittel (DES), insbesondere verflüssigten stark eutektischen Lösungsmittel (DES), Wasser und Öl, wobei das Agrarmittel zusätzlich mindestens ein Metallsalz oder Metalloxid aufweist. Insbesondere ist die poröse sorptionsfähige organische Komponente Stroh, insbesondere Hanfstroh, insbesondere Schäben, insbesondere Hanfschäben, und/oder Samenschalen, insbesondere Rapsschalen, Sojaschalen oder Hanfschalen.

In einer besonderes bevorzugten Ausführungsform der vorliegenden Erfindung wird ein Agrarmittel bereitgestellt, umfassend mindestens eine poröse sorptionsfähige organische Komponente und ein von der organischen Komponente absorbiertes Medium, insbesondere flüssiges Medium, welches ein stark eutektisches Lösungsmittel (DES), insbesondere ein verflüssigtes stark eutektisches Lösungsmittel (DES), ist, insbesondere ein NADES und wobei das Agrarmittel mindestens ein Metallsalz oder Metalloxid aufweist, insbesondere wobei die poröse sorptionsfähige organische Komponente Stroh, insbesondere Hanfstroh, insbesondere Schäben, insbesondere Hanfschäben und/oder Samenschalen, insbesondere Rapsschalen, Sojaschalen oder Hanfschalen, sind.

In einer erfindungsgemäßen Ausführungsform umfasst das erfindungsgemäße Agrarmittel, insbesondere Dünge- oder Futtermittel, mindestens eine poröse sorptionsfähige organische Komponente, insbesondere Hanfschäben oder Rapsschalen, und mindestens ein von der porösen sorptionsfähigen organischen Komponente sorbiertes flüssiges Medium, insbesondere ausgewählt aus der Gruppe bestehend aus einem verflüssigten stark eutektischen Lösungsmittel (DES), Wasser und Öl, insbesondere umfasst das erfindungsgemäße Agrarmittel 1 bis 99 Gew.-% mindestens einer porösen sorptionsfähigen organischen Komponente, insbesondere Hanfschäben oder Rapsschalen, insbesondere 5 bis 90 Gew.-%, insbesondere 10 bis 99 Gew.-%, insbesondere 7 bis 80 Gew.-%, insbesondere 10 bis 70 Gew.-%, insbesondere 12 bis 63 Gew.-%, insbesondere 13 bis 62 Gew.-%, insbesondere 14 bis 63, insbesondere 22 bis 63 Gew.-%, insbesondere 25 bis 63 Gew.-%, insbesondere 10 bis 50 Gew.-%, insbesondere 10 bis 40 Gew.-%, insbesondere 10 bis 30 Gew.-%, insbesondere 40 bis 70 Gew.-% (Gewicht poröse sorptionsfähige organische Komponente bezogen auf Gesamtgewicht erfindungsgemäßes Agrarmittel) und 99 bis 1 Gew.-% mindestens eines von der porösen sorptionsfähigen organischen Komponente sorbierten flüssigen Mediums, insbesondere ausgewählt aus der Gruppe bestehend aus einem verflüssigten stark eutektischen Lösungsmittel (DES), Wasser und Öl, insbesondere 95 bis 10 Gew.-%, insbesondere 90 bis 1 Gew.-%, insbesondere 93 bis 20 Gew.-%, insbesondere 90 bis 30 Gew.-%, insbesondere 88 bis 37 Gew.-%, insbesondere 87 bis 38 Gew.-%, insbesondere 86 bis 37 Gew.-%, insbesondere 78 bis 37 Gew.-%, insbesondere 75 bis 37 Gew.-%, insbesondere 90 bis 50 Gew.-%, insbesondere 90 bis 60 Gew.-%, insbesondere 90 bis 70 Gew.-%, insbesondere 60 bis 30 Gew.-% (Gewicht flüssiges Medium bezogen auf Gesamtgewicht erfindungsgemäßes Agrarmittel).

In einer bevorzugten Ausführungsform umfasst das erfindungsgemäße Agrarmittel, insbesondere Dünge- oder Futtermittel, 1 bis 99 Gew.-% mindestens einer porösen sorptionsfähigen organischen Komponente, insbesondere Hanfschäben, insbesondere 5 bis 95 Gew.-%, insbesondere 10 bis 90 Gew.-%, insbesondere 10 bis 99 Gew.-%, insbesondere 20 bis 80 Gew.-%, insbesondere 30 bis 70 Gew.-%, insbesondere 40 bis 67 Gew.-%, insbesondere 50 bis 65 Gew.-%, insbesondere 62 bis 63 Gew.-%, insbesondere 40 bis 70 Gew.-% (Gewicht poröse sorptionsfähige organische Komponente bezogen auf Gesamtgewicht erfindungsgemäßes Agrarmittel) und 99 bis 1 Gew.-% mindestens eines von der porösen sorptionsfähigen organischen Komponente sorbierten flüssigen Mediums, insbesondere eines verflüssigten stark eutektischen Lösungsmittels (DES), insbesondere 95 bis 5 Gew.-%, insbesondere 90 bis 1 Gew.-%, insbesondere 90 bis 10 Gew.-%, insbesondere 80 bis 20 Gew.-%, insbesondere 70 bis 30 Gew.-%, insbesondere 60 bis 33 Gew.-%, insbesondere 50 bis 35 Gew.-%, insbesondere 38 bis 37 Gew.-%, insbesondere 60 bis 30 Gew.-% (Gewicht flüssiges Medium bezogen auf Gesamtgewicht erfindungsgemäßes Agrarmittel).

In einer bevorzugten Ausführungsform umfasst das erfindungsgemäße Agrarmittel, insbesondere Dünge- oder Futtermittel, 1 bis 99 Gew.-% mindestens einer porösen sorptionsfähigen organischen Komponente, insbesondere Hanfschäben oder Rapsschalen, insbesondere 5 bis 95 Gew.-%, insbesondere 10 bis 99 Gew.-%, insbesondere 6 bis 80 Gew.-%, insbesondere 7 bis 60 Gew.-%, insbesondere 8 bis 40 Gew.-%, insbesondere 9 bis 30 Gew.-%, insbesondere 11 bis 25 Gew.-%, insbesondere 14 bis 22 Gew.-%, insbesondere 40 bis 70 Gew.-% (Gewicht poröse sorptionsfähige organische Komponente bezogen auf Gesamtgewicht erfindungsgemäßes Agrarmittel) und 99 bis 1 Gew.-% mindestens eines von der porösen sorptionsfähigen organischen Komponente sorbierten flüssigen Mediums, insbesondere Wasser, insbesondere 95 bis 5 Gew.-%, insbesondere 90 bis 1 Gew.-%, insbesondere 94 bis 20 Gew.-%, insbesondere 93 bis 40 Gew.-%, insbesondere 92 bis 60 Gew.-%, insbesondere 91 bis 70 Gew.-%, insbesondere 89 bis 75 Gew.-%, insbesondere 86 bis 78 Gew.-%, insbesondere 60 bis 30 Gew.-% (Gewicht flüssiges Medium bezogen auf Gesamtgewicht erfindungsgemäßes Agrarmittel).

In einer bevorzugten Ausführungsform umfasst das erfindungsgemäße Agrarmittel, insbesondere Dünge- oder Futtermittel, 1 bis 99 Gew.-% mindestens einer porösen sorptionsfähigen organischen Komponente, insbesondere gemahlene Hanfschäben oder Rapsschalen, insbesondere 5 bis 95 Gew.-%, insbesondere 10 bis 99 Gew.-%, insbesondere 6 bis 80 Gew.-%, insbesondere 7 bis 60 Gew.-%, insbesondere 8 bis 40 Gew.-%, insbesondere 9 bis 30 Gew.-%, insbesondere 11 bis 20 Gew.-%, insbesondere 12 bis 14 Gew.-%, insbesondere 40 bis 70 Gew.-% (Gewicht poröse sorptionsfähige organische Komponente bezogen auf Gesamtgewicht erfindungsgemäßes Agrarmittel) und 99 bis 1 Gew.-% mindestens eines von der porösen sorptionsfähigen organischen Komponente sorbierten flüssigen Mediums, insbesondere Wasser, insbesondere 95 bis 5 Gew.-%, insbesondere 90 bis 1 Gew.-%, insbesondere 94 bis 20 Gew.-%, insbesondere 93 bis 40 Gew.-%, insbesondere 92 bis 60 Gew.-%, insbesondere 91 bis 70 Gew.-%, insbesondere 89 bis 80 Gew.-%, insbesondere 88 bis 86 Gew.-%, insbesondere 60 bis 30 Gew.-% (Gewicht flüssiges Medium bezogen auf Gesamtgewicht erfindungsgemäßes Agrarmittel).

In einer bevorzugten Ausführungsform umfasst das erfindungsgemäße Agrarmittel, insbesondere Dünge- oder Futtermittel, 1 bis 99 Gew.-% mindestens einer porösen sorptionsfähigen organischen Komponente, insbesondere Hanfschäben oder gemahlene Hanfschäben, insbesondere 5 bis 95 Gew.-%, insbesondere 10 bis 99 Gew.-%, insbesondere 6 bis 80 Gew.-%, insbesondere 7 bis 60 Gew.-%, insbesondere 8 bis 40 Gew.-%, insbesondere 9 bis 30 Gew.-%, insbesondere 11 bis 25 Gew.-%, insbesondere 12 bis 22 Gew.-%, insbesondere 40 bis 70 Gew.-% (Gewicht poröse sorptionsfähige organische Komponente bezogen auf Gesamtgewicht erfindungsgemäßes Agrarmittel) und 99 bis 1 Gew.-% mindestens eines von der porösen sorptionsfähigen organischen Komponente sorbierten flüssigen Mediums, insbesondere Wasser, insbesondere 95 bis 5 Gew.-%, insbesondere 90 bis 1 Gew.-%, insbesondere 94 bis 20 Gew.-%, insbesondere 93 bis 40 Gew.-%, insbesondere 92 bis 60 Gew.-%, insbesondere 91 bis 70 Gew.-%, insbesondere 89 bis 75 Gew.-%, insbesondere 88 bis 78 Gew.-%, insbesondere 60 bis 30 Gew.-% (Gewicht flüssiges Medium bezogen auf Gesamtgewicht erfindungsgemäßes Agrarmittel).

In einer bevorzugten Ausführungsform umfasst das erfindungsgemäße Agrarmittel, insbesondere Dünge- oder Futtermittel, 1 bis 99 Gew.-% mindestens einer porösen sorptionsfähigen organischen Komponente, insbesondere Hanfschäben, insbesondere 5 bis 95 Gew.-%, insbesondere 10 bis 99 Gew.-%, insbesondere 10 bis 80 Gew.-%, insbesondere 15 bis 60 Gew.-%, insbesondere 20 bis 40 Gew.-%, insbesondere 20 bis 30 Gew.-%, insbesondere 20 bis 25 Gew.-%, insbesondere 22 Gew.-%, insbesondere 40 bis 70 Gew.-% (Gewicht poröse sorptionsfähige organische Komponente bezogen auf Gesamtgewicht erfindungsgemäßes Agrarmittel) und 99 bis 1 Gew.-% mindestens eines von der porösen sorptionsfähigen organischen Komponente sorbierten flüssigen Mediums, insbesondere Wasser, insbesondere 95 bis 5 Gew.-%, insbesondere 90 bis 1 Gew.-%, insbesondere 90 bis 20 Gew.-%, insbesondere 85 bis 40 Gew.-%, insbesondere 80 bis 60 Gew.-%, insbesondere 80 bis 70 Gew.-%, insbesondere 80 bis 75 Gew.-%, insbesondere 78 Gew.-% insbesondere 60 bis 30 Gew.-% (Gewicht flüssiges Medium bezogen auf Gesamtgewicht erfindungsgemäßes Agrarmittel).

In einer bevorzugten Ausführungsform umfasst das erfindungsgemäße Agrarmittel, insbesondere Dünge- oder Futtermittel, 1 bis 99 Gew.-% mindestens einer porösen sorptionsfähigen organischen Komponente, insbesondere gemahlene Hanfschäben, insbesondere 5 bis 95 Gew.-%, insbesondere 10 bis 99 Gew.-%, insbesondere 6 bis 80 Gew.-%, insbesondere 7 bis 60 Gew.-%, insbesondere 8 bis 40 Gew.-%, insbesondere 9 bis 30 Gew.-%, insbesondere 11 bis 20 Gew.-%, insbesondere 12 bis 13 Gew.-%, insbesondere 40 bis 70 Gew.-% (Gewicht poröse sorptionsfähige organische Komponente bezogen auf Gesamtgewicht erfindungsgemäßes Agrarmittel) und 99 bis 1 Gew.-% mindestens eines von der porösen sorptionsfähigen organischen Komponente sorbierten flüssigen Mediums, insbesondere Wasser, insbesondere 95 bis 5 Gew.-%, insbesondere 90 bis 1 Gew.-%, insbesondere 94 bis 20 Gew.-%, insbesondere 93 bis 40 Gew.-%, insbesondere 92 bis 60 Gew.-%, insbesondere 91 bis 70 Gew.-%, insbesondere 89 bis 80 Gew.-%, insbesondere 88 bis 87 Gew.-%, insbesondere 60 bis 30 Gew.-% (Gewicht flüssiges Medium bezogen auf Gesamtgewicht erfindungsgemäßes Agrarmittel).

In einer bevorzugten Ausführungsform umfasst das erfindungsgemäße Agrarmittel, insbesondere Dünge- oder Futtermittel, 1 bis 99 Gew.-% mindestens einer porösen sorptionsfähigen organischen Komponente, insbesondere Rapsschalen, insbesondere 5 bis 95 Gew.-%, insbesondere 10 bis 99 Gew.-%, insbesondere 6 bis 80 Gew.-%, insbesondere 7 bis 60 Gew.-%, insbesondere 8 bis 40 Gew.-%, insbesondere 9 bis 30 Gew.-%, insbesondere 11 bis 20 Gew.-%, insbesondere 14 Gew.-%, insbesondere 40 bis 70 Gew.-% (Gewicht poröse sorptionsfähige organische Komponente bezogen auf Gesamtgewicht erfindungsgemäßes Agrarmittel) und 99 bis 1 Gew.-% mindestens eines von der porösen sorptionsfähigen organischen Komponente sorbierten flüssigen Mediums, insbesondere Wasser, insbesondere 95 bis 5 Gew.-%, insbesondere 90 bis 1 Gew.-%, insbesondere 94 bis 20 Gew.-%, insbesondere 93 bis 40 Gew.-%, insbesondere 92 bis 60 Gew.-%, insbesondere 91 bis 70 Gew.-%, insbesondere 89 bis 80 Gew.-%, insbesondere 86 Gew.-%, insbesondere 60 bis 30 Gew.-% (Gewicht flüssiges Medium bezogen auf Gesamtgewicht erfindungsgemäßes Agrarmittel).

In einer bevorzugten Ausführungsform umfasst das erfindungsgemäße Agrarmittel, insbesondere Dünge- oder Futtermittel, 1 bis 99 Gew.-% mindestens einer porösen sorptionsfähigen organischen Komponente, insbesondere Hanfschäben, insbesondere 5 bis 95 Gew.-%, insbesondere 10 bis 99 Gew.-%, insbesondere 10 bis 80 Gew.-%, insbesondere 15 bis 60 Gew.-%, insbesondere 20 bis 40 Gew.-%, insbesondere 22 bis 30 Gew.-%, insbesondere 24 bis 26 Gew.-%, insbesondere 25 Gew.-%, insbesondere 40 bis 70 Gew.-% (Gewicht poröse sorptionsfähige organische Komponente bezogen auf Gesamtgewicht erfindungsgemäßes Agrarmittel) und 99 bis 1 Gew.-% mindestens eines von der porösen sorptionsfähigen organischen Komponente sorbierten flüssigen Mediums, insbesondere Öl, insbesondere 95 bis 5 Gew.-%, insbesondere 90 bis 1 Gew.-%, insbesondere 90 bis 20 Gew.-%, insbesondere 85 bis 40 Gew.-%, insbesondere 80 bis 60 Gew.-%, insbesondere 78 bis 70 Gew.-%, insbesondere 76 bis 74 Gew.-%, insbesondere 75 Gew.-%, insbesondere 60 bis 30 Gew.-% (Gewicht flüssiges Medium bezogen auf Gesamtgewicht erfindungsgemäßes Agrarmittel).

In einer bevorzugten Ausführungsform umfasst das erfindungsgemäße Agrarmittel, insbesondere Dünge- oder Futtermittel, 1 bis 99 Gew.-% mindestens einer porösen sorptionsfähigen organischen Komponente, insbesondere gemahlene Hanfschäben, insbesondere 5 bis 95 Gew.-%, insbesondere 10 bis 99 Gew.-%, insbesondere 10 bis 90 Gew.-%, insbesondere 30 bis 80 Gew.-%, insbesondere 50 bis 75 Gew.-%, insbesondere 55 bis 70 Gew.-%, insbesondere 60 bis 65 Gew.-%, insbesondere 62 bis 63 Gew.-%, insbesondere 40 bis 70 Gew.-% (Gewicht poröse sorptionsfähige organische Komponente bezogen auf Gesamtgewicht erfindungsgemäßes Agrarmittel) und 99 bis 1 Gew.-% mindestens eines von der porösen sorptionsfähigen organischen Komponente sorbierten flüssigen Mediums, insbesondere DES, insbesondere 95 bis 5 Gew.-%, insbesondere 90 bis 1 Gew.-%, insbesondere 90 bis 10 Gew.-%, insbesondere 70 bis 20 Gew.-%, insbesondere 50 bis 25 Gew.-%, insbesondere 45 bis 30 Gew.-%, insbesondere 40 bis 35 Gew.-%, insbesondere 38 bis 37 Gew.-%, insbesondere 60 bis 30 Gew.-% (Gewicht flüssiges Medium bezogen auf Gesamtgewicht erfindungsgemäßes Agrarmittel).

In einer bevorzugten Ausführungsform umfasst, insbesondere besteht die poröse sorptionsfähige organische Komponente des erfindungsgemäßen Agrarmittels aus einem pflanzlichen, tierischen oder pilzlichen Biopolymer, insbesondere einer Lignin-, Hemicellulose-, Cellulose- und/oder Chitosan-haltigen Komponente. Bevorzugt weist eine Lignin-, Hemicellulose-, Cellulose- und/oder Chitosan-haltige Komponente mindestens 50 Gew.-%, mindestens 60 Gew.-%, mindestens 70 Gew.-%, insbesondere mindestens 80 Gew.-% Lignin, Hemicellulose, Cellulose und/oder Chitosan auf.

In einer besonders bevorzugten Ausführungsform weist die poröse sorptionsfähige organische Komponente eine poröse Struktur auf, das heißt weist Poren auf, insbesondere ausgezeichnet durch eine elliptische, rechtwinklige, ovale oder runde Form.

In einer besonders bevorzugten Ausführungsform weist die poröse sorptionsfähige organische Komponente eine mikroporöse Struktur auf. In einer besonders bevorzugten Ausführungsform ist die mikroporöse Struktur ausgezeichnet durch einen durchschnittlichen Porendurchmesser der porösen sorptionsfähigen organischen Komponente von 1 bis 999 µm, insbesondere 2 bis 750 µm, insbesondere 5 bis 500 µm, insbesondere 5 bis 250 µm, insbesondere 5 bis 100 µm, insbesondere 5 bis 80 µm.

In einer besonders bevorzugten Ausführungsform ist die mikroporöse Struktur ausgezeichnet durch eine durchschnittliche Porenlänge der porösen sorptionsfähigen organischen Komponente von mindestens 1 µm, insbesondere mindestens 10 µm, insbesondere mindestens 20 µm, insbesondere mindestens 30 µm, insbesondere mindestens 40 µm, insbesondere mindestens 50 µm, insbesondere mindestens 100 µm, insbesondere mindestens 1000 µm, insbesondere 1 bis 999 µm, insbesondere 50 bis 750 µm, insbesondere 100 bis 500 µm, insbesondere 200 bis 400 µm, insbesondere 300 bis 350 µm, insbesondere weisen mindestens 70 % der Poren eine Porenlänge von 1 bis 999 µm, insbesondere 50 bis 750 µm, insbesondere 100 bis 500 µm, insbesondere 200 bis 400 µm, insbesondere 300 bis 350 µm (jeweils bezogen auf die längste Seite der Pore) auf.

In einer besonders bevorzugten Ausführungsform weist die poröse sorptionsfähige organische Komponente, insbesondere Hanfschäben, eine mikroporöse Struktur ausgezeichnet durch einen durchschnittlichen Porendurchmesser von 1 bis 999 µm, insbesondere 2 bis 750 µm, insbesondere 5 bis 500 µm, insbesondere 5 bis 250 µm, insbesondere 5 bis 100 µm, insbesondere 5 bis 80 µm.

In einer bevorzugten Ausführungsform umfasst, insbesondere besteht die poröse sorptionsfähige organische Komponente des erfindungsgemäßen Agrarmittels aus Schäben, insbesondere Hanfschäben, gemahlenen Hanfschäben, Samenschalen, insbesondere Rapsschalen, Sojaschalen, Hanfschalen, Holz, Holzabfälle, Naturfasern, Stroh, insbesondere Hanfstroh, Sägespäne, Chitosan, Lignin, porösen nachwachsenden Materialien oder einer Kombination davon.

In einer bevorzugten Ausführungsform umfasst, insbesondere besteht die organische Komponente des erfindungsgemäßen Agrarmittels aus Schäben, insbesondere Hanfschäben, gemahlenen Hanfschäben, Samenschalen, insbesondere Rapsschalen, Sojaschalen, Hanfschalen, Holz, Holzabfälle, Naturfasern, Stroh, insbesondere Hanfstroh, Sägespäne, Chitosan, Lignin, porösen nachwachsenden Materialien oder einer Kombination davon.

In einer besonders bevorzugten Ausführungsform liegen die Schäben, insbesondere Hanfschäben in gemahlener Form vor, insbesondere besteht die poröse sorptionsfähige organische Komponente aus Hanfschäben, insbesondere gemahlenen Hanfschäben.

In einer besonders bevorzugten Ausführungsform liegen die Schäben, insbesondere Hanfschäben in gemahlener Form vor, insbesondere besteht die Komponente aus Hanfschäben, insbesondere gemahlenen Hanfschäben.

In einer besonders bevorzugten Ausführungsform weisen die gemahlenen Hanfschäben eine homogene Größe von 0,1 mm bis 10 cm, insbesondere 0,2 mm bis 5 cm, insbesondere 0,5 mm bis 1 cm, insbesondere 1 mm bis 7 mm, insbesondere 3 mm bis 5 mm, insbesondere 1 cm, insbesondere 5 mm, auf.

Die erfindungsgemäße poröse sorptionsfähige organische Komponente, insbesondere Schäben, insbesondere Hanfschäben, wird besonders bevorzugt im maschinellen Prozess der Entholzung eines Pflanzenstängels, insbesondere eines getrockneten Pflanzenstängels, erhalten. Im Zusammenhang mit der vorliegenden Erfindung wird unter "getrockneten Pflanzenstängeln" Stroh verstanden, beispielsweise sind getrocknete Hanfstängel Hanfstroh, wobei Hanfstroh Hanfschäben und Hanffasern umfasst, insbesondere aus diesen besteht.

Die erfindungsgemäßen Schäben, insbesondere Hanfschäben, entsprechen etwa 10 bis 70 Gew.-% des Pflanzenstängels, insbesondere des Hanfstängels, insbesondere 20 bis 68 Gew.-%, insbesondere 30 bis 66 Gew.-%, insbesondere 35 bis 60 Gew.-%, insbesondere 40 bis 50 Gew.-%, insbesondere 40 Gew.-% (bezogen auf Gesamtgewicht des Pflanzenstängels).

Die erfindungsgemäßen Schäben, insbesondere Hanfschäben, entsprechen etwa 10 bis 70 Gew.-% des Strohs, insbesondere des Hanfstrohs, insbesondere 20 bis 68 Gew.-%, insbesondere 30 bis 66 Gew.-%, insbesondere 35 bis 60 Gew.-%, insbesondere 40 bis 50 Gew.-%, insbesondere 40 Gew.-% (bezogen auf Gesamtgewicht des Strohs).

In einer besonders bevorzugten Ausführungsform ist die erfindungsgemäße poröse sorptionsfähige organische Komponente, insbesondere Schäben, insbesondere Hanfschäben, biologisch abbaubar.

In einer bevorzugten Ausführungsform ist das DES des erfindungsgemäßen Agrarmittels ein natürliches stark eutektisches Lösungsmittel (NADES), ein Typ I DES, ein Typ II DES, ein Typ III DES, ein Typ IV DES oder eine Kombination davon.

In einer besonders bevorzugten Ausführungsform ist das DES des erfindungsgemäßen Agrarmittels ein NADES, insbesondere ein NADES aus mindestens einer organischen Säure, einem Zucker, einem Alkohol, einem Amin, einer Aminosäure und/oder einer Kombination davon und/oder einer Kombination verschiedener organischer Säuren, Zucker, Alkohole, Amine oder Aminosäuren.

In einer bevorzugten Ausführungsform umfasst das DES des erfindungsgemäßen Agrarmittels eine Mischung aus mindestens zwei Ausgangsstoffen A und B, wobei der mindestens eine Ausgangsstoff A ein Elektronenpaar-Akzeptor und/oder ein Wasserstoffbrückenbindungs-Akzeptor, insbesondere ein Salz, und der mindestens eine Ausgangsstoff B ein Elektronenpaar-Donor und/oder Wasserstoffbrückenbindungs-Donor ist und wobei Ausgangsstoff A in allen erfindungsgemäßen Ausführungsformen ungleich Ausgangsstoff B ist.

In einer bevorzugten Ausführungsform umfasst das DES des erfindungsgemäßen Agrarmittels eine Mischung aus mindestens zwei Ausgangsstoffen A und B, wobei der mindestens eine Ausgangsstoff A ein Wasserstoffbrückenbindungs-Akzeptor, insbesondere ein Salz, und der mindestens eine Ausgangsstoff B ein Wasserstoffbrückenbindungs-Donor ist und wobei Ausgangsstoff A in allen erfindungsgemäßen Ausführungsformen ungleich Ausgangsstoff B ist.

In einer besonders bevorzugten Ausführungsform umfasst das DES des erfindungsgemäßen Agrarmittels eine Mischung aus mindestens zwei Ausgangsstoffen A und B, bevorzugt besteht das DES des erfindungsgemäßen Agrarmittels aus diesen, wobei das erfindungsgemäße DES 99 bis 50 Mol-% des Ausgangsstoffs A, insbesondere 90 bis 50 Mol-%, insbesondere 80 bis 50 Mol-%, insbesondere 70 bis 50 Mol-%, insbesondere 60 bis 50 Mol-%, insbesondere 75 Mol-%, insbesondere 67 Mol-%, insbesondere 50 Mol-% (bezogen auf Gesamtstoffmenge DES) und 1 bis 50 Mol-% des Ausgangsstoffs B, insbesondere 10 bis 50 Mol-%, insbesondere 20 bis 50 Mol-%, insbesondere 30 bis 50 Mol-%, insbesondere 40 bis 50 Mol-%, insbesondere 25 Mol-%, insbesondere 33 Mol-%, insbesondere 50 Mol-% (bezogen auf Gesamtstoffmenge DES), umfasst.

In einer besonders bevorzugten Ausführungsform umfasst das DES des erfindungsgemäßen Agrarmittels eine Mischung aus mindestens zwei Ausgangsstoffen A und B, bevorzugt besteht das DES des erfindungsgemäßen Agrarmittels aus diesen, wobei das erfindungsgemäße DES 1 bis 50 Mol-% des Ausgangsstoffs A, insbesondere 10 bis 50 Mol-%, insbesondere 20 bis 50 Mol-%, insbesondere 30 bis 50 Mol-%, insbesondere 40 bis 50 Mol-%, insbesondere 25 Mol-%, insbesondere 33 Mol-%, insbesondere 50 Mol-% (bezogen auf Gesamtstoffmenge DES) und 99 bis 50 Mol-% des Ausgangsstoffs B, insbesondere 90 bis 50 Mol-%, insbesondere 80 bis 50 Mol-%, insbesondere 70 bis 50 Mol-%, insbesondere 60 bis 50 Mol-%, insbesondere 75 Mol-%, insbesondere 67 Mol-%, insbesondere 50 Mol-% (bezogen auf Gesamtstoffmenge DES), umfasst.

In einer besonders bevorzugten Ausführungsform umfasst das DES des erfindungsgemäßen Agrarmittels eine Mischung aus mindestens zwei Ausgangsstoffen A und B, bevorzugt besteht das DES des erfindungsgemäßen Agrarmittels aus diesen, wobei das erfindungsgemäße DES 99 bis 50 Gew.-% des Ausgangsstoffs A, insbesondere 90 bis 50 Gew.-%, insbesondere 80 bis 50 Gew.-%, insbesondere 70 bis 50 Gew.-%, insbesondere 60 bis 50 Gew.-%, insbesondere 75 Gew.-%, insbesondere 67 Gew.-%, insbesondere 50 Gew.-% (bezogen auf Gesamtgewicht DES) und 1 bis 50 Gew.-% des Ausgangsstoffs B, insbesondere 10 bis 50 Gew.-%, insbesondere 20 bis 50 Gew.-%, insbesondere 30 bis 50 Gew.-%, insbesondere 40 bis 50 Gew.-%, insbesondere 25 Gew.-%, insbesondere 33 Gew.-%, insbesondere 50 Gew.-% (bezogen auf Gesamtgewicht DES), umfasst, insbesondere wenn mindestens einer der beiden Ausgangsstoffe A und B ein Biopolymer, insbesondere Chitosan, Chitin oder Lignin, ist.

In einer besonders bevorzugten Ausführungsform umfasst das DES des erfindungsgemäßen Agrarmittels eine Mischung aus mindestens zwei Ausgangsstoffen A und B, bevorzugt besteht das DES des erfindungsgemäßen Agrarmittels aus diesen, wobei das erfindungsgemäße DES 1 bis 50 Gew.-% des Ausgangsstoffs A, insbesondere 10 bis 50 Gew.-%, insbesondere 20 bis 50 Gew.-%, insbesondere 30 bis 50 Gew.-%, insbesondere 40 bis 50 Gew.-%, insbesondere 25 Gew.-%, insbesondere 33 Gew.-%, insbesondere 50 Gew.-% (bezogen auf Gesamtgewicht DES) und 99 bis 50 Gew.-% des Ausgangsstoffs B, insbesondere 90 bis 50 Gew.-%, insbesondere 80 bis 50 Gew.-%, insbesondere 70 bis 50 Gew.-%, insbesondere 60 bis 50 Gew.-%, insbesondere 75 Gew.-%, insbesondere 67 Gew.-%, insbesondere 50 Gew.-% (bezogen auf Gesamtgewicht DES), umfasst, insbesondere wenn mindestens einer der beiden Ausgangsstoffe A und B ein Biopolymer, insbesondere Chitosan, Chitin oder Lignin, ist.

In einer besonders bevorzugten Ausführungsform umfasst das DES des erfindungsgemäßen Agrarmittels eine Mischung aus mindestens zwei Ausgangsstoffen A und B, bevorzugt besteht das DES des erfindungsgemäßen Agrarmittels aus diesen, wobei die mindestens zwei Ausgangsstoffe in einem Mol-%-Verhältnis (bezogen auf Gesamtstoffmenge des DES) oder einem Gew.-%-Verhältnis (bezogen auf Gesamtgewicht des DES) vorliegen, bei dem das DES verflüssigt vorliegt.

In einer bevorzugten Ausführungsform ist der Ausgangsstoff A des DES des erfindungsgemäßen Agrarmittels ein Halogen- und/oder Ammoniumsalz, insbesondere ein quartäres Ammoniumsalz, ein Metallsalzhydrat, ein Zucker, ein Zuckerderivat, eine Carbonsäure, ein Carbonsäurederivat, Chitosan, ein Chitosanderivat, Chitin, Lignin, eine Aminosäure, ein Amin, Harnstoff oder ein Harnstoff-Derivat.

In einer besonders bevorzugten Ausführungsform ist der Ausgangsstoff A des DES des erfindungsgemäßen Agrarmittels ausgewählt aus der Gruppe bestehend aus einem Cholinsalz, einem Acetylcholinsalz, einem Betainsalz, einem Benzyltrimethyl-Ammoniumsalz, Fructose, Glucose, Maltose, Vanillin, Galactose, Maltit, Oxalsäure, Malonsäue, Äpfelsäure, Weinsäure, Zitronensäure, Lignin, Chitosan, Chitin, Glucosamin Hydrochlorid, *N*-Acetyl-D-Glucosamin, Cellulose, Campher, Raffinose, Arabinose, Rhamnose, Lactose, Xylose, L-Arginin Monohydrochlorid, 4-Aminoantipyrin, 5-Hydroxymethylfurfural, Benzimidazol, Malonamid, Adipinsäure, Harnstoff, Thioharnstoff, 1,1-Dimethylharnstoff und 1,3 -Dimethylharnstoff.

In einer bevorzugten Ausführungsform ist der Ausgangsstoff B des DES des erfindungsgemäßen Agrarmittels ausgewählt aus der Gruppe bestehend aus Zuckern, Zuckerderivaten, Carbonsäuren, Carbonsäurederivaten, Harnstoffen, Harnstoffderivaten, Chitosan, Chitosanderivaten, Chitin, Lignin, Aminosäuren und Aminen.

In einer besonders bevorzugten Ausführungsform ist der Ausgangsstoff B des DES des erfindungsgemäßen Agrarmittels ausgewählt aus der Gruppe bestehend aus Saccharose, Fructose, Glucose, Maltose, Mannitol, Sorbitol, Vanillin, Galactose, Erythrit, Xylit, Maltit, Oxalsäure, Malonsäure, Äpfelsäure, Weinsäure, Zitronensäure, Glycerol, Ethylenglykol, Lignin, Chitosan, Chitin, Glucosamin-Hydrochlorid, *N*-Acetyl-D-Glucosamin, Cellulose, Raffinose, Arabinose, Rhamnose, Lactose, Xylose, L-Arginin-Monohydrochlorid, Guanidin-Hydrochlorid, 4-Aminoantipyrin, 5-Hydroxymethylfurfural, Benzimidazol, Malonamid, Adipinsäure, Harnstoff, Thioharnstoff, 1,1-Dimethylharnstoff und 1,3-Dimethylharnstoff.

In einer besonders bevorzugten Ausführungsform umfasst, insbesondere besteht das Öl des erfindungsgemäßen Agrarmittels aus mindestens einem tierischen oder pflanzlichen Öl, insbesondere aus Estern, insbesondere Glycerinestern, gesättigter Fettsäuren, einfach ungesättigter Fettsäuren, mehrfach ungesättigter Fettsäuren, Trans-Fettsäuren oder Kombinationen davon.

In einer besonders bevorzugten Ausführungsform ist das Öl Rapsöl.

In einer besonders bevorzugten Ausführungsform ist die mindestens eine Säure, insbesondere Fettsäure, der Ester, insbesondere Glycerinester, des Öls des erfindungsgemäßen Agrarmittels ausgewählt aus der Gruppe bestehend aus Pelargonsäure, Caprinsäure, Laurinsäure, Tridecansäure, Myristinsäure, Pentadecansäure, Palmitinsäure, Margarinsäure, Stearinsäure, Nonadecansäure, Arachinsäure, Heneicosansäure, Behensäure, Lignocerinsäure, Myristoleinsäure, Palmitoleinsäure, Margaroleinsäure, Petroselinsäure, Ölsäure, Elaidinsäure, Vaccensäure, Gadoleinsäure, Gondosäure, Cetoleinsäure, Erucasäure, Nervonsäure, Linolsäure, Alpha-Linolensäure, Gamma-Linolensäure, Calendulasäure, Punicinsäure, Alpha-Eleostearinsäure, Beta-Eleostearinsäure, Stearidonsäure, Arachidonsäure, Eicosapentaensäure, Docosadiensäure, Docosatetraensäure, Docosapentaensäure, Docosahexaensäure, Tetracosahexaensäure, Liponsäure, Taririnsäure, Vernolsäure, Rizinolsäure, Pristansäure und eine Kombination davon.

In einer besonders bevorzugten Ausführungsform der vorliegenden Erfindung enthält das erfindungsgemäße Agrarmittel mindestens einen Funktionsstoff, nämlich einen organischen Zusatzstoff, einen Mikronährstoff, einen Pflanzennährstoff oder eine Kombination davon.

In einer bevorzugten Ausführungsform enthält das erfindungsgemäße Agrarmittel mindestens einen organischen Zusatzstoff, insbesondere eine Kohlenstoff-haltige Verbindung, insbesondere einen bioaktiven Stoff, insbesondere ein Vitamin und/oder eine Aminosäure.

In einer besonders bevorzugten Ausführungsform enthält das erfindungsgemäße Agrarmittel mindestens einen organischen Zusatzstoff umfassend, insbesondere bestehend aus, ein Vitamin und/oder eine Aminosäure, wobei das Vitamin aus der Gruppe ausgewählt ist bestehend aus Vitamin A, Vitamin D₂, Vitamin D₃, Vitamin B₁, Vitamin B₂, Vitamin B₁₂, Vitamin C, Vitamin K3 und deren Analoga.

In einer besonders bevorzugten Ausführungsform enthält das erfindungsgemäße Agrarmittel mindestens einen organischen Zusatzstoff umfassend, insbesondere bestehend aus, ein Vitamin und/oder eine Aminosäure, wobei die Aminosäure aus der Gruppe ausgewählt ist bestehend aus Methionin, Lysin, Arginin, Histidin, Valin, Isoleucin, Leucin, Cystin, Tyrosin, Threonin, Tryptophan und deren Analoga.

In einer besonders bevorzugten Ausführungsform enthält das erfindungsgemäße Agrarmittel mindestens einen organischen Zusatzstoff umfassend, insbesondere bestehend aus, ein Kohlenstoff-haltiges Füllmittel.

In einer besonders bevorzugten Ausführungsform ist das erfindungsgemäße Agrarmittel ein Futtermittel, wobei das Futtermittel mindestens einen Mikronährstoff, insbesondere ein Mengen- oder Spurenelement, insbesondere ein Metallsalz oder ein Metalloxid enthält.

In einer besonders bevorzugten Ausführungsform weist das erfindungsgemäße Futtermittel 0,0000001 bis 15 Gew.-% eines Mikronährstoffs, insbesondere 0,00000015 bis 10 Gew.-%, insbesondere 0,000001 bis 8 Gew.-%, insbesondere 0,000001 bis 6 Gew.-% (bezogen auf Gesamtgewicht erfindungsgemäßes Futtermittel) auf.

In einer besonders bevorzugten Ausführungsform weist das erfindungsgemäße Futtermittel 0,000002 bis 2 Gew.-% eines organischen Zusatzstoffs, insbesondere 0,00002 bis 1 Gew.-%, insbesondere 0,0002 bis 0,6 Gew.-% insbesondere 0,001 bis 0,4 Gew.-% (bezogen auf Gesamtgewicht erfindungsgemäßes Futtermittel) auf.

In einer besonders bevorzugten Ausführungsform weist das erfindungsgemäße Futtermittel 0,0000001 bis 15 Gew.-% eines Mikronährstoffs, insbesondere 0,00000015 bis 10 Gew.-%, insbesondere 0,000001 bis 8 Gew.-%, insbesondere 0,000001 bis 6 Gew.-% (bezogen auf Gesamtgewicht erfindungsgemäßes Futtermittel) und 0,000002 bis 2 Gew.-% eines organischen Zusatzstoffs, insbesondere 0,00002 bis 1 Gew.-%, insbesondere 0,0002 bis 0,6 Gew.-%, insbesondere 0,001 bis 0,4 Gew.-% (bezogen auf Gesamtgewicht erfindungsgemäßes Futtermittel) auf.

In einer besonders bevorzugten Ausführungsform weist das erfindungsgemäße Futtermittel 0,0000001 bis 15 Gew.-% eines Mikronährstoffs, insbesondere 0,00000015 bis 10 Gew.-%, insbesondere 0,000001 bis 8 Gew.-%, insbesondere 0,000001 bis 6 Gew.-% (bezogen auf Gesamtgewicht erfindungsgemäßes Futtermittel) oder 0,000002 bis 2 Gew.-% eines organischen Zusatzstoffs, insbesondere 0,00002 bis 1 Gew.-%, insbesondere 0,0002 bis 0,6 Gew.-%, insbesondere 0,001 bis 0,4 Gew.-% (bezogen auf Gesamtgewicht erfindungsgemäßes Futtermittel) auf.

In einer besonders bevorzugten Ausführungsform weist das erfindungsgemäße Futtermittel, insbesondere besteht das erfindungsgemäße Futtermittel aus, 10 bis 99 Gew.-% mindestens einer porösen sorptionsfähigen organischen Komponente auf, insbesondere 10 bis 80 Gew.-%, insbesondere 10 bis 70 Gew.-%, insbesondere 12 bis 63 Gew.-%, insbesondere 13 bis 62 Gew.-%, insbesondere 14 bis 63, insbesondere 22 bis 63 Gew.-%, insbesondere 25 bis 63 Gew.-%, insbesondere 10 bis 50 Gew.-%, insbesondere 10 bis 40 Gew.-%, insbesondere 10 bis 30 Gew.-%, insbesondere 40 bis 70 Gew.-% (Gewicht poröse sorptionsfähige organische Komponente bezogen auf Gesamtgewicht erfindungsgemäßes Futtermittel), 1 bis 90 Gew.-% mindestens eines von der porösen sorptionsfähigen organischen Komponente sorbierten flüssigen Mediums, insbesondere ausgewählt aus der Gruppe bestehend aus einem verflüssigten stark eutektischen Lösungsmittel (DES), Wasser und Öl, insbesondere 90 bis 20 Gew.-%, insbesondere 90 bis 30 Gew.-%, insbesondere 88 bis 37 Gew.-%, insbesondere 87 bis 38 Gew.-%, insbesondere 86 bis 37 Gew.-%, insbesondere 78 bis 37 Gew.-%, insbesondere 75 bis 37 Gew.-%, insbesondere 90 bis 50 Gew.-%, insbesondere 90 bis 60 Gew.-%, insbesondere 90 bis 70 Gew.-%, insbesondere 60 bis 30 Gew.-% (Gewicht flüssiges Medium bezogen auf Gesamtgewicht erfindungsgemäßes Futtermittel) und optional 0,0000001 bis 15 Gew.-% eines Mikronährstoffs, insbesondere 0,00000015 bis 10 Gew.-%, insbesondere 0,000001 bis 8 Gew.-%, insbesondere 0,000001 bis 6 Gew.-% (Gewicht Mikronährstoff bezogen auf Gesamtgewicht erfindungsgemäßes Futtermittel).

In einer besonders bevorzugten Ausführungsform weist das erfindungsgemäße Futtermittel, insbesondere besteht das erfindungsgemäße Futtermittel aus, 10 bis 99 Gew.-% mindestens einer porösen sorptionsfähigen organischen Komponente auf, insbesondere 10 bis 80 Gew.-%, insbesondere 10 bis 70 Gew.-%, insbesondere 12 bis 63 Gew.-%, insbesondere 13 bis 62 Gew.-%, insbesondere 14 bis 63, insbesondere 22 bis 63 Gew.-%, insbesondere 25 bis 63 Gew.-%, insbesondere 10 bis 50 Gew.-%, insbesondere 10 bis 40 Gew.-%, insbesondere 10 bis 30 Gew.-%, insbesondere 40 bis 70 Gew.-% (Gewicht poröse sorptionsfähige organische Komponente bezogen auf Gesamtgewicht erfindungsgemäßes Futtermittel), 1 bis 90 Gew.-% mindestens eines von der porösen sorptionsfähigen organischen Komponente sorbierten flüssigen Mediums, insbesondere ausgewählt aus der Gruppe bestehend aus einem verflüssigten stark eutektischen Lösungsmittel (DES), Wasser und Öl, insbesondere 90 bis 20 Gew.-%, insbesondere 90 bis 30 Gew.-%, insbesondere 88 bis 37 Gew.-%, insbesondere 87 bis 38 Gew.-%, insbesondere 86 bis 37 Gew.-%, insbesondere 78 bis 37 Gew.-%, insbesondere 75 bis 37 Gew.-%, insbesondere 90 bis 50 Gew.-%, insbesondere 90 bis 60 Gew.-%, insbesondere 90 bis 70 Gew.-%, insbesondere 60 bis 30 Gew.-% (Gewicht flüssiges Medium bezogen auf Gesamtgewicht erfindungsgemäßes Futtermittel) und optional 0,000002 bis 2 Gew.-% eines organischen Zusatzstoffs, insbesondere 0,00002 bis 1 Gew.-%, insbesondere 0,0002 bis 0,6 Gew.-%, insbesondere 0,001 bis 0,4 Gew.-% (Gewicht Zusatzstoff bezogen auf Gesamtgewicht erfindungsgemäßes Futtermittel).

In einer besonders bevorzugten Ausführungsform weist das erfindungsgemäße Futtermittel, insbesondere besteht das erfindungsgemäße Futtermittel aus, 10 bis 99 Gew.-% mindestens einer porösen sorptionsfähigen organischen Komponente auf, insbesondere 10 bis 80 Gew.-%, insbesondere 10 bis 70 Gew.-%, insbesondere 12 bis 63 Gew.-%, insbesondere 13 bis 62 Gew.-%, insbesondere 14 bis 63, insbesondere 22 bis 63 Gew.-%, insbesondere 25 bis 63 Gew.-%, insbesondere 10 bis 50 Gew.-%, insbesondere 10 bis 40 Gew.-%, insbesondere 10 bis 30 Gew.-%, insbesondere 40 bis 70 Gew.-% (Gewicht poröse sorptionsfähige organische Komponente bezogen auf Gesamtgewicht erfindungsgemäßes Futtermittel), 1 bis 90 Gew.-% mindestens eines von der porösen sorptionsfähigen organischen Komponente sorbierten flüssigen Mediums, insbesondere ausgewählt aus der Gruppe bestehend aus einem verflüssigten stark eutektischen Lösungsmittel (DES), Wasser und Öl, insbesondere 90 bis 20 Gew.-%, insbesondere 90 bis 30 Gew.-%, insbesondere 88 bis 37 Gew.-%, insbesondere 87 bis 38 Gew.-%, insbesondere 86 bis 37 Gew.-%, insbesondere 78 bis 37 Gew.-%, insbesondere 75 bis 37 Gew.-%, insbesondere 90 bis 50 Gew.-%, insbesondere 90 bis 60 Gew.-%, insbesondere 90 bis 70 Gew.-%, insbesondere 60 bis 30 Gew.-% (Gewicht flüssiges Medium bezogen auf Gesamtgewicht erfindungsgemäßes Futtermittel), optional 0,0000001 bis 15 Gew.-%Gew.-% eines Mikronährstoffs, insbesondere 0,00000015 bis 10 Gew.-%, insbesondere 0,000001 bis 8 Gew.-%, insbesondere 0,000001 bis 6 Gew.-% (Gewicht Mikronährstoff bezogen auf Gesamtgewicht erfindungsgemäßes Futtermittel) und optional 0,000002 bis 2 Gew.-% eines organischen Zusatzstoffs, insbesondere 0,00002 bis 1 Gew.-%, insbesondere 0,0002 bis 0,6 Gew.-%, insbesondere 0,001 bis 0,4 Gew.-% (Gewicht Zusatzstoff bezogen auf Gesamtgewicht erfindungsgemäßes Futtermittel).

In einer besonders bevorzugten Ausführungsform weist das erfindungsgemäße Futtermittel, insbesondere besteht das erfindungsgemäße Futtermittel aus, 10 bis 99 Gew.-% mindestens einer porösen sorptionsfähigen organischen Komponente auf, insbesondere 10 bis 80 Gew.-%, insbesondere 10 bis 70 Gew.-%, insbesondere 12 bis 63 Gew.-%, insbesondere 13 bis 62 Gew.-%, insbesondere 14 bis 63, insbesondere 22 bis 63 Gew.-%, insbesondere 25 bis 63 Gew.-%, insbesondere 10 bis 50 Gew.-%, insbesondere 10 bis 40 Gew.-%, insbesondere 10 bis 30 Gew.-%, insbesondere 40 bis 70 Gew.-% (Gewicht poröse sorptionsfähige organische Komponente bezogen auf Gesamtgewicht erfindungsgemäßes Futtermittel), 1 bis 90 Gew.-% mindestens eines von der porösen sorptionsfähigen organischen Komponente sorbierten flüssigen Mediums, insbesondere ausgewählt aus der Gruppe bestehend aus einem verflüssigten stark eutektischen Lösungsmittel (DES), Wasser und Öl, insbesondere 90 bis 20 Gew.-%, insbesondere 90 bis 30 Gew.-%, insbesondere 88 bis 37 Gew.-%, insbesondere 87 bis 38 Gew.-%, insbesondere 86 bis 37 Gew.-%, insbesondere 78 bis 37 Gew.-%, insbesondere 75 bis 37 Gew.-%, insbesondere 90 bis 50 Gew.-%, insbesondere 90 bis 60 Gew.-%, insbesondere 90 bis 70 Gew.-%, insbesondere 60 bis 30 Gew.-% (Gewicht flüssiges Medium bezogen auf Gesamtgewicht erfindungsgemäßes Futtermittel), optional 0,0000001 bis 15 Gew.-%Gew.-% eines Mikronährstoffs, insbesondere 0,00000015 bis 10 Gew.-%, insbesondere 0,000001 bis 8 Gew.-%, insbesondere 0,000001 bis 6 Gew.-% (Gewicht Mikronährstoff bezogen auf Gesamtgewicht erfindungsgemäßes Futtermittel) oder optional 0,000002 bis 2 Gew.-% eines organischen Zusatzstoffs, insbesondere 0,00002 bis 1 Gew.-%, insbesondere 0,0002 bis 0,6 Gew.-%, insbesondere 0,001 bis 0,4 Gew.-% (Gewicht Zusatzstoff bezogen auf Gesamtgewicht erfindungsgemäßes Futtermittel).

In einer besonders bevorzugten Ausführungsform ist das erfindungsgemäße Agrarmittel ein Düngemittel, wobei das Düngemittel mindestens einen Pflanzennährstoff, insbesondere ein Phosphor-, Stickstoff-, Magnesium-, Schwefel-, Calcium-, Natrium-, Chlor-, Bor-, Fluor-, Silicium-, Vanadium-, Chrom-, Mangan-, Eisen-, Cobalt-, Kupfer-, Zink-, Arsen-, Selen-, Rubidium-, Molybdän-, Zinn-, Iod- oder Kalium-haltiges Salz oder Oxid, insbesondere ein Metallsalz oder ein Metalloxid enthält.

In einer besonders bevorzugten Ausführungsform weist das erfindungsgemäße Düngemittel 0,2 bis 43 Gew.-% eines Pflanzennährstoffs, insbesondere 1 bis 35 Gew.-%, insbesondere 3 bis 25 Gew.-% 5 bis 20 Gew.-% (bezogen auf Gesamtgewicht erfindungsgemäßes Düngemittel) auf.

In einer besonders bevorzugten Ausführungsform weist das erfindungsgemäße Düngemittel 0,00005 bis 20 Gew.-% eines organischen Zusatzstoffs, insbesondere 0,0005 bis 18 Gew.-%, insbesondere 0,005 bis 16 Gew.-%, insbesondere 0,01 bis 15 Gew.-% (bezogen auf Gesamtgewicht erfindungsgemäßes Düngemittel) auf.

In einer besonders bevorzugten Ausführungsform weist das erfindungsgemäße Düngemittel 0,2 bis- 43 Gew.-% eines Pflanzennährstoffs, insbesondere 1 bis 35 Gew.-%, insbesondere 3 bis 25 Gew.-%, insbesondere 5 bis 20 Gew.-% (bezogen auf Gesamtgewicht erfindungsgemäßes Düngemittel) und 0,00005 bis 20 Gew.-% eines organischen Zusatzstoffs, insbesondere 0,0005 bis 18 Gew.-%, insbesondere 0,005 bis 16 Gew.-%, insbesondere 0,01 bis 15 Gew.-% (bezogen auf Gesamtgewicht erfindungsgemäßes Düngemittel) auf.

In einer besonders bevorzugten Ausführungsform weist das erfindungsgemäße Düngemittel 0,2 bis 43 Gew.-% eines Pflanzennährstoffs, insbesondere 1 bis 35 Gew.-%, insbesondere 3 bis 25 Gew.-%, insbesondere 5 bis 20 Gew.-% (bezogen auf Gesamtgewicht erfindungsgemäßes Düngemittel) oder 0,00005 bis 20 Gew.-% eines organischen Zusatzstoffs, insbesondere 0,0005 bis 18 Gew.-%, insbesondere 0,005 bis 16 Gew.-%, insbesondere 0,01 bis 15 Gew.-% (bezogen auf Gesamtgewicht erfindungsgemäßes Düngemittel) auf.

In einer besonders bevorzugten Ausführungsform weist das erfindungsgemäße Düngemittel, insbesondere besteht das erfindungsgemäße Düngemittel aus, 10 bis 99 Gew.-% mindestens einer porösen sorptionsfähigen organischen Komponente auf, insbesondere 10 bis 80 Gew.-%, insbesondere 10 bis 70 Gew.-%, insbesondere 12 bis 63 Gew.-%, insbesondere 13 bis 62 Gew.-%, insbesondere 14 bis 63, insbesondere 22 bis 63 Gew.-%, insbesondere 25 bis 63 Gew.-%, insbesondere 10 bis 50 Gew.-%, insbesondere 10 bis 40 Gew.-%, insbesondere 10 bis 30 Gew.-%, insbesondere 40 bis 70 Gew.-% (Gewicht poröse sorptionsfähige organische Komponente bezogen auf Gesamtgewicht erfindungsgemäßes Düngemittel), 1 bis 90 Gew.-% mindestens eines von der porösen sorptionsfähigen organischen Komponente sorbierten flüssigen Mediums, insbesondere ausgewählt aus der Gruppe bestehend aus einem verflüssigten stark eutektischen Lösungsmittel (DES), Wasser und Öl, insbesondere 90 bis 20 Gew.-%, insbesondere 90 bis 30 Gew.-%, insbesondere 88 bis 37 Gew.-%, insbesondere 87 bis 38 Gew.-%, insbesondere 86 bis 37 Gew.-%, insbesondere 78 bis 37 Gew.-%, insbesondere 75 bis 37 Gew.-%, insbesondere 90 bis 50 Gew.-%, insbesondere 90 bis 60 Gew.-%, insbesondere 90 bis 70 Gew.-%, insbesondere 60 bis 30 Gew.-% (Gewicht flüssiges Medium bezogen auf Gesamtgewicht erfindungsgemäßes Düngemittel) und optional 0,2 bis- 43 Gew.-% eines Pflanzennährstoffs, insbesondere 1 bis 35 Gew.-%, insbesondere 3 bis 25 Gew.-%, insbesondere 5 bis 20 Gew.-% (Gewicht Pflanzennährstoff bezogen auf Gesamtgewicht erfindungsgemäßes Düngemittel).

In einer besonders bevorzugten Ausführungsform weist das erfindungsgemäße Düngemittel, insbesondere besteht das erfindungsgemäße Düngemittel aus, 10 bis 99 Gew.-% mindestens einer porösen sorptionsfähigen organischen Komponente auf, insbesondere 10 bis 80 Gew.-%, insbesondere 10 bis 70 Gew.-%, insbesondere 12 bis 63 Gew.-%, insbesondere 13 bis 62 Gew.-%, insbesondere 14 bis 63, insbesondere 22 bis 63 Gew.-%, insbesondere 25 bis 63 Gew.-%, insbesondere 10 bis 50 Gew.-%, insbesondere 10 bis 40 Gew.-%, insbesondere 10 bis 30 Gew.-%, insbesondere 40 bis 70 Gew.-% (Gewicht poröse sorptionsfähige organische Komponente bezogen auf Gesamtgewicht erfindungsgemäßes Düngemittel), 1 bis 90 Gew.-% mindestens eines von der porösen sorptionsfähigen organischen Komponente sorbierten flüssigen Mediums, insbesondere ausgewählt aus der Gruppe bestehend aus einem verflüssigten stark eutektischen Lösungsmittel (DES), Wasser und Öl, insbesondere 90 bis 20 Gew.-%, insbesondere 90 bis 30 Gew.-%, insbesondere 88 bis 37 Gew.-%, insbesondere 87 bis 38 Gew.-%, insbesondere 86 bis 37 Gew.-%, insbesondere 78 bis 37 Gew.-%, insbesondere 75 bis 37 Gew.-%, insbesondere 90 bis 50 Gew.-%, insbesondere 90 bis 60 Gew.-%, insbesondere 90 bis 70 Gew.-%, insbesondere 60 bis 30 Gew.-% (Gewicht flüssiges Medium bezogen auf Gesamtgewicht erfindungsgemäßes Düngemittel) und optional 0,00005 bis 20 Gew.-% eines organischen Zusatzstoffs, insbesondere 0,0005 bis 18 Gew.-%, insbesondere 0,005 bis 16 Gew.-%, insbesondere 0,01 bis 15 Gew.-% (Gewicht Zusatzstoff bezogen auf Gesamtgewicht erfindungsgemäßes Düngemittel).

In einer besonders bevorzugten Ausführungsform weist das erfindungsgemäße Düngemittel, insbesondere besteht das erfindungsgemäße Düngemittel aus, 10 bis 99 Gew.-% mindestens einer porösen sorptionsfähigen organischen Komponente auf, insbesondere 10 bis 80 Gew.-%, insbesondere 10 bis 70 Gew.-%, insbesondere 12 bis 63 Gew.-%, insbesondere 13 bis 62 Gew.-%, insbesondere 14 bis 63, insbesondere 22 bis 63 Gew.-%, insbesondere 25 bis 63 Gew.-%, insbesondere 10 bis 50 Gew.-%, insbesondere 10 bis 40 Gew.-%, insbesondere 10 bis 30 Gew.-%, insbesondere 40 bis 70 Gew.-% (Gewicht poröse sorptionsfähige organische Komponente bezogen auf Gesamtgewicht erfindungsgemäßes Düngemittel), 1 bis 90 Gew.-% mindestens eines von der porösen sorptionsfähigen organischen Komponente sorbierten flüssigen Mediums, insbesondere ausgewählt aus der Gruppe bestehend aus einem verflüssigten stark eutektischen Lösungsmittel (DES), Wasser und Öl, insbesondere 90 bis 20 Gew.-%, insbesondere 90 bis 30 Gew.-%, insbesondere 88 bis 37 Gew.-%, insbesondere 87 bis 38 Gew.-%, insbesondere 86 bis 37 Gew.-%, insbesondere 78 bis 37 Gew.-%, insbesondere 75 bis 37 Gew.-%, insbesondere 90 bis 50 Gew.-%, insbesondere 90 bis 60 Gew.-%, insbesondere 90 bis 70 Gew.-%, insbesondere 60 bis 30 Gew.-% (Gewicht flüssiges Medium bezogen auf Gesamtgewicht erfindungsgemäßes Düngemittel), optional 0,2 bis- 43 Gew.-% eines Pflanzennährstoffs, insbesondere 1 bis 35 Gew.-%, insbesondere 3 bis 25 Gew.-%, insbesondere 5 bis 20Gew.-% (Gewicht Pflanzennährstoff bezogen auf Gesamtgewicht erfindungsgemäßes Düngemittel) und optional 0,00005 bis 20 Gew.-% eines organischen Zusatzstoffs, insbesondere 0,0005 bis 18 Gew.-%, insbesondere 0,005 bis 16 Gew.-%, insbesondere 0,01 bis 15 Gew.-% (Gewicht Zusatzstoff bezogen auf Gesamtgewicht erfindungsgemäßes Düngemittel).

In einer besonders bevorzugten Ausführungsform weist das erfindungsgemäße Düngemittel, insbesondere besteht das erfindungsgemäße Düngemittel aus, 10 bis 99 Gew.-% mindestens einer porösen sorptionsfähigen organischen Komponente auf, insbesondere 10 bis 80 Gew.-%, insbesondere 10 bis 70 Gew.-%, insbesondere 12 bis 63 Gew.-%, insbesondere 13 bis 62 Gew.-%, insbesondere 14 bis 63, insbesondere 22 bis 63 Gew.-%, insbesondere 25 bis 63 Gew.-%, insbesondere 10 bis 50 Gew.-%, insbesondere 10 bis 40 Gew.-%, insbesondere 10 bis 30 Gew.- %, insbesondere 40 bis 70 Gew.-% (Gewicht poröse sorptionsfähige organische Komponente bezogen auf Gesamtgewicht erfindungsgemäßes Düngemittel), 1 bis 90 Gew.-% mindestens eines von der porösen sorptionsfähigen organischen Komponente sorbierten flüssigen Mediums, insbesondere ausgewählt aus der Gruppe bestehend aus einem verflüssigten stark eutektischen Lösungsmittel (DES), Wasser und Öl, insbesondere 90 bis 20 Gew.-%, insbesondere 90 bis 30 Gew.-%, insbesondere 88 bis 37 Gew.-%, insbesondere 87 bis 38 Gew.-%, insbesondere 86 bis 37 Gew.-%, insbesondere 78 bis 37 Gew.-%, insbesondere 75 bis 37 Gew.-%, insbesondere 90 bis 50 Gew.-%, insbesondere 90 bis 60 Gew.-%, insbesondere 90 bis 70 Gew.-%, insbesondere 60 bis 30 Gew.-% (Gewicht flüssiges Medium bezogen auf Gesamtgewicht erfindungsgemäßes Düngemittel), optional 0,2 bis- 43 Gew.-% eines Pflanzennährstoffs, insbesondere 1 bis 35 Gew.-%, insbesondere 3 bis 25 Gew.-%, insbesondere 5 bis 20 Gew.-% (Gewicht Pflanzennährstoff bezogen auf Gesamtgewicht erfindungsgemäßes Düngemittel) oder optional 0,00005 bis 20 Gew.-% eines organischen Zusatzstoffs, insbesondere 0,0005 bis 18 Gew.-%, insbesondere 0,005 bis 16 Gew.-%, insbesondere 0,01 bis 15 Gew.-% (bezogen auf Gesamtgewicht erfindungsgemäßes Düngemittel).

In einer bevorzugten Ausführungsform weist das flüssige Medium, insbesondere DES, des erfindungsgemäßen Agrarmittels einen Stickstoffanteil von 0 bis 45 Gew.-% auf.

In einer bevorzugten Ausführungsform weist das erfindungsgemäße Agrarmittel einen Stickstoffgehalt von 1 bis 25 Gew.-%, einen Phosphorgehalt von 0 bis 30 Gew.-%, einen Kaliumgehalt von 0 bis 25 Gew.-% und/oder einen Metallkomponentengehalt von 0 bis 25 Gew.-% auf.

In einer bevorzugten Ausführungsform weist das erfindungsgemäße Agrarmittel einen Stickstoffgehalt von 1 bis 25 Gew.-%, einen Phosphorgehalt von 0 bis 30 Gew-.%, einen Kaliumgehalt von 0 bis 25 Gew.-% und/oder einen Metallkomponentengehalt von 0 bis 25 Gew.-% auf, wobei die Metallkomponente aus mindestens einem Metallsalz, insbesondere ausgewählt aus Phosphor-, Stickstoff-, Magnesium-, Schwefel-, Calcium-, Natrium-, Chlor-, Bor-, Fluor-, Silicium-, Vanadium-, Chrom-, Mangan-, Eisen-, Cobalt-, Kupfer-, Zink-, Arsen-, Selen-, Rubidium-, Molybdän-, Zinn-, Iod- und Kalium-haltigen Metallsalzen und/oder mindestens einem Metalloxid, insbesondere ausgewählt aus Magnesium-, Calcium-, Natrium-, Silicium-, Vanadium-, Chrom-, Mangan-, Eisen-, Cobalt-, Kupfer-, Zink-, Arsen-, Selen-, Rubidium-, Molybdän-, Zinn- und Kaliumoxiden, besteht.

In einer besonders bevorzugten Ausführungsform der vorliegenden Erfindung betrifft diese ein Agrarmittel bestehend aus einer porösen sorptionsfähigen organischen Komponente und einem von der porösen sorptionsfähigen organischen Komponente sorbierten flüssigen Medium, insbesondere ausgewählt aus der Gruppe bestehend aus einem verflüssigten stark eutektischen Lösungsmittel (DES), Wasser und Öl, insbesondere einem verflüssigten stark eutektischen Lösungsmittel (DES).

In einer besonders bevorzugten Ausführungsform der vorliegenden Erfindung betrifft diese ein Agrarmittel bestehend aus einer porösen sorptionsfähigen organischen Komponente und einem von der porösen sorptionsfähigen organischen Komponente sorbierten flüssigen Medium, insbesondere ausgewählt aus der Gruppe bestehend aus einem verflüssigten stark eutektischen Lösungsmittel (DES), Wasser und Öl, insbesondere einem verflüssigten stark eutektischen Lösungsmittel (DES), und mindestens einem Metallsalz, Metalloxid und/oder Vitamin, insbesondere mindestens einem Metallsalz oder Metalloxid.

Erfindungsgemäß betrifft die vorliegende Erfindung auch ein Verfahren zur Herstellung eines Agrarmittels, insbesondere eines erfindungsgemäßen Agrarmittels, umfassend folgende Verfahrensschritte:
a) Bereitstellen mindestens einer porösen sorptionsfähigen organischen Komponente und mindestens eines stark eutektischen Lösungsmittels (DES), insbesondere eines verflüssigten stark eutektischen Lösungsmittels (DES), Wasser und Öl,
b) Mischen der in Verfahrensschritt a) bereitgestellten mindestens einen porösen sorptionsfähigen organischen Komponente mit dem mindestens einen stark eutektischen Lösungsmittel (DES), insbesondere einen verflüssigten stark eutektischen Lösungsmittel (DES), und
c) Erhalten des Agrarmittels.

In einer besonders bevorzugten Ausführungsform der vorliegenden Erfindung stellt das in Verfahrensschritt b) vorgesehene Mischen der in Verfahrensschritt a) bereitgestellten mindestens einen porösen sorptionsfähigen organischen Komponente mit dem mindestens einen Medium, insbesondere flüssigen Medium ein Imprägnieren der porösen sorptionsfähigen organischen Komponente mit dem Medium, insbesondere dem flüssigen Medium, dar.

In einer bevorzugten Ausführungsform wird in Verfahrensschritt a) zusätzlich mindestens ein Funktionsstoff ausgewählt aus der Gruppe bestehend aus einem Mikronährstoff, einem Pflanzennährstoff und einem organischen Zusatzstoff, insbesondere einem Metallsalz oder Metalloxid, bereitgestellt, in Verfahrensschritt b) mit der in Verfahrensschritt a) bereitgestellten mindestens einen porösen sorptionsfähigen organischen Komponente und dem mindestens einen stark eutektischen Lösungsmittel (DES), insbesondere einen verflüssigten stark eutektischen Lösungsmittel (DES), gemischt und in Verfahrensschritt c) das Agrarmittel erhalten.

In einer besonders bevorzugten Ausführungsform der vorliegenden Erfindung kann vorgesehen sein, dass der mindestens eine Funktionsstoff, insbesondere mindestens ein Metallsalz oder Metalloxid, in mit dem mindestens einen Medium, insbesondere flüssigen Medium, vermischter Form, insbesondere in dem mindestens einen Medium, insbesondere flüssigen Medium, insbesondere dem verflüssigten stark eutektischen Lösungsmittel (DES), gelöster Form bereitgestellt wird. In besonders bevorzugter Ausführungsform kann vorgesehen sein, den mit dem flüssigen Medium, insbesondere verflüssigten stark eutektischen Lösungsmittel (DES) gemischten, insbesondere in gelöster Form darin vorliegenden Funktionsstoff, insbesondere das mindestens eine Metallsalz oder Metalloxid, mit der mindestens einen organischen porösen sorptionsfähigen Komponente zu mischen, insbesondere zu imprägnieren.

In einer besonders bevorzugten Ausführungsform umfasst das in Verfahrensschritt c) erhaltene erfindungsgemäße Agrarmittel, insbesondere besteht das in Verfahrensschritt c) erhaltene erfindungsgemäße Agrarmittel aus, 1 bis 99 Gew.-% mindestens einer porösen sorptionsfähigen organischen Komponente, insbesondere 5 bis 90 Gew.-%, insbesondere 10 bis 99 Gew.-%, insbesondere 7 bis 80 Gew.-%, insbesondere 10 bis 70 Gew.-%, insbesondere 12 bis 63 Gew.-%, insbesondere 13 bis 62 Gew.-%, insbesondere 14 bis 63, insbesondere 22 bis 63 Gew.-%, insbesondere 25 bis 63 Gew.-%, insbesondere 10 bis 50 Gew.-%, insbesondere 10 bis 40 Gew.-%, insbesondere 10 bis 30 Gew.-%, insbesondere 40 bis 70 Gew.-% (Gewicht poröse sorptionsfähige organische Komponente bezogen auf Gesamtgewicht des in Verfahrensschritt c) erhaltenen erfindungsgemäßen Agrarmittels), 99 bis 1 Gew.-% mindestens eines von der porösen sorptionsfähigen organischen Komponente sorbierten flüssigen Mediums, insbesondere ausgewählt aus der Gruppe bestehend aus einem verflüssigten stark eutektischen Lösungsmittel (DES), Wasser und Öl, insbesondere 95 bis 10 Gew.-%, insbesondere 90 bis 1 Gew.-%, insbesondere 93 bis 20 Gew.-%, insbesondere 90 bis 30 Gew.-%, insbesondere 88 bis 37 Gew.-%, insbesondere 87 bis 38 Gew.-%, insbesondere 86 bis 37 Gew.-%, insbesondere 78 bis 37 Gew.-%, insbesondere 75 bis 37 Gew.-%, insbesondere 90 bis 50 Gew.-%, insbesondere 90 bis 60 Gew.-%, insbesondere 90 bis 70 Gew.-%, insbesondere 60 bis 30 Gew.-% (Gewicht flüssiges Medium bezogen auf Gesamtgewicht des in Verfahrensschritt c) erhaltenen erfindungsgemäßen Agrarmittels) und optional 0,0000001 bis 43 Gew.-% eines Funktionsstoffs, insbesondere 0,000001 bis 35 Gew.-%, insbesondere 0,00001 bis 30 Gew.-%, insbesondere 0,00001 bis 25 Gew.-%, insbesondere 0,0001 bis 20 Gew.-%, insbesondere 0,001 bis 20 Gew.-% (Gewicht des Funktionsstoffes bezogen auf Gesamtgewicht des in Verfahrensschritt c) erhaltenen erfindungsgemäßen Agrarmittels).

In einer besonders bevorzugten Ausführungsform wird die in Verfahrensschritt a) bereitgestellte mindestens eine poröse sorptionsfähige organische Komponente, insbesondere Hanfschäben, in einem Verfahrensschritt a1) zerkleinert, insbesondere durch Mahlen.

Das in einer besonders bevorzugten Ausführungsform in Verfahrensschritt a1) durchgeführte Zerkleinern, wird in einer Vorrichtung durchgeführt, durch die die poröse sorptionsfähige organische Komponente zerkleinert wird, das heißt gemahlen und/oder zerschnitten wird, insbesondere ist die Vorrichtung eine Mühle, insbesondere eine Kugelmühle, insbesondere eine Schneidmühle, insbesondere eine Küchenmaschine mit Zerkleinerungsfunktion.

In einer besonders bevorzugten Ausführungsform wird die mindestens eine poröse sorptionsfähige organische Komponente, insbesondere Hanfschäben, in einem vor Verfahrensschritt a) durchgeführten Verfahrensschritt a1) für 0,5 bis 10 Minuten zerkleinert, insbesondere durch Mahlen, insbesondere 0,5 bis 8 Minuten, insbesondere 0,5 bis 6 Minuten, insbesondere 0,5 bis 4 Minuten, insbesondere 0,5 bis 2 Minuten, insbesondere 0,5 bis 1 Minute.

In einer besonders bevorzugten Ausführungsform wird die mindestens eine poröse sorptionsfähige organische Komponente, insbesondere Hanfschäben, in einem vor Verfahrensschritt a) durchgeführten Verfahrensschritt a1) für 0,5 bis 10 Minuten zerkleinert, insbesondere durch Mahlen, insbesondere 0,5 bis 8 Minuten, insbesondere 0,5 bis 6 Minuten, insbesondere 0,5 bis 4 Minuten, insbesondere 0,5 bis 2 Minuten, insbesondere 0,5 bis 1 Minute und insbesondere bei 10 bis 50 Umdrehungen pro Sekunde (im Folgenden auch als /s abgekürzt), insbesondere bei 20 bis 40 Umdrehungen pro Sekunde, insbesondere 30 Umdrehungen pro Sekunde (bezogen auf die Umdrehungen der Trommel einer Kugelmühle pro Sekunde).

In einer besonders bevorzugten Ausführungsform wird das Volumen der mindestens einen porösen sorptionsfähigen organischen Komponente, insbesondere Hanfschäben, in einem vor Verfahrensschritt a) durchgeführten Verfahrensschritt a1) auf ein Volumen von 5 bis 95 Vol.-%, insbesondere 10 bis 90 Vol.-%, insbesondere 20 bis 80 Vol.-%, insbesondere 30 bis 70 Vol.-%, insbesondere 40 bis 60 Vol.-%, insbesondere 50 Vol.-% (bezogen auf das Ausgangsvolumen der porösen sorptionsfähigen organischen Komponente) verringert, insbesondere durch Mahlen.

In einer besonders bevorzugten Ausführungsform werden die porösen sorptionsfähigen organischen Komponenten, insbesondere Hanfschäben, in einem vor Verfahrensschritt a) durchgeführten Verfahrensschritt a1) auf eine homogene Größe von 0,1 mm bis 10 cm, insbesondere 0,2 mm bis 5 cm, insbesondere 0,5 mm bis 1 mm, insbesondere 1 mm bis 7 mm, insbesondere 3 mm bis 5 mm, insbesondere 1 cm, insbesondere 5 mm, insbesondere auf eine homogene Größe von weniger als 5 cm, insbesondere weniger als 3cm, insbesondere weniger als 2 cm, insbesondere weniger als 1 cm, zerkleinert, insbesondere durch Mahlen.

In einer besonders bevorzugten Ausführungsform wird das mindestens eine DES in einem vor Verfahrensschritt a) durchgeführten Verfahrensschritt a2) durch Mischen von mindestens einem Ausgangsstoffs A, insbesondere Cholinchlorid, mit mindestens einem Ausgangsstoff B, insbesondere Urea, erhalten.

In einer besonders bevorzugten Ausführungsform wird das mindestens eine DES in einem vor Verfahrensschritt a) durchgeführten Verfahrensschritt a2) durch Mischen von 1 bis 50 Mol-% eines Ausgangsstoffs A, insbesondere 10 bis 50 Mol-%, insbesondere 20 bis 50 Mol-%, insbesondere 30 bis 50 Mol-%, insbesondere 40 bis 50 Mol-%, insbesondere 25 Mol-%, insbesondere 33 Mol-%, insbesondere 50 Mol-% (bezogen auf Gesamtstoffmenge DES) und 99 bis 50 Mol-% eines Ausgangsstoffs B, insbesondere 90 bis 50 Mol-%, insbesondere 80 bis 50 Mol-%, insbesondere 70 bis 50 Mol-%, insbesondere 60 bis 50 Mol-%, insbesondere 75 Mol-%, insbesondere 67 Mol-%, insbesondere 50 Mol-% (bezogen auf Gesamtstoffmenge DES) erhalten.

In einer besonders bevorzugten Ausführungsform wird das mindestens eine DES in einem vor Verfahrensschritt a) durchgeführten Verfahrensschritt a2) durch Mischen von 1 bis 50 Mol-%, insbesondere 20 bis 37 Mol-%, insbesondere 30 bis 35 Mol-%, insbesondere 33 Gew.-% mindestens eines Ausgangsstoffs A (bezogen auf Gesamtstoffmenge DES), insbesondere Cholinchlorid, mit 99 bis 50 Mol-%, insbesondere 80 bis 63 Mol-%, insbesondere 70 bis 65 Mol-%, insbesondere 67 Mol-% mindestens eines Ausgangsstoffs B (bezogen auf Gesamtstoffmenge DES), insbesondere Urea, erhalten.

In einer besonders bevorzugten Ausführungsform wird das mindestens eine DES in einem vor Verfahrensschritt a) durchgeführten Verfahrensschritt a2) durch Mischen von 99 bis 50 Mol-% eines Ausgangsstoffs A, insbesondere 90 bis 50 Mol-%, insbesondere 80 bis 50 Mol-%, insbesondere 70 bis 50 Mol-%, insbesondere 60 bis 50 Mol-%, insbesondere 75 Mol-%, insbesondere 67 Mol-%, insbesondere 50 Mol-% (bezogen auf Gesamtstoffmenge DES) und 1 bis 50 Mol-% eines Ausgangsstoffs B, insbesondere 10 bis 50 Mol-%, insbesondere 20 bis 50 Mol-%, insbesondere 30 bis 50 Mol-%, insbesondere 40 bis 50 Mol-%, insbesondere 25 Mol-%, insbesondere 33 Mol-%, insbesondere 50 Mol-% (bezogen auf Gesamtstoffmenge DES) erhalten.

In einer besonders bevorzugten Ausführungsform wird das mindestens eine DES in einem vor Verfahrensschritt a) durchgeführten Verfahrensschritt a2) durch Mischen von 99 bis 50 Mol-%, insbesondere 80 bis 63 Mol-%, insbesondere 70 bis 65 Mol-%, insbesondere 67 Mol-% mindestens eines Ausgangsstoffs A (bezogen auf Gesamtstoffmenge DES), insbesondere Urea, mit 1 bis 50 Mol-%, insbesondere 20 bis 37 Mol-%, insbesondere 30 bis 35 Mol-%, insbesondere 33 Mol-% mindestens eines Ausgangsstoffs B (bezogen auf Gesamtstoffmenge DES), insbesondere Cholinchlorid, erhalten.

In einer besonders bevorzugten Ausführungsform wird das mindestens eine DES in einem vor Verfahrensschritt a) durchgeführten Verfahrensschritt a2) durch Mischen von 1 bis 50 Gew.-% eines Ausgangsstoffs A, insbesondere 10 bis 50 Gew.-%, insbesondere 20 bis 50 Gew.-%, insbesondere 30 bis 50 Gew.-%, insbesondere 40 bis 50 Gew.-%, insbesondere 25 Gew.-%, insbesondere 33 Gew.-%, insbesondere 50 Gew.-% (bezogen auf Gesamtgewicht DES) und 99 bis 50 Gew.-% eines Ausgangsstoffs B, insbesondere 90 bis 50 Gew.-%, insbesondere 80 bis 50 Gew.-%, insbesondere 70 bis 50 Gew.-%, insbesondere 60 bis 50 Gew.-%, insbesondere 75 Gew.-%, insbesondere 67 Gew.-%, insbesondere 50 Gew.-% (bezogen auf Gesamtgewicht DES) erhalten, insbesondere wenn mindestens einer der beiden Ausgangsstoffe A und B ein Biopolymer, insbesondere Chitosan, Chitin oder Lignin ist.

In einer besonders bevorzugten Ausführungsform wird das mindestens eine DES in einem vor Verfahrensschritt a) durchgeführten Verfahrensschritt a2) durch Mischen von 1 bis 50 Gew.-%, insbesondere 20 bis 37 Gew.-%, insbesondere 30 bis 35 Gew.-%, insbesondere 33 Gew.-% mindestens eines Ausgangsstoffs A (bezogen auf Gesamtstoffmenge DES), mit 99 bis 50 Gew.-%, insbesondere 80 bis 63 Gew.-%, insbesondere 70 bis 65 Gew.-%, insbesondere 67 Gew.-% mindestens eines Ausgangsstoffs B (bezogen auf Gesamtstoffmenge DES) erhalten, insbesondere wenn mindestens einer der beiden Ausgangsstoffe A und B ein Biopolymer, insbesondere Chitosan oder Lignin ist.

In einer besonders bevorzugten Ausführungsform wird das mindestens eine DES in einem vor Verfahrensschritt a) durchgeführten Verfahrensschritt a2) durch Mischen von 99 bis 50 Gew.-% eines Ausgangsstoffs A, insbesondere 90 bis 50 Gew.-%, insbesondere 80 bis 50 Gew.-%, insbesondere 70 bis 50 Gew.-%, insbesondere 60 bis 50 Gew.-%, insbesondere 75 Gew.-%, insbesondere 67 Gew.-%, insbesondere 50 Gew.-% (bezogen auf Gesamtgewicht DES) und 1 bis 50 Gew.-% eines Ausgangsstoffs B, insbesondere 10 bis 50 Gew.-%, insbesondere 20 bis 50 Gew.-%, insbesondere 30 bis 50 Gew.-%, insbesondere 40 bis 50 Gew.-%, insbesondere 25 Gew.-%, insbesondere 33 Gew.-%, insbesondere 50 Gew.-% (bezogen auf Gesamtgewicht DES) erhalten, insbesondere wenn mindestens einer der beiden Ausgangsstoffe A und B ein Biopolymer, insbesondere Chitosan, Chitin oder Lignin ist.

In einer besonders bevorzugten Ausführungsform wird das mindestens eine DES in einem vor Verfahrensschritt a) durchgeführten Verfahrensschritt a2) durch Mischen von 99 bis 50 Gew.-%, insbesondere 80 bis 63 Gew.-%, insbesondere 70 bis 65 Gew.-%, insbesondere 67 Gew.-% mindestens eines Ausgangsstoffs A (bezogen auf Gesamtstoffmenge DES) mit 1 bis 50 Gew.-%, insbesondere 20 bis 37 Gew.-%, insbesondere 30 bis 35 Gew.-%, insbesondere 33 Gew.-% mindestens eines Ausgangsstoffs B (bezogen auf Gesamtstoffmenge DES) erhalten, insbesondere wenn mindestens einer der beiden Ausgangsstoffe A und B ein Biopolymer, insbesondere Chitosan oder Lignin, ist.

In einer besonders bevorzugten Ausführungsform wird vor Verfahrensschritt a) der Verfahrensschritt a1) oder Verfahrensschritt a2) durchgeführt.

In einer besonders bevorzugten Ausführungsform wird vor Verfahrensschritt a) der Verfahrensschritt a1) und Verfahrensschritt a2) durchgeführt.

In einer besonders bevorzugten Ausführungsform wird vor Verfahrensschritt a) der Verfahrensschritt a1) und nach Verfahrensschritt a1) und vor Verfahrensschritt a) Verfahrensschritt a2) durchgeführt.

In einer besonders bevorzugten Ausführungsform wird vor Verfahrensschritt a) der Verfahrensschritt a2) und nach Verfahrensschritt a2) und vor Verfahrensschritt a) Verfahrensschritt a1) durchgeführt.

In einer bevorzugten Ausführungsform wird der in Verfahrensschritt a) zusätzlich bereitgestellte mindestens eine Funktionsstoff, insbesondere mindestens ein Metallsalz oder Metalloxid, in einem Verfahrensschritt b1) in mindestens ein in Verfahrensschritt a) bereitgestelltes Medium, insbesondere flüssiges Medium, insbesondere ausgewählt aus der Gruppe bestehend aus einem verflüssigten stark eutektischen Lösungsmittel (DES), Wasser und Öl, eingebracht, das heißt in dem in Verfahrensschritt a) bereitgestellten Medium, insbesondere flüssigen Medium, gelöst oder suspendiert.

In einer bevorzugten Ausführungsform weist die in Verfahrensschritt a) bereitgestellte mindestens eine poröse sorptionsfähige organische Komponente, insbesondere Hanfschäben, eine Aufnahmekapazität von 1 bis 700 Gew.-%, insbesondere 10 bis 600 Gew.-%, insbesondere 50 bis 500 Gew.-%, insbesondere 80 bis 400 Gew.-%, insbesondere 100 bis 300 Gew.-%, insbesondere 150 bis 200 Gew.-%, insbesondere 175 Gew.-%, insbesondere 60 Gew.-% (bezogen auf das Ausgangsgewicht der in Verfahrensschritt a) bereitgestellten porösen sorptionsfähigen organischen Komponente) des in Verfahrensschritt a) bereitgestellten mindestens einen Mediums, insbesondere flüssigen Mediums, und/oder des in Verfahrensschritt a) bereitgestellten Funktionsstoffs und/oder des in Verfahrensschritt b1) den eingebrachten Funktionsstoff aufweisenden flüssigen Mediums, auf.

In einer bevorzugten Ausführungsform weist die mindestens eine poröse sorptionsfähige organische Komponente, insbesondere Hanfschäben, in dem in Verfahrensschritt c) erhaltenen Agrarmittel ein vergrößertes Volumen von mindestens 0 bis 400 Vol.-%, insbesondere 0 bis 300 Vol.-%, insbesondere 0 bis 200 Vol.-%, insbesondere 0 bis 100 Vol.-%, insbesondere 0 bis 50 Vol.-%, insbesondere 0 bis 20 Vol.-%, insbesondere 0 bis 10 Vol.-%, insbesondere 50 bis 250 Vol.-%, insbesondere 100 Vol.-% (bezogen auf das Volumen der in Verfahrensschritt a) bereitgestellten porösen sorptionsfähigen organischen Komponente) auf.

In einer besonders bevorzugten Ausführungsform wird das in Verfahrensschritt c) erhaltene Agrarmittel in einem Verfahrensschritt d) getrocknet, insbesondere wenn in Verfahrensschritt a) als Medium Wasser bereitgestellt wurde, insbesondere auf einen Restwassergehalt von 0,5 bis 90 Gew.-%, insbesondere 0,5 bis 60 Gew.-%, insbesondere 0,5 bis 20 Gew.-%, insbesondere 0,5 bis 10 Gew.-%, insbesondere 0,5 bis 5 Gew.-% (bezogen auf Gesamtgewicht Agrarmittel).

In einer besonders bevorzugten Ausführungsform wird das in Verfahrensschritt c) erhaltene Agrarmittel in einem Verfahrensschritt d) getrocknet, insbesondere wenn in Verfahrensschritt a) als Medium Wasser bereitgestellt wurde, insbesondere auf einen Restwassergehalt, der dem Restwassergehalt der in Verfahrensschritt a) bereitgestellten organischen porösen sorptionsfähigen Komponente entspricht.

In einer besonders bevorzugten Ausführungsform der vorliegenden Erfindung betrifft diese auch Agrarmittel, herstellbar, insbesondere hergestellt, mittels eines erfindungsgemäßen Verfahrens.

In einer besonders bevorzugten Ausführungsform der vorliegenden Erfindung liegt das Agrarmittel in fester, halbfester oder flüssiger Form vor.

In einer besonders bevorzugten Ausführungsform der vorliegenden Erfindung liegt das Agrarmittel in Form von Pellets, Granulat, Tabletten oder als Pulver vor.

In einer besonders bevorzugten Ausführungsform der vorliegenden Erfindung liegt das Agrarmittel als Lösung, Suspension oder Dispersion vor.

In einer besonders bevorzugten Ausführungsform der vorliegenden Erfindung ist das Agrarmittel rieselfähig.

Erfindungsgemäß betrifft die vorliegende Erfindung auch eine Verwendung eines stark eutektischen Lösungsmittels (DES), insbesondere eines NADES, eines Typ I DES, eines Typ IIDES, eines Typ III DES, eines Typ IV DES oder einer Kombination davon, als Düngemittel, insbesondere als Kurzzeit- oder Langzeitdüngemittel, oder als Futtermittel, insbesondere als Futtermittelzusatz.

In einer bevorzugten Ausführungsform enthält das erfindungsgemäß verwendete DES zusätzlich mindestens einen Mikronährstoff und/oder einen Pflanzennährstoff, insbesondere ein Metallsalz oder Metalloxid, und/oder einen organischen Zusatzstoff.

In einer besonders bevorzugten Ausführungsform weist das erfindungsgemäß verwendete DES 0,0000003 bis 40 Gew.-% eines Mikronährstoffs, insbesondere 0,000003 bis 30 Gew.-%, insbesondere 0,000005 bis 20 Gew.-%, insbesondere 0,00003 bis 13 Gew.-% (bezogen auf Gesamtgewicht des erfindungsgemäß verwendeten DES), auf.

In einer besonders bevorzugten Ausführungsform weist das erfindungsgemäß verwendete DES 0,005 bis 50 Gew.-% eines Pflanzennährstoffs, insbesondere 0,1 bis 40 Gew.-%, insbesondere 1 bis 45 Gew.-%, insbesondere 11 bis 30 Gew.-% (bezogen auf Gesamtgewicht des erfindungsgemäß verwendeten DES), auf.

In einer besonders bevorzugten Ausführungsform weist das erfindungsgemäß verwendete DES 0,000005 bis 33 Gew.-% eines organischen Zusatzstoffs, insbesondere 0,00005 bis 30 Gew.-%, insbesondere 0,0001 bis 28 Gew.-%, insbesondere 0,0003 bis 27 Gew.-% (bezogen auf Gesamtgewicht des erfindungsgemäß verwendeten DES), auf.

In einer besonders bevorzugten Ausführungsform weist das erfindungsgemäß verwendete DES 0,0000003 bis 40 Gew.-% eines Mikronährstoffs, insbesondere 0,000003 bis 30 Gew.-%, insbesondere 0,000005 bis 20 Gew.-%, insbesondere 0,00003 bis 13 Gew.-% (bezogen auf Gesamtgewicht des erfindungsgemäß verwendeten DES) und 0,000005 bis 33 Gew.-% eines organischen Zusatzstoffs, insbesondere 0,00005 bis 30 Gew.-%, insbesondere 0,0001 bis 28 Gew.-%, insbesondere 0,0003 bis 27 Gew.-% (bezogen auf Gesamtgewicht des erfindungsgemäß verwendeten DES), auf.

In einer besonders bevorzugten Ausführungsform weist das erfindungsgemäß verwendete DES 0,005 bis 50 Gew.-% eines Pflanzennährstoffs, insbesondere 0,1 bis 40 Gew.-%, insbesondere 1 bis 45 Gew.-%, insbesondere 11 bis 30 Gew.-% (bezogen auf Gesamtgewicht des erfindungsgemäß verwendeten DES) und 0,000005 bis 33 Gew.-% eines organischen Zusatzstoffs, insbesondere 0,00005 bis 30 Gew.-%, insbesondere 0,0001 bis 28 Gew.-%, insbesondere 0,0003 bis 27 Gew.-% (bezogen auf Gesamtgewicht des erfindungsgemäß verwendeten DES), auf.

Im Zusammenhang mit der vorliegenden Erfindung wird unter "Agrarmittel" bevorzugt ein Dünge- und Futtermittel verstanden. Insbesondere ist ein Agrarmittel eine Zusammensetzung mindestens zweier Stoffe zur Steigerung der Effizienz menschlicher Nahrungsmittelversorgung in der Nahrungskette von organischen Stoffen zum Menschen. Ein Agrarmittel kann auch ein Bio-Akkumulator sein.

Im Zusammenhang mit der vorliegenden Erfindung wird unter "Düngemittel" auch Dünger verstanden und ist ein Sammelbegriff für Stoffgemische, die in der Land- und Forstwirtschaft sowie im Gartenbau und in Privatgärten dazu verwendet werden, das Nährstoffangebot für Pflanzen, insbesondere Kulturpflanzen, zu ergänzen.

Im Zusammenhang mit der vorliegenden Erfindung wird unter "Kulturpflanze" eine Pflanze verstanden, die durch das Eingreifen des Menschen zielgerichtet als Nutz- oder Zierpflanze angebaut, kultiviert und züchterisch bearbeitet wird.

Im Zusammenhang mit der vorliegenden Erfindung wird unter "Futtermittel" ein Sammelbegriff verstanden, der alle Formen von Tiernahrung und/oder Ernährungsmittel für alle von Menschen gehaltenen Tiere, insbesondere landwirtschaftliche Nutztiere, Zoo-, Sport- und/oder Heimtiere, umfasst.

Im Zusammenhang mit der vorliegenden Erfindung wird unter "organischer" Komponente mindestens eine Kohlenstoff-haltige Verbindung verstanden.

Im Zusammenhang mit der vorliegenden Erfindung wird unter "sorptionsfähig" die Fähigkeit einer Komponente verstanden, ein Medium, insbesondere flüssiges Medium, insbesondere verflüssigtes DES, Wasser und/oder Öl, zu adsorbieren und/oder zu absorbieren. Die Sorptionsfähigkeit der organischen Komponente führt zur Sorption und damit Einlagerung des Mediums, insbesondere flüssigen Mediums, insbesondere DES, in die organische Komponente und/oder zur Anlagerung an die organische Komponente. Bevorzugt wird im Zusammenhang mit der vorliegenden Erfindung unter "sorptionsfähiger Komponente" eine Komponente verstanden, die eine Wasseraufnahmekapazität, bestimmt über Messverfahren gemäß den Beispielen der vorliegenden Erfindung, insbesondere gemäß Beispiel 11, von 300 bis 700 % ihres Eigengewichts zeigt.

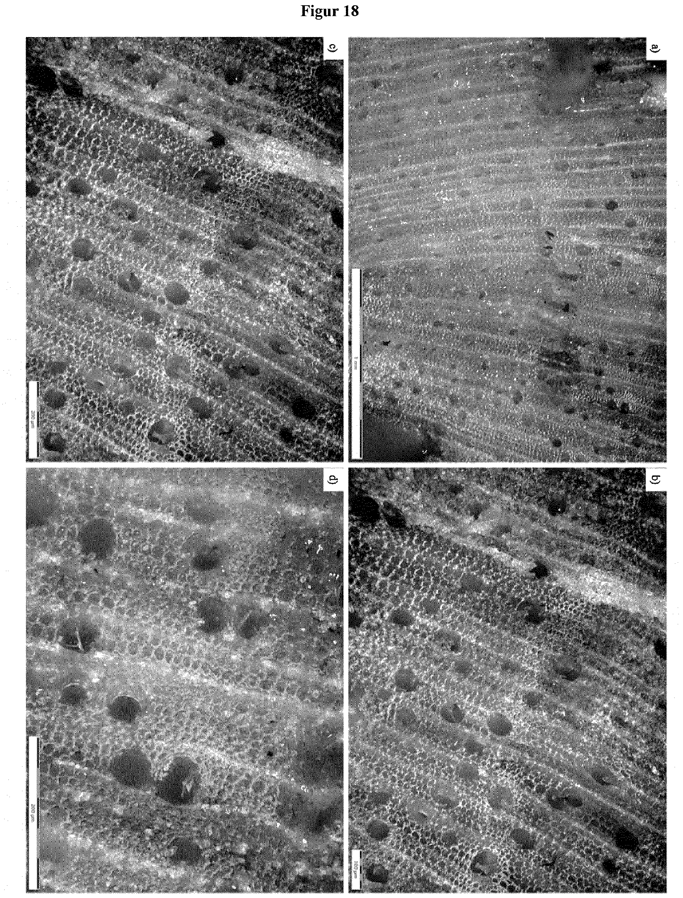

Im Zusammenhang mit der vorliegenden Erfindung wird unter "porös" verstanden, dass ein Material Poren aufweist, die insbesondere ausgezeichnet sind durch eine elliptische, rechtwinklige, ovale oder runde Form. Bevorzugt kann das poröse Material, insbesondere die poröse sorptionsfähige Komponente, ein Medium, insbesondere flüssiges Medium, insbesondere DES, insbesondere verflüssigtes DES, in den Poren einlagern. In einer bevorzugten Ausführung entspricht das Porenvolumen der maximalen Wasseraufnahmekapazität des porösen Materials, insbesondere der porösen sorptionsfähigen Komponente. Insbesondere weisen Poren mit runder Form einen durchschnittlichen Porendurchmesser von 1 bis 999 µm, insbesondere 2 bis 750 µm, insbesondere 5 bis 500 µm, insbesondere 5 bis 250 µm, insbesondere 5 bis 100 µm, insbesondere 5 bis 80 µm auf. Insbesondere weisen Poren, die keine runde Form aufweisen, also insbesondere Poren mit elliptischer, rechtwinkliger oder ovaler Form, eine durchschnittliche Porenlänge von mindestens 1 µm, insbesondere mindestens 10 µm, insbesondere mindestens 20 µm, insbesondere mindestens 30 µm, insbesondere mindestens 40 µm, insbesondere mindestens 50 µm, insbesondere mindestens 100 µm, insbesondere mindestens 1000 µm, insbesondere 1 bis 999 µm, insbesondere 50 bis 750 µm, insbesondere 100 bis 500 µm, insbesondere 200 bis 400 µm, insbesondere 300 bis 350 µm, insbesondere weisen mindestens 70 % der Poren eine Porenlänge von 1 bis 999 µm, insbesondere 50 bis 750 µm, insbesondere 100 bis 500 µm, insbesondere 200 bis 400 µm, insbesondere 300 bis 350 µm (jeweils bezogen auf die längste Seite der Pore) auf. Bevorzugt sind beispielhaft in Figur 18 mögliche Poren, insbesondere Porengrößen, einer erfindungsgemäßen porösen sorptionsfähigen organischen Komponente durch Mikroskopaufnahmen dargestellt.

Im Zusammenhang mit der vorliegenden Erfindung wird unter "adsorbieren" die Anreicherung, insbesondere Anhaftung, eines Mediums, insbesondere eines flüssigen Mediums, an der Oberfläche eines Festkörpers, insbesondere einer porösen sorptionsfähigen organischen Komponente, verstanden. Das heißt, dass die Flüssigkeit durch, insbesondere nicht-kovalente, Wechselwirkungen mit der Oberfläche des Festkörpers wechselwirkt. Erfindungsgemäß wird somit unter Adsorption auch Physisorption verstanden.

Im Zusammenhang mit der vorliegenden Erfindung wird unter "absorbieren" das Aufnehmen eines Mediums, insbesondere eines flüssigen Mediums, in das freie Volumen eines, insbesondere bei 25 °C festen, Festkörpers, insbesondere einer porösen sorptionsfähigen organischen Komponente, verstanden.

Im Zusammenhang mit der vorliegenden Erfindung wird unter "Komponente" ein Bestandteil eines Agrarmittels verstanden, insbesondere ein poröser sorptionsfähiger organischer Bestandteil.

Im Zusammenhang mit der vorliegenden Erfindung wird unter "Medium" ein von einer organischen Komponente, insbesondere porösen sorptionsfähigen Komponente, sorbierbarer Stoff oder sorbierbares Stoffgemisch verstanden. Bevorzugt wird unter "Medium" ein stark eutektisches Lösungsmittel (DES) verstanden. Bevorzugt wird unter "Medium" ein Medium ausgewählt aus der Gruppe bestehend aus einem stark eutektischem Lösungsmittel (DES), Wasser und Öl verstanden. Bevorzugt wird unter "Medium" Wasser verstanden, insbesondere um die Sorptionsfähigkeit, auch Aufnahmefähigkeit, insbesondere maximale Sorptionsfähigkeit, von porösen sorptionsfähigen organischen Komponenten, insbesondere gemäß Beispiel 1, 2, 11 und 15 der vorliegenden Erfindung, zu bestimmen. Bevorzugt wird unter "Medium" Öl verstanden.

Im Zusammenhang mit der vorliegenden Erfindung wird unter "Schäben" ein Bestandteil eines Pflanzenstängels verstanden, der bei der Erzeugung von Bastfasern im maschinellen Prozess der Entholzung von Pflanzenstängeln, insbesondere Flachs- oder Hanfstängeln, als Nebenprodukt anfällt. Insbesondere weisen Schäben Fasern und Teilchen, also Pflanzenpartikel, auf. Insbesondere liegen die Schäben in homogener Form, also gleichmäßig gebrochener Form vor. Bevorzugt sind Schäben, insbesondere Hanfschäben, porös und sorptionsfähig. Bevorzugt weisen Schäben, insbesondere Hanfschäben, Poren von gleichmäßiger Größe auf. Schäben, insbesondere Hanfschäben, und deren Existenz in Agrarmitteln, lassen sich in bevorzugter Ausführungsform durch optische Bestimmungsverfahren wie Lichtmikroskopie, REM, und andere analytische Bestimmungsverfahren wie IR, Elementaranalyse und EDX nachweisen.

Im Zusammenhang mit der vorliegenden Erfindung wird unter "Bastfaser" eine Pflanzenfaser verstanden, die in Form von mehrzelligen Faserbündeln im Bast einer Pflanzenart vorliegt.

Im Zusammenhang mit der vorliegenden Erfindung werden Schäben auch aus getrockneten Pflanzenstängeln gewonnen.

Im Zusammenhang mit der vorliegenden Erfindung wird unter "getrockneten Pflanzenstängeln" auch Stroh verstanden.

Im Zusammenhang mit der vorliegenden Erfindung werden Schäben, insbesondere Hanfschäben, auch aus Stroh, insbesondere Hanfstroh, gewonnen.

Im Zusammenhang mit der vorliegenden Erfindung umfasst "Stroh" Schäben und Bastfasern, insbesondere besteht Stroh aus Schäben und Bastfasern.

Im Zusammenhang mit der vorliegenden Erfindung werden unter "porösen nachwachsenden Materialien" Materialien verstanden, die eine poröse Struktur aufweisen und aus nachwachsenden Rohstoffen erhalten werden oder aus diesen bestehen, insbesondere Samenschalen, Holz, Holzabfälle, Naturfasern, Stroh, insbesondere Hanfstroh, Sägespäne, Chitosan-, Chitin- und Lignin-haltige Komponenten.

Im Zusammenhang mit der vorliegenden Erfindung wird unter "flüssigem Medium" ein Medium, insbesondere DES, Wasser oder Öl verstanden, das bei 20 °C bis 150 °C, insbesondere 0 °C bis 150 °C, insbesondere 10 °C bis 150 °C, insbesondere 25 °C bis 150 °C, insbesondere bei 0 °C bis 100 °C, insbesondere 10 °C bis 100 °C, insbesondere 20 °C bis 100 °C, insbesondere 25 °C bis 100 °C, insbesondere 0 °C bis 80 °C, insbesondere 10 °C bis 80 °C, insbesondere 20 °C bis 80 °C, insbesondere 25 °C bis 80 °C, insbesondere 0 °C bis 60 °C, insbesondere 10 °C bis 60 °C, insbesondere 20 °C bis 60 °C, insbesondere 25 °C bis 60 °C, insbesondere 0 °C bis 50 °C, insbesondere 10 °C bis 50 °C, insbesondere 20 °C bis 50 °C, insbesondere 25 °C bis 50 °C, in flüssigem Aggregatszustand vorliegt.

Im Zusammenhang mit der vorliegenden Erfindung wird unter "flüssigem Aggregatszustand" der Zustand eines Stoffes oder Stoffgemischs verstanden, bei dem die einzelnen Moleküle oder Atome keine Fernordnung aber eine Nahordnung aufweisen.

Im Zusammenhang mit der vorliegenden Erfindung wird unter dem Begriff "Fernordnung" ein regelmäßiger und periodischer Abstand von Molekülen oder Atomen in einem Festkörper verstanden. Demgemäß kann aus der genauen Position weniger Moleküle oder Atome vorteilhafterweise die Position aller Moleküle oder Atome in einem kristallinen Festkörper bestimmt werden.

Im Zusammenhang mit der vorliegenden Erfindung wird unter dem Begriff "Nahordnung" die Ordnung in einem Aggregatszustand verstanden, bei der benachbarte Moleküle oder Atome regelmäßig um ein Bezugsmolekül- oder -atom angeordnet sind, diese regelmäßige Ordnung mit der Entfernung jedoch abnimmt.

Im Zusammenhang mit der vorliegenden Erfindung wird unter "stark eutektischem Lösungsmittel (DES)" eine Mischung aus mindestens zwei verschiedenen Ausgangsstoffen, insbesondere mindestens einem Ausgangstoff A, der ein Wasserstoffbrückenbindungs-Akzeptor und/oder Elektronenpaar-Akzeptor ist und mindestens einem Ausgangsstoff B, der ein Wasserstoffbrückenbindungs-Donor und/oder Elektronenpaar-Donor ist, verstanden, welche einen geringeren Schmelzpunkt als die jeweiligen Schmelzpunkte der Ausgangsstoffe aufweist, insbesondere einen Schmelzpunkt unter 150 °C, bevorzugt unter 100 °C. In besonders bevorzugter Ausführungsform liegt das DES bei Raumtemperatur verflüssigt vor. In besonders bevorzugter Ausführungsform liegt das DES bei Raumtemperatur in halbfester oder fester Form vor. Im Zusammenhang mit der vorliegenden Erfindung werden unter "Ausgangsstoff' demgemäß derartig definierte Ausgangsstoffe verstanden, die in der Lage sind, miteinander ohne Ausbildung einer kovalenten Bindung wechselzuwirken, insbesondere über Coulomb-Wechselwirkungen, insbesondere Wasserstoffbrückenbindungen, Ion-Ion-, Ion-Dipol-, Dipol-Dipol- und/oder van-der-Waals-Wechselwirkungen.

Im Zusammenhang mit der vorliegenden Erfindung wird unter "Raumtemperatur" eine Temperatur von 18 bis 22 °C, insbesondere 20 °C verstanden.

Im Zusammenhang mit der vorliegenden Erfindung ist Ausgangsstoff A eines DES in jeder erfindungsgemäßen Ausführungsform ungleich Ausgangsstoff B des DES. Das heißt, sind Ausgangstoff A und Ausgangsstoff B jeweils Mitglieder ein und derselben generisch definierten Gruppe von einzelnen Ausgangstoffen für A und B, beispielsweise stammen beide Ausgangsstoffe A und B aus der Gruppe der Aminosäuren, so sind Ausgangsstoff A und B verschiedene Aminosäuren und Ausgangsstoff A ist nicht die gleiche Aminosäure wie Ausgangsstoff B.

Im Zusammenhang mit der vorliegenden Erfindung wird unter "verflüssigtes DES" ein DES verstanden, das bei 20 °C bis 150 °C, insbesondere 0 °C bis 150 °C, insbesondere 10 °C bis 150 °C, insbesondere 25 °C bis 150 °C, insbesondere bei 0 °C bis 100 °C, insbesondere 10 °C bis 100 °C, insbesondere 20 °C bis 100 °C, insbesondere 25 °C bis 100 °C, insbesondere 0 °C bis 80 °C, insbesondere 10 °C bis 80 °C, insbesondere 20 °C bis 80 °C, insbesondere 25 °C bis 80 °C, insbesondere 0 °C bis 60 °C, insbesondere 10 °C bis 60 °C, insbesondere 20 °C bis 60 °C, insbesondere 25 °C bis 60 °C, insbesondere 0 °C bis 50 °C, insbesondere 10 °C bis 50 °C, insbesondere 20 °C bis 50 °C, insbesondere 25 °C bis 50 °C in flüssigem Aggregatszustand vorliegt.

Im Zusammenhang mit der vorliegenden Erfindung wird unter "Ausgangsstoff A" bevorzugt ein Ausgangsstoff verstanden, der insbesondere mindestens eine funktionelle Gruppe aufweist, die fähig ist, Wasserstoffbrückenbindungen zu akzeptieren, insbesondere Wasserstoffbrückenbindungen akzeptiert.

Im Zusammenhang mit der vorliegenden Erfindung wird unter "Ausgangsstoff A" bevorzugt ein Ausgangsstoff verstanden, der insbesondere mindestens eine funktionelle Gruppe aufweist, die fähig ist, Elektronenpaare zu akzeptieren, insbesondere Elektronenpaare akzeptiert.

Im Zusammenhang mit der vorliegenden Erfindung wird unter "Ausgangsstoff B" bevorzugt ein Ausgangsstoff verstanden, der mindestens eine funktionelle Gruppe aufweist, die fähig ist, Wasserstoffbrückenbindungen bereitzustellen, insbesondere Wasserstoffbrückenbindungen bereitstellt.

Im Zusammenhang mit der vorliegenden Erfindung wird unter "Ausgangsstoff B" bevorzugt ein Ausgangsstoff verstanden, der mindestens eine funktionelle Gruppe aufweist, die fähig ist, Elektronenpaare bereitzustellen, insbesondere Elektronenpaare bereitstellt.

Im Zusammenhang mit der vorliegenden Erfindung können Ausgangsstoffe, die mindestens eine funktionelle Gruppe aufweisen, um als Ausgangsstoff A zu gelten und mindestens eine funktionelle Gruppe aufweisen, um als Ausgangsstoff B zu gelten, als Ausgangsstoff A oder als Ausgangsstoff B verwendet werden.

Im Zusammenhang mit der vorliegenden Erfindung wird unter "NADES" ein natürliches DES, insbesondere ein biobasiertes DES verstanden.

Im Zusammenhang mit der vorliegenden Erfindung wird unter "biobasiertes DES" insbesondere ein biobasiertes DES verstanden, welches teilweise oder vollständig natürlicherweise nachwachsende Rohstoffe umfasst, insbesondere aus diesen besteht.

Insbesondere ist NADES vorzugsweise ein Material pflanzlichen Ursprungs, das aus mindestens zwei Primärmetaboliten aus pflanzlicher Quelle aufgebaut ist.

Im Zusammenhang mit der vorliegenden Erfindung wird unter "Typ I DES" ein stark eutektisches Lösungsmittel aus mindestens zwei Ausgangsstoffen verstanden, wobei mindestens ein erster Ausgangsstoff ein Metallsalz, insbesondere ein Metallchlorid und mindestens ein zweiter Ausgangsstoff ein quartäres Ammonium-Salz ist.

Im Zusammenhang mit der vorliegenden Erfindung wird unter "Typ II DES" ein stark eutektisches Lösungsmittel aus mindestens zwei Ausgangsstoffen verstanden, wobei mindestens ein erster Ausgangsstoff ein Metallsalz-Hydrat, insbesondere ein Metallchlorid-Hydrat und mindestens ein zweiter Ausgangsstoff ein quartäres Ammonium-Salz ist.

Im Zusammenhang mit der vorliegenden Erfindung wird unter "Typ III DES" ein stark eutektisches Lösungsmittel aus mindestens zwei Ausgangsstoffen verstanden, wobei mindestens ein erster Ausgangsstoff ein Wasserstoffbrückenbindungs-Donor und mindestens ein zweiter Ausgangsstoff ein quartäres Ammonium-Salz ist.

Im Zusammenhang mit der vorliegenden Erfindung wird unter "Typ IV DES" ein stark eutektisches Lösungsmittel aus mindestens zwei Ausgangsstoffen verstanden, wobei mindestens ein erster Ausgangsstoff ein Wasserstoffbrückenbindungs-Donor und mindestens ein zweiter Ausgangsstoff ein Metallsalz-Hydrat, insbesondere ein Metallchlorid-Hydrat ist.

Im Zusammenhang mit der vorliegenden Erfindung wird unter "Metallsalz-Hydrat" ein Metallsalz verstanden, dass molekulares Wasser als Kristallwasser oder als Ligand aufweist.

Im Zusammenhang mit der vorliegenden Erfindung wird unter "Kristallwasser" auch Hydratwasser verstanden, das in kristallinen Festkörpern gebunden, insbesondere nicht kovalent gebunden, ist.

Im Zusammenhang mit der vorliegenden Erfindung wird unter "Halogen-Salz" ein Salz verstanden, bei dem das Anion oder das Kation, insbesondere das Anion, ein Halogen, insbesondere ausgewählt aus der Gruppe bestehend aus Fluor, Chlor, Brom und Iod, ist.

Im Zusammenhang mit der vorliegenden Erfindung wird unter "Öl" mindestens ein mit Wasser nicht mischbarer organischer Stoff verstanden, insbesondere Fettsäure-/Alkoholester, insbesondere Glycerinester, Fettsäuren oder insbesondere langkettige Alkane, wobei diese jeweils bei 25 °C flüssig vorliegen.

Im Zusammenhang mit der vorliegenden Erfindung wird unter einem "Funktionsstoff" mindestens ein Stoff ausgewählt aus der Gruppe bestehend aus einem Mikronährstoff, Pflanzennährstoff, organischem Zusatzstoff und einer Kombination davon verstanden.

Im Zusammenhang mit der vorliegenden Erfindung wird unter einem "Funktionsstoff" insbesondere mindestens ein Stoff verstanden, der in dem erfindungsgemäßen Agrarmittel zusätzlich zu der mindestens einen porösen sorptionsfähigen organischen Komponente und dem mindestens einen sorbierten flüssigen Medium vorliegt.

Im Zusammenhang mit der vorliegenden Erfindung wird unter "organischem Zusatzstoff" insbesondere mindestens eine Kohlenstoff-haltige Verbindung, verstanden, insbesondere ein nicht-bioaktiver und/oder ein bioaktiver Zusatzstoff.

Im Zusammenhang mit der vorliegenden Erfindung wird unter "bioaktivem Zusatzstoff" ein Zusatzstoff verstanden, insbesondere eine Kohlenstoff-haltige Verbindung, der in lebenden Organismen eine Reaktion hervorruft, insbesondere in lebende Organismen ein- oder in lebenden Organismen umgebaut wird.

Im Zusammenhang mit der vorliegenden Erfindung wird unter "Bioaktivität" die Aktivität eines Stoffes verstanden, die in lebenden Organismen eine Reaktion hervorruft, insbesondere in lebenden Organismen ein- oder in lebenden Organismen umgebaut wird.

In besonders bevorzugter Ausführungsform ist der bioaktive Stoff mindestens ein Vitamin und/oder mindestens eine Aminosäure.

In besonders bevorzugter Ausführungsform kann der organische Zusatzstoff auch eine Kohlenstoff-haltige Verbindung sein, die nicht bioaktiv ist, also ein nicht-bioaktiver Zusatzstoff sein.

Im Zusammenhang mit der vorliegenden Erfindung wird unter "nicht-bioaktivem Zusatzstoff" ein Zusatzstoff, insbesondere eine Kohlenstoff-haltige Verbindung, verstanden, der in lebenden Organismen keine Reaktion hervorruft, zum Beispiel ein Füllstoff oder ein Stoff, der aus technologischen Gründen in dem Agrarmittel vorliegt.

Im Zusammenhang mit der vorliegenden Erfindung wird unter "Füllstoff" ein Stoff verstanden, der das Volumen eines erfindungsgemäßen Agrarmittels vergrößert.

Im Zusammenhang mit der vorliegenden Erfindung wird unter "Mikronährstoff" eine anorganische oder organische Verbindung verstanden, die von Tieren und/oder Menschen zu deren Lebenserhaltung aufgenommen und verstoffwechselt wird, insbesondere ein Mengen- oder Spurenelement, insbesondere ein Metallsalz. Mikronährstoffe liegen erfindungsgemäß bevorzugt in Futtermitteln vor.

Im Zusammenhang mit der vorliegenden Erfindung wird unter Mengenelement" ein Element verstanden, das in einem Massenanteil von mehr als 50 mg/kg in einem Tier oder einem Menschen vorhanden ist, insbesondere ausgewählt aus Natrium, Kalium, Magnesium, Calcium, Phosphor, Schwefel und Chlor.

Im Zusammenhang mit der vorliegenden Erfindung wird unter "Spurenelement" ein Element verstanden, das in einem Massenanteil von weniger als 50 mg/kg in einem Tier oder einem Menschen vorhanden ist, insbesondere ausgewählt aus Bor, Fluor, Silicium, Vanadium, Chrom, Mangan, Eisen, Cobalt, Kupfer, Zink, Arsen, Selen, Rubidium, Molybdän, Zinn und Iod.

Im Zusammenhang mit der vorliegenden Erfindung wird unter "Pflanzennährstoff" eine anorganische oder organische Verbindung verstanden, die von Pflanzen zu deren Lebenserhaltung aufgenommen und verstoffwechselt wird, insbesondere ein anorganisches und/oder organisches Salz, insbesondere ein Metallsalz. Pflanzennährstoffe liegen erfindungsgemäß bevorzugt in Düngemitteln vor.

Im Zusammenhang mit der vorliegenden Erfindung wird unter einem "organischen Salz" ein Salz verstanden, bei dem mindestens ein Anion oder Kation eine organische Verbindung ist, insbesondere ausgewählt aus Phosphor-, Stickstoff-, Magnesium-, Schwefel-, Calcium und Kalium-haltigen organischen Salzen.

Im Zusammenhang mit der vorliegenden Erfindung wird unter einer "organischen Verbindung" eine Kohlenstoff-haltige Verbindung verstanden.

Im Zusammenhang mit der vorliegenden Erfindung wird unter einem "anorganischen Salz" ein Nicht-Metall- oder Metallsalz verstanden, bei dem weder das Anion noch das Kation eine organische Verbindung ist, insbesondere ausgewählt aus Phosphor-, Stickstoff-, Magnesium-, Schwefel-, Calcium und Kalium-haltigen anorganischen Salzen.

Im Zusammenhang mit der vorliegenden Erfindung wird unter "Metallkomponente" mindestens ein Metallsalz und/oder Metalloxid verstanden.

Im Zusammenhang mit der vorliegenden Erfindung wird unter einem "Metallsalz" ein Salz verstanden, bei dem mindestens ein Anion oder Kation ein Metall ist, insbesondere ausgewählt aus Phosphor-, Stickstoff-, Magnesium-, Schwefel-, Calcium-, Natrium-, Chlor-, Bor-, Fluor-, Silicium-, Vanadium-, Chrom-, Mangan-, Eisen-, Cobalt-, Kupfer-, Zink-, Arsen-, Selen-, Rubidium-, Molybdän-, Zinn-, Iod- und Kalium-haltigen Metallsalzen.

Im Zusammenhang mit der vorliegenden Erfindung wird unter einem "Nicht-Metallsalz" ein Salz verstanden, bei dem weder das Anion noch das Kation ein Metall ist, insbesondere ausgewählt aus Phosphor-, Stickstoff-, Schwefel-, Chlor-, Bor-, Fluor- und Iod-haltigen Nicht-Metallsalzen.

Im Zusammenhang mit der vorliegenden Erfindung wird unter einem "Metalloxid" eine Verbindung aus mindestens einem Metall und mindestens einem Sauerstoffatom verstanden, insbesondere ausgewählt aus Magnesium-, Calcium-, Natrium-, Silicium-, Vanadium-, Chrom-, Mangan-, Eisen-, Cobalt-, Kupfer-, Zink-, Arsen-, Selen-, Rubidium-, Molybdän-, Zinn- und Kaliumoxiden.

Im Zusammenhang mit der vorliegenden Erfindung wird unter "rieselfähig" verstanden, dass das Agrarmittel eine feste Konsistenz und feste Form aufweist, die ohne weiteren Verarbeitungsschritt verwendet werden kann.

Im Zusammenhang mit der vorliegenden Erfindung werden unter "Analoga" strukturelle und funktionelle Analoga der jeweiligen chemischen Verbindung verstanden, also chemische Verbindungen mit struktureller und/oder funktioneller Ähnlichkeit.

Im Zusammenhang mit der vorliegenden Erfindung wird unter einem "Kurzzeitdüngemittel" ein Düngemittel verstanden, bei dem die Pflanzennährstoffe in sofort pflanzenverfügbarer Form vorliegen und unmittelbar nach der Anwendung wirken.

Im Zusammenhang mit der vorliegenden Erfindung wird unter einem "Langzeitdüngemittel" ein Düngemittel verstanden, bei dem die Wirkung beziehungsweise Verfügbarkeit der Pflanzennährstoffe erst nach Umsetzung im Boden einsetzt.

Im Zusammenhang mit der vorliegenden Erfindung wird unter einem "Rohmaterial" eine poröse sorptionsfähige organische Komponente, insbesondere Hanfschäben, vor Sorption des flüssigen Mediums verstanden.

Im Zusammenhang mit der vorliegenden Erfindung wird unter "zerkleinern" das Mahlen und/oder Zerschneiden von Partikeln einer bestimmten Durchschnittsgröße zu einer kleineren Durchschnittsgröße verstanden, insbesondere mithilfe einer Mühle, insbesondere einer Kugelmühle, insbesondere eine Schneidmühle, insbesondere eine Küchenmaschine mit Zerkleinerungsfunktion.

Im Zusammenhang mit der vorliegenden Erfindung wird unter dem Begriff "und/oder" verstanden, dass alle Mitglieder einer Gruppe, welche durch den Begriff "und/oder" verbunden sind, sowohl untereinander kumulativ in einer beliebigen Kombination, als auch alternativ zueinander dargestellt sind. Exemplarisch ist für den Ausdruck "A, B und/oder C", folgender Offenbarungsgehalt darunter zu verstehen: i) (A oder B oder C), oder ii) (A und B), oder iii) (A und C), oder iv) (B und C), oder v) (A und B und C), oder vi) (A und B oder C), oder vii) (A oder B und C), oder viii) (A und C oder B).

Im Zusammenhang mit der vorliegenden Erfindung addieren Einzelkomponenten oder Bestandteile einer Zusammensetzung, insbesondere des erfindungsgemäßen Agrarmittels oder einer seiner Komponenten, die quantitativ in relativer Form, insbesondere in Prozentangaben bestimmt sind, sofern nicht anders angegeben, vorzugsweise auf 100 Gew.-% der jeweils in Bezug genommenen Zusammensetzung beziehungsweise des Agrarmittels oder, sofern in Bezug genommen, einer Komponente davon, auf.

Weitere vorteilhafte Ausgestaltungen der Erfindung ergeben sich aus den Unteransprüchen.

Die vorliegende Erfindung wird in den folgenden Beispielen und den dazugehörigen Figuren näher erläutert, wobei diese nicht einschränkend zu verstehen sind.

Die Figuren zeigen:
Figur 1 Hanfschäben (poröse sorptionsfähige organische Komponente; Rohmaterial) verwendet in Beispielen 1 bis 3,
Figur 2 von links nach rechts den wässrigen Überstand gemäß Beispiel 1 nach einer Inkubationszeit von 1 h von 0,5 g Rohmaterial; 1,0 g Rohmaterial; 2,0 g Rohmaterial in 10 mL Wasser,
Figur 3 jeweils in der linken Schale beziehungsweise Falcon-Tube 2,0 g Rohmaterial und jeweils in der rechten Schale beziehungsweise Falcon-Tube 2,0 g Hanfschäben nach 1 h Inkubation in 10 mL Wasser als flüssiges Medium gemäß Beispiel 1,
Figur 4 die Auftragung der sorbierten Menge Wasser pro 1 g Rohmaterial gegen die Inkubationszeit bei einer Rohmaterial-Einwaage von 0,5 g (Symbol ▲), 1,0 g (Symbol ●) und 2,0 g (Symbol ■) inklusive Fehlerbalken der jeweiligen Messpunkte gemäß Beispiel 1,
Figur 5 rechts: Rohmaterial, in der Mitte: ein erstes gemahlenes Rohmaterial, gemahlen in einem Teflonbecher in der Kugelmühle bei 30 /s für 30 s und links: ein zweites gemahlenes Rohmaterial, gemahlen in einem Teflonbecher in der Kugelmühle bei 30 /s für 1 min, verwendet in Beispiel 2,
Figur 6 die Auftragung der sorbierten Menge Wasser pro 1 g Rohmaterial (Symbol A), erstes gemahlenes Rohmaterial (Symbol ●) oder zweites gemahlenes Rohmaterial (Symbol ■) gegen die Inkubationszeit gemäß Beispiel 2,
Figur 7 die Auftragung der sorbierten Menge Öl pro 1 g Rohmaterial gegen die Inkubationszeit bei einer Rohmaterial-Einwaage von 0,5 g (Symbol ▲), 1,0 g (Symbol ●) und 2,0 g (Symbol ■) gemäß Beispiel 3,
Figur 8 Rapsschalen (poröse sorptionsfähige organische Komponente) verwendet in Beispielen 6 und 7,
Figur 9 die Auftragung der sorbierten Menge Wasser pro 1 g Rapsschalen gegen die Inkubationszeit bei einer Rapsschalen-Einwaage von 0,5 g (Symbol ▲), 1,0 g (Symbol ●) und 2,0 g (Symbol ■) gemäß Beispiel 6,
Figur 10 von links nach rechts die Einwaage der Rapsschalen, 0,5 g, 1,0 g und 2,0 g, und den Wasserüberstand nach 60 Minuten Inkubationszeit gemäß Beispiel 6,
Figur 11 ein Balkendiagramm gemäß Beispiel 11, wobei ein Balken das Gewicht in Gramm (y-Achse) der zerkleinerten Hanfschäben zeigt und gegen die Zeit in Tagen (x-Achse) aufgetragen ist,
Figur 12 a) ein erstes erfindungsgemäßes Düngemittel gemäß Beispiel 13 bestehend aus Hanfschäben, DES (CV) und NaH₂PO₄; b) Querschnitt des ersten erfindungsgemäßen Düngemittels aus a); c) Rasterelektronenmikroskop-Aufnahme eines Querschnittes des ersten erfindungsgemäßen Düngemittels aus a); d) zweites erfindungsgemäßes Düngemittel gemäß Beispiel 13 bestehend aus Hanfschäben, DES (CH) und NaH₂PO₄; e) Querschnitt des zweiten erfindungsgemäßen Düngemittels aus d); f) Rasterelektronenmikroskop-Aufnahme eines Querschnittes des zweiten erfindungsgemäßen Düngemittels aus d),
Figur 13 ein Balkendiagramm gemäß Beispiel 13, wobei ein Balken das Gewicht in Gramm (y-Achse) zweier unterschiedlicher Einwaagen des ersten erfindungsgemäßen Düngemittels gemäß Beispiel 13 zeigt und gegen die Zeit in Tagen (x-Achse) aufgetragen ist,
Figur 14 ein Diagramm, bei dem die Wasseraufnahme zweier unterschiedlicher Einwaagen des ersten erfindungsgemäßen Düngemittels gemäß Beispiel 13 verglichen werden,
Figur 15 ein Balkendiagramm gemäß Beispiel 13, wobei ein Balken das Gewicht in Gramm (y-Achse) zweier unterschiedlicher Einwaagen des zweiten erfindungsgemäßen Düngemittels zeigt und gegen die Zeit in Tagen (x-Achse) aufgetragen ist,
Figur 16 ein Balkendiagramm gemäß Beispiel 13, wobei ein Balken das Gewicht in Gramm (y-Achse) zweier unterschiedlicher Einwaagen des zweiten erfindungsgemäßen Düngemittels zeigt und gegen die Zeit in Tagen (x-Achse) aufgetragen ist,
Figur 17 a) ein Balkendiagramm gemäß Beispiel 15, wobei ein Balken jeweils das Gewicht in Gramm (y-Achse) von Hanfschäben zweier unterschiedlicher Firmen zeigt und gegen die Zeit in Tagen (x-Achse) aufgetragen ist und b) ein Diagramm, das die Gewichtsänderung von zwei von unterschiedlichen Firmen (schwarze Punkte Firma 1, hellgraue Punkte Firma 2) bezogenen Hanfschäben sorbiert mit Wasser zeigt, und
Figur 18 a bis d) Mikroskopaufnahmen von erfindungsgemäßen porösen sorptionsfähigen organischen Komponenten, insbesondere Hanfschäben, zur Veranschaulichung der Poren, insbesondere Porengrößen.

### Beispiel 1: Wasser-Sorptionskapazität von Hanfschäben (Rohmaterial, ungemahlen)

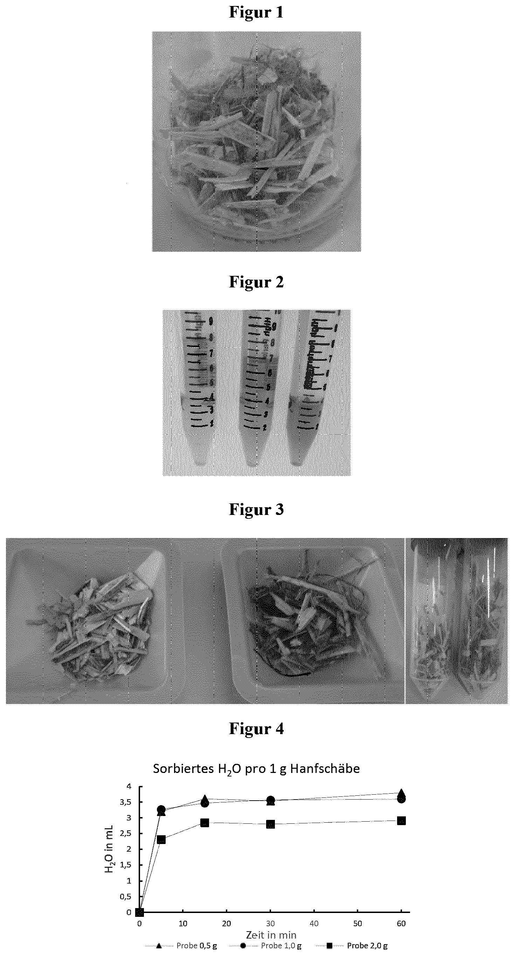

Das in Figur 1 dargestellte Rohmaterial (poröse sorptionsfähige organische Komponente) besteht aus Teilchen, die sich untereinander in Länge, Dicke und Breite unterscheiden. Zwischen den Teilchen sind vereinzelt Fasern enthalten. Für die Versuche wird die Gesamtheit an Hanfschäben (Teilchen und Fasern) verwendet. Das Material wird getrocknet und nicht vorbehandelt.

### Versuchsdurchführung:

Es werden jeweils 0,5 g, 1,0 g und 2,0 g des Rohmaterials abgewogen, in ein erstes Falcon-Tube überführt und 10 mL Wasser zugegeben. Nach einer Inkubationszeit von 5 min, 15 min, 30 min und 1 h werden die Hanfschäben vom Wasserüberstand (ÜS) durch Überführen des Wasserüberstands in ein zweites Falcon-Tube getrennt und die Hanfschäben gewogen sowie das Volumen des Wasserüberstands notiert. Anschließend erfolgt gegebenenfalls ein Zurückführen des Wasserüberstands zu den Hanfschäben und eine weitere Inkubation bis zu maximal 1 h.

Nachfolgend sind die Resultate von drei Versuchsreihen (Versuchsreihe 1 bis 3), die jeweils drei Versuche umfassen (Nummern 1 bis 9 linke Spalte der drei Tabellen), zu Beispiel 1 tabellarisch dargestellt, wobei jeweils in der ersten Spalte die Einwaage des Rohmaterials inklusive und exklusive des Gewichts des ersten Falcon-Tubes gezeigt ist Tabelle 1 bis 3). In den weiteren Spalten ist das Gewicht der Hanfschäben inklusive des Gewichts des ersten Falcon-Tubes (Gewicht) nach dem Überführen des Überstands in ein zweites Falcon-Tube sowie das Volumen des abgetrennten Überstands (ÜS) in dem zweiten Flacon-Tube nach der entsprechenden Inkubationszeit gezeigt:

**Tabelle 1: Versuchsreihe 1**

| Rohmaterial in g Mit/ ohne Falcon | Nach 5 min Gewicht/ ÜS | Nach 15 min Gewicht/ ÜS | Nach 30 min Gewicht/ ÜS | Nach 1 h Gewicht/ ÜS |
|---|---|---|---|---|
| 1: 13,25 g/ 0,5 g | 15,04 g/ 8,4 mL | 15,05 g/ 8,3 mL | 14,97 g/ 8,3 mL | 15,15 g/ 8,0 mL |
| 2: 13,72 g/ 1,0 g | 17,54 g/ 6,4 mL | 17,13 g/ 6,6 mL | 17,54 g/ 6,3 mL | 18,17 g/ 5,6 mL |
| 3: 14,74 g/ 2,0 g | 19,54 g/ 5,4 mL | 20,17 g/ 4,2 mL | 20,22 g/ 4,6 mL | 20,42 g/ 4,4 mL |

**Tabelle 2: Versuchsreihe 2**

| Rohmaterial in g Mit/ ohne Falcon | Nach 5 min Gewicht/ ÜS | Nach 15 min Gewicht/ ÜS | Nach 30 min Gewicht/ ÜS | Nach 1 h Gewicht/ ÜS |
|---|---|---|---|---|
| 4: 13,25 g/ 0,5 g | 14,84 g/ 8,5 mL | 15,03 g/ 8,4 mL | 14,82 g/ 8,5 mL | 14,99 g/ 8,3 mL |
| 5: 13,72 g/ 1,0 g | 16,72 g/ 7,2 mL | 17,14 g/ 6,6 mL | 17,27 g/ 6,5 mL | 17,15 g/ 6,6 mL |
| 6: 14,71 g/ 2,0 g | 19,41 g/ 5,4 mL | 20,13 g/ 4,5 mL | 20,10 g/ 4,6 mL | 20,30 g/ 4,4 mL |

**Tabelle 3: Versuchsreihe 3**

| Rohmaterial in g Mit/ ohne Falcon | Nach 5 min Gewicht/ ÜS | Nach 15 min Gewicht/ ÜS | Nach 30 min Gewicht/ ÜS | Nach 1 h Gewicht/ ÜS |
|---|---|---|---|---|
| 7: 13,27g/ 0,5 g | 15,14 g/ 8,3 mL | 15,57 g/ 7,9 mL | 15,57 g/ 7,9 mL | 15,36 g/ 8,0 mL |
| 8: 13,69/ 1,0 g | 17,24 g/ 6,6 mL | 17,43 g/ 6,4 mL | 17,21 g/ 6,5 mL | 16,92 g/ 7,0 mL |
| 9: 14,74/ 2,0 g | 19,54 g/ 5,3 mL | 20,64 g/ 4,2 mL | 20,73 g/ 4,0 mL | 21,05 g/ 3,7 mL |

Figur 2 zeigt von links nach rechts den wässrigen Überstand nach einer Inkubationszeit von 1 h von 0,5 g Rohmaterial; 1,0 g Rohmaterial; 2,0 g Rohmaterial in 10 mL Wasser,
Figur 3 zeigt jeweils in der linken Schale beziehungsweise Falcon-Tube 2,0 g Rohmaterial und jeweils in der rechten Schale beziehungsweise Falcon-Tube 2,0 g Hanfschäben nach 1 h Inkubation in 10 mL Wasser.

In Figur 4 ist die Auftragung der sorbierten Menge Wasser pro 1 g Rohmaterial gegen die Zeit dargestellt. Dabei entsprechen die Dreiecke der 0,5 g Rohmaterial-Einwaage, die Kreise der 1,0 g Rohmaterial-Einwaage und die Quadrate der 2,0 g Rohmaterial-Einwaage. Nach 15 Minuten tritt eine Sättigung der Sorption des Wassers durch das Rohmaterial auf. Pro Gramm Rohmaterial kann etwa 3 bis 3,5 mL Wasser sorbiert werden. Anhand der 2,0 g Rohmaterial-Einwaage ist zu erkennen, dass etwa 1 mL weniger Wasser sorbiert wird im Vergleich zu den 0,5 g und 1 g Rohmaterial-Einwaagen. Dies zeigt, dass eine gewisse Menge an WasserÜberschuss vorhanden sein muss, um die Aufnahmekapazität der porösen sorptionsfähigen Komponente optimal zu nutzen.

### Beispiel 2: Wasser-Sorptionskapazität gemahlener Hanfschäben (gemahlenes Rohmaterial)

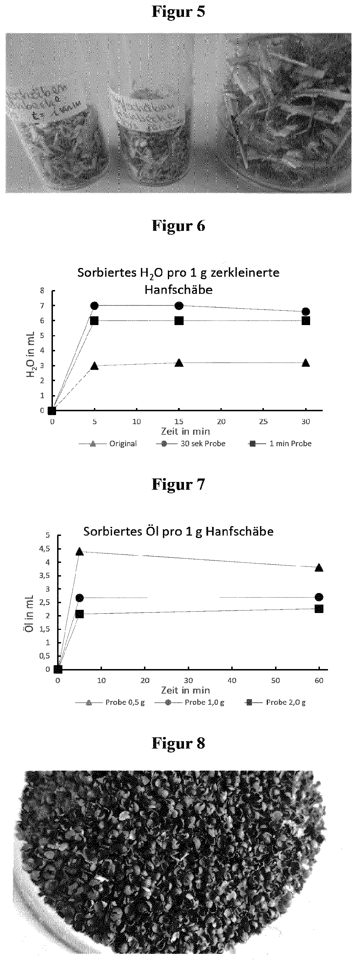

Das in Figur 5 abgebildete erste beziehungsweise zweite gemahlene Rohmaterial wurde aus dem in Figur 1 abgebildeten Rohmaterial durch Mahlen in einem Teflonbecher einer Kugelmühle bei 30 /s (30 Umdrehungen pro Sekunde) für 30 s (erstes Rohmaterial) beziehungsweise 1 min (zweites Rohmaterial) erhalten.

### Versuchsdurchführung:

Es werden jeweils 0,5 g des Rohmaterials, ersten gemahlenen Rohmaterials und zweiten gemahlenen Rohmaterials abgewogen, in ein erstes Falcon-Tube überführt und 10 mL Wasser zugegeben. Nach einer Inkubationszeit von 5 min, 15 min und 30 min werden die Hanfschäben vom Wasserüberstand (ÜS) durch Überführen des Wasserüberstands in ein zweites Falcon-Tube getrennt und die Hanfschäben gewogen sowie das Volumen des Wasserüberstands notiert. Anschließend erfolgt gegebenenfalls ein Zurückführen des Wasserüberstands zu den Hanfschäben und eine weitere Inkubation bis zu maximal 30 min.

Nachfolgend sind die Resultate der Versuche zu Beispiel 2 tabellarisch dargestellt, wobei in der ersten Spalte die Inkubationszeit des jeweiligen Rohmaterials gezeigt ist (Tabelle 4). In den weiteren Spalten ist das Gewicht der jeweiligen Hanfschäben inklusive des Gewichts des ersten Falcon-Tubes (Gewicht) nach dem Überführen des Überstands in ein zweites Falcon-Tube sowie das Volumen des abgetrennten Überstands (ÜS) in dem zweiten Falcon-Tube nach den entsprechenden Inkubationszeiten gezeigt:

**Tabelle 4:**

| **Inkubationszeit** | Rohmaterial Gewicht/ ÜS | erstes gemahlenes Rohmaterial Gewicht/ ÜS | zweites gemahlenes Rohmaterial Gewicht/ ÜS |
|---|---|---|---|
| 0 min | 13,28 g | 13,30 g | 13,36 g |
| 5 min | 14,86 g/ 8,5 mL | 16,27 g/ 6,5 mL | 16,27 g/ 7,0 mL |
| 15 min | 14,97 g/ 8,4 mL | 16,20 g/ 6,5 mL | 16,28 g/ 7,0 mL |
| 30 min | 14,83 g/ 8,4 mL | 15,94 g/ 6,7 mL | 16,19 g/ 7,0 mL |

Figur 5 zeigt rechts Rohmaterial, in der Mitte ein erstes gemahlenes Rohmaterial, gemahlen in einem Teflonbecher in der Kugelmühle bei 30 /s für 30 s und links ein zweites gemahlenes Rohmaterial, gemahlen in einem Teflonbecher in der Kugelmühle bei 30 /s für 1 min.

### In Figur 6 ist die Auftragung der sorbierten Menge Wasser pro 1 g Rohmaterial gegen die Zeit dargestellt. Dabei entsprechen die Dreiecke dem Rohmaterial, die Kreise dem ersten gemahlenen Rohmaterial und die Quadrate dem zweiten gemahlenen Rohmaterial. Die Sorptionskapazität des Rohmaterials mit Wasser konnte durch Beispiel 2 für das Rohmaterial bestätigt werden. Diese liegt bei etwa 3 mL Wasser pro 1 g Rohmaterial. Bei dem ersten und zweiten gemahlenen Rohmaterial fällt eine erhöhte Sorptionsfähigkeit für Wasser auf. Das erste und zweite gemahlene Rohmaterial kann unabhängig von der Mahldauer etwa 6 bis 7 mL Wasser pro Gramm gemahlenes Rohmaterial sorbieren.

### Beispiel 3: Öl-Sorptionskapazität von Hanfschäben (Rohmaterial)

### Versuchsdurchführung:

Es werden jeweils 0,5 g, 1,0 g und 2,0 g des Rohmaterials abgewogen, in ein erstes Falcon-Tube überführt und 10 mL Rapsöl zugegeben. Nach einer Inkubationszeit von 5 min und 1 h werden die Hanfschäben vom Rapsölüberstand (RÜS) durch Überführen des Rapsölüberstands in ein zweites Falcon-Tube getrennt und die Hanfschäben gewogen sowie das Volumen des Rapsölüberstands notiert. Anschließend erfolgt gegebenenfalls ein Zurückführen des Rapsölüberstands zu den Hanfschäben und eine weitere Inkubation bis zu maximal 1 h.

Nachfolgend sind die Resultate von drei Versuchsreihen (Versuchsreihe 1 bis 3), die aus jeweils drei Versuchen bestehen, zu Beispiel 3 tabellarisch dargestellt, wobei jeweils in der ersten Spalte die Einwaage des Rohmaterials inklusive und exklusive des Gewichts des ersten Falcon-Tubes gezeigt ist (Tabelle 5 bis 7). In den weiteren Spalten ist das Gewicht der Hanfschäben inklusive des Gewichts des ersten Falcon-Tubes (Gewicht) nach dem Überführen des Überstands in ein zweites Falcon-Tube sowie das Volumen des abgetrennten Überstands (RÜS) in dem zweiten Flacon-Tube nach der entsprechenden Inkubationszeit gezeigt:

**Tabelle 5: Versuchsreihe 1**

| Rohmaterial in g Mit/ ohne Falcon | Nach 5 min Gewicht/ RÜS | Nach 1 h Gewicht/ RÜS |
|---|---|---|
| 13,34 g/ 0,5 g | 15,09 g/ 6,9 mL | 14,76 g/ 7,4 mL |
| 13,32 g/ 0,5 g | 15,00 g/ 8,1 mL | 14,61 g/ 8,5 mL |
| 13,30 g/ 0,5 g | 14,52 g/ 8,4 mL | 14,58 g/ 8,4 mL |

**Tabelle 6: Versuchsreihe 2**

| Rohmaterial in g Mit/ ohne Falcon | Nach 5 min Gewicht/ RÜS | Nach 1 h Gewicht/ RÜS |
|---|---|---|
| 13,77 g/ 1,0 g | 16,01 g/ 7,0 mL | 15,77 g/ 7,4 mL |
| 13,77 g/ 1,0 g | 15,86 g/ 8,0 mL | 16,23 g/ 7,4 mL |
| 13,80 g/ 1,0 g | 16,23 g/ 7,0 mL | 16,05 g/ 7,1 mL |

**Tabelle 7: Versuchsreihe 3**

| Rohmaterial in g Mit/ ohne Falcon | Nach 5 min Gewicht/ RÜS | Nach 1 h Gewicht/ RÜS |
|---|---|---|
| 14,85 g/ 2,0 g | 18,30 g/ 6,0 mL | 18,76 g/ 5,3 mL |
| 14,80 g/ 2,0 g | 18,69 g/ 5,8 mL | 18,72 g/ 5,8 mL |
| 14,77 g/ 2,0 g | 18,46 g/ 5,8 mL | 18,88 g/ 5,3 mL |

In Figur 7 ist die Auftragung der sorbierten Menge Öl pro 1 g Rohmaterial gegen die Zeit dargestellt. Dabei entsprechen die Dreiecke der 0,5 g Rohmaterial-Einwaage, die Kreise der 1,0 g Rohmaterial-Einwaage und die Quadrate der 2,0 g Rohmaterial-Einwaage. Im Rahmen der Abweichung ergibt sich eine Menge von 2 bis 3 mL Rapsöl, das pro Gramm Hanfschäben sorbiert werden kann.

### Beispiel 4 Herstellung DES

Ausgangstoffe A und B: Cholinchlorid und Urea; Mol-%-Verhältnis 33 Mol-% Cholinchlorid zu 67 Mol-% Urea (bezogen auf Gesamtstoffmenge DES).

### Versuchsdurchführung:

Es werden jeweils 5 mmol, 10 mmol, 15 mmol und 20 mmol Gesamtstoffmenge der Ausgangsstoffe Cholinchlorid und Urea abgewogen und in Schottflaschen überführt. Nach einer Inkubationszeit von 30 min bei 100 °C in einem Sandbad und 300 /min wird das DES als klare Flüssigkeit bei Raumtemperatur erhalten.

Nachfolgend ist eine Übersicht über die Einwaage der Ausgangsstoffe für Beispiel 4 tabellarisch dargestellt, wobei in der ersten Spalte die Gesamtstoffmenge der Ausgangstoffe A und B, Cholinchlorid und Urea, gezeigt ist (Tabelle 8). In den weiteren Spalten ist von links nach rechts jeweils die Stoffmenge und Einwaage von Cholinchlorid und Urea sowie die Gesamteinwaage gezeigt:

**Tabelle 8:**

| Gesamtstoffmenge | Stoffmenge Cholinchlorid | Stoffmenge Urea | Einwaage Cholinchlorid | Einwaage Urea | Einwaage gesamt |
|---|---|---|---|---|---|
| 5 mmol | 1,67 mmol | 3,33 mmol | 0,232 g | 0,200 g | 0,432 g |
| 10 mmol | 3,33 mmol | 6,67 mmol | 0,464 g | 0,400 g | 0,864 g |
| 15 mmol | 5 mmol | 10 mmol | 0,698 g | 0,600 g | 1,298 g |
| 20 mmol | 6,67 mmol | 13,33 mmol | 0,928 g | 0,800 g | 1,728 g |

### Beispiel 5: DES-Sorptionskapazität von gemahlenen Hanfschäben (gemahlenes Rohmaterial)

### Versuchsdurchführung:

Es werden jeweils 0,5 g gemahlenes Rohmaterial in Form von Hanfschäben abgewogen und zu 5, 10, 15 oder 20 mmol des in Beispiel 4 hergestellten DES, welches in einem ersten Falcon-Tube vorliegt, zugegeben. Nach einer Inkubationszeit von 30 min bei Raumtemperatur werden die Hanfschäben vom DES-Überstand (DES-ÜS) durch Überführen der Hanfschäben in ein zweites Falcon-Tube getrennt und die Hanfschäben ein erstes Mal gewogen. Anschließend wird zu den Hanfschäben 10 mL Wasser zugegeben und das Gemisch durch Schütteln gemischt, was einem Waschen der Hanfschäben entspricht. Danach wird der Wasserüberstand (ÜS) durch Überführen des Wasserüberstands in ein drittes Falcon-Tube getrennt und die Hanfschäben ein zweites Mal nach Trocknung über Nacht gewogen.

Nachfolgend sind die Resultate der Versuche zu Beispiel 5 tabellarisch dargestellt, wobei in der ersten Zeile die jeweilige Stoffmenge des eingesetzten DES gezeigt ist (Tabelle 9). In den weiteren Zeilen sind Einwaagen des Rohmaterials und der Hanfschäben sowie das Gewicht des sorbierten DES gezeigt.

**Tabelle 9:**

| Stoffmenge DES | 5 mmol | 10 mmol | 15 mmol | 20 mmol |
|---|---|---|---|---|
| Einwaage gemahlenes Rohmaterial | 0,500 g | 0,500 g | 0,500 g | 0,500 g |
| Erste Einwaage (Nassgewicht Hanfschäben + DES) | 0,860 g | 1,255 g | 1,492 g | 1,968 g |
| Gewicht sorbiertes DES nach dem ersten Wiegen | 0,360 g | 0,755 g | 0,992 g | 1,468 g |
| Zweite Einwaage (Trockengewicht Hanfschäben + DES nach dem Waschen mit Wasser) | 0,858 g | 1,245 g | 0,909 g | 1,135 g |
| Gewicht sorbiertes DES nach dem zweiten Wiegen (Waschen mit Wasser) | 0,358 g | 0,745 g | 0,409 g | 0,635 g |

Bei der Inkubation mit dem gemahlenen Rohmaterial bleibt das DES klar und flüssig und verteilt sich auf der Oberfläche des gemahlenen Rohmaterials und haftet daran. Bei den Proben mit 5 mmol und 10 mmol DES bleibt nahezu kein DES-Überstand zurück. Bei 15 mmol und 20 mmol DES wird das DES großteils sorbiert, es bleibt aber eine deutlich sichtbare Menge an DES zurück. Dies spiegelt sich auch im Vergleich des Gewichts von vor und nach dem Waschen mit Wasser wider. Bei den Proben mit 5 mmol und 10 mmol DES wurde durch das Mischen mit Wasser kein DES von den Hanfschäben entfernt, es wurde vollständig sorbiert. Bei den Proben mit 15 mmol und 20 mmol DES reduziert sich das Gewicht der Hanfschäben um ca. 600 beziehungsweise 800 mg im Vergleich zu vor dem Waschen mit Wasser. Dies zeigt, dass durchschnittlich pro 0,5 g Rohmaterial maximal etwa 0,6 bis 0,7 g DES sorbiert werden kann. Dies entspricht etwa 10 mmol DES.

### Beispiel 6: Zusammenfassung experimenteller Studien zu Hanfschäben als poröse sorptionsfähige organische Komponente

In diesem Beispiel werden die experimentellen Studien zum Einfluss der Zerkleinerung des Rohmaterials (Hanfschäben; poröse sorptionsfähige organische Komponente) auf die Sorptionsfähigkeit, insbesondere Flüssigkeitsaufnahme, eines Mediums, insbesondere flüssigen Mediums, insbesondere eines stark eutektischen Lösungsmittels (DES), Wasser oder Öl, zusammengefasst.

In Tabelle 10 wird die Sorption verschiedener flüssiger Medien von 0,5 g nicht zerkleinerten oder zerkleinerten Hanfschäben zusammengefasst. Neben den nicht zerkleinerten Hanfschäben wurden auch auf unterschiedliche Art zerkleinerte Hanfschäben (Kugelmühle oder Küchenmaschine und anschließendes Sieben) untersucht. Das Zerkleinern des Rohmaterials zeigte eine deutliche Steigerung der Flüssigkeitsaufnahme, weswegen bei den Versuchen mit DES zerkleinerte (Küchenmaschine + Sieben) Hanfschäben verwendet wurden. In der linken Spalte ist das jeweilige von den Hanfschäben sorbierte Medium sowie die Hanfschäben und ihre Zerkleinerung in Klammern dahinter gezeigt. In der rechten Spalte ist die Aufnahmemenge des sorbierten Mediums durch die Hanfschäben gezeigt.
- sorbierte Medien: Wasser, Öl und verschiedene DES
- DES: Cholinchlorid:Harnstoff 67 Mol-%:33 Mol-%; Vanillin:Cholinchlorid 67 Mol-%:33 Mol-%; Glucose:Harnstoff 18 Mol-%:82 Mol-% (jeweils Bezogen auf Gesamtstoffmenge DES) und Durchführung analog Beispiel 4 und 5

**Tabelle 10: Überblick der Sorption verschiedener flüssiger Medien von 0,5 g Hanfschäben.**

| **Sorbiertes Medium + Hanfschäben (behandelt/unbehandelt)** | **Aufnahmemenge** |
|---|---|
| Wasser + Hanfschäben (nicht zerkleinert) | 1,5 mL |
| Wasser + Hanfschäben (zerkleinert in Kugelmühle) | 3,5 mL |
| Wasser + Hanfschäben (zerkleinert in Küchenmaschine + Sieben für homogene Partikelgröße) | 2,5 mL |
| Öl + Hanfschäben (nicht zerkleinert) | 2 mL |
| DES (Cholinchlorid-Harnstoff) + Hanfschäben (zerkleinert Küchenmaschine + Sieben) | 0,6 g |
| DES (Cholinchlorid-Vanillin) + Hanfschäben (zerkleinert Küchenmaschine + Sieben | 1,0 g |
| DES (Glucose-Harnstoff) + Hanfschäben (zerkleinert Küchenmaschine + Sieben | 0,3 g |

Je nach Verarbeitung der Hanfschäben entspricht deren Wasseraufnahmekapazität der 3- bis 7-fachen Menge bzw. 300 bis 700 % des Eigengewichts.

### Beispiel 7: Wasser-Sorptionskapazität von Rapsschalen (ungemahlenes Rohmaterial)

### Versuchsdurchführung:

Es werden jeweils 0,5 g, 1,0 g und 2,0 g der in Figur 8 dargestellten Rapsschalen abgewogen, in ein erstes Falcon-Tube überführt und 10 mL Wasser zugegeben. Nach einer Inkubationszeit von 5 min, 15 min und 1 h werden die Rapsschalen vom Wasserüberstand (ÜS) durch 2-minütiges Zentrifugieren bei 4000 /min (4000 Umdrehungen pro Minute) und anschließendem Überführen des Wasserüberstands in ein zweites Falcon-Tube getrennt und die Rapsschalen gewogen sowie das Volumen des Wasserüberstands notiert. Anschließend erfolgt gegebenenfalls ein Zurückführen des Wasserüberstands zu den Rapsschalen und eine weitere Inkubation bis zu maximal 1 h.

Bei der 2,0 g Rapsschalen-Einwaage wurden die ersten 10 mL Wasser vollständig sorbiert und deshalb nach 5 min Inkubationszeit weitere 10 mL Wasser zugegeben.

Nachfolgend sind die Resultate von drei Versuchsreihen (Versuchsreihe 1 bis 3), die aus jeweils drei Versuchen bestehen, zu Beispiel 6 tabellarisch dargestellt, wobei jeweils in der ersten Spalte die Einwaage der Rapsschalen inklusive und exklusive des Gewichts des ersten Falcon-Tubes gezeigt ist (Tabelle 11 bis 13). In den weiteren Spalten ist das Gewicht der Rapsschalen inklusive des Gewichts des ersten Falcon-Tubes (Gewicht) nach dem Überführen des Überstands in ein zweites Falcon-Tube sowie das Volumen des abgetrennten Überstands (ÜS) in dem zweiten Flacon-Tube nach der entsprechenden Inkubationszeit gezeigt. Das Volumen des Überstands nach 5 min bei den 2,0 g Rapsschalen-Einwaagen beträgt 0,0 mL, da die 10 mL Wasser vollständig sorbiert wurden. Danach wurden weitere 10 mL Wasser zugegeben, auf die sich die Volumenangaben der Spalten nach 15 min und 1 h Inkubationszeit beziehen.

**Tabelle 11: Versuchsreihe 1**

| Rapsschalen in g Mit/ ohne Falcon | Nach 5 min Gewicht/ ÜS | Nach 15 min Gewicht/ ÜS | Nach 1 h Gewicht/ ÜS |
|---|---|---|---|
| 13,32 g/ 0,5 g | 16,26 g/ 7,0 mL | 16,36 g/ 7,0 mL | 16,27 g/ 7,0 mL |
| 13,72 g/ 1,0 g | 18,89 g/ 4,5 mL | 18,60 g/ 5,0 mL | 18,59 g/ 5,0 mL |
| 14,78 g/ 2,0 g | 24,58 g/ 0,0 mL | 24,89 g/ 9,9 mL | 25,17 g/ 9,3 mL |

**Tabelle 12: Versuchsreihe 2**

| Rapsschalen in g Mit/ ohne Falcon | Nach 5 min Gewicht/ ÜS | Nach 15 min Gewicht/ ÜS | Nach 1 h Gewicht/ ÜS |
|---|---|---|---|
| 13,24 g/ 0,5 g | 16,08 g/ 7,0 mL | 16,00 g/ 7,0 mL | 15,89 g/ 7,3 mL |
| 13,73 g/ 1,0 g | 18,75 g/ 5,0 mL | 18,79 g/ 5,0 mL | 18,90 g/ 4,8 mL |
| 14,73 g/ 2,0 g | 24,53 g/ 0,0 mL | 25,36 g/ 9,3 mL | 25,46 g/ 9,0 mL |

**Tabelle 13: Versuchsreihe 3**

| Rapsschalen in g Mit/ ohne Falcon | Nach 5 min Gewicht/ ÜS | Nach 15 min Gewicht/ ÜS | Nach 1h Gewicht/ ÜS |
|---|---|---|---|
| 13,32 g/ 0,5 g | 16,25 g/ 7,0 mL | 16,28 g/ 7,0 mL | 16,16 g/ 7,2 mL |
| 13,73 g/ 1,0 g | 19,16 g/ 4,5 mL | 19,02 g/ 4,8 mL | 19,03 g/ 4,6 mL |
| 14,72 g/ 2,0 g | 24,58 g/ 0,0 mL | 25,89 g/ 8,8 mL | 25,70 g/ 8,5 mL |

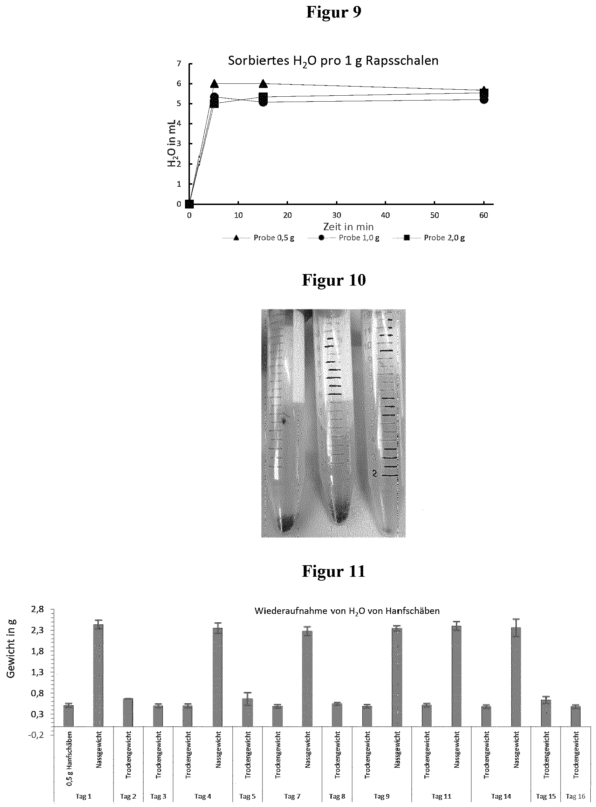

In Figur 9 ist die Auftragung der sorbierten Menge Wasser pro 1 g Rapsschalen gegen die Zeit dargestellt. Dabei entsprechen die Dreiecke der 0,5 g Rapsschalen-Einwaage, die Kreise der 1,0 g Rapsschalen-Einwaage und die Quadrate der 2,0 g Rapsschalen-Einwaage. Rapsschalen besitzen eine schnelle Sorptionsfähigkeit, was daran zu erkennen ist, dass innerhalb von etwa 5 Minuten eine Sättigung der Aufnahmekapazität von Wasser auftritt und das sorbierte Wasser über mindestens 60 Minuten in den Rapsschalen sorbiert vorliegt. Pro Gramm Rapsschalen können etwa 5 bis 6 mL Wasser sorbiert werden.

In Figur 10 ist von links nach rechts die Einwaage der Rapsschalen, 0,5 g, 1,0 g und 2,0 g, und der Wasserüberstand nach 60 Minuten Inkubationszeit zu sehen. Durch die Rapsproteinreste an den Rapsschalen verfärbt sich der Wasserüberstand gelb.

### Beispiel 8: Beispiel-Rezept für ein erfindungsgemäßes Agrarmittel ohne Zusätze:

Ausgangsstoff A: Cholinchlorid, Ausgangsstoff B: Urea; Mol-%-Verhältnis: 33 Mol-% Cholinchlorid zu 67 Mol-% Urea (bezogen auf Gesamtstoffmenge DES),
Gesamtstoffmenge DES: 30 mmol, (Einwaage: 1,39 g Cholinchlorid + 1,2 g Urea),
Poröse sorptionsfähige organische Komponente: 1,5 g gemahlene und gesiebte Hanfschäben

### Versuchsdurchführung:

Es werden 1,5 g Hanfschäben abgewogen, welche zuvor gemahlen und gesiebt wurden. Anschließend werden 1,39 g Cholinchlorid und 1,2 g Urea abgewogen und in eine Schottflasche überführt, in der das DES nach einer Inkubationszeit von 30 min bei 100 °C in einem Sandbad und 500 /min als klare Flüssigkeit bei Raumtemperatur erhalten wird. Anschließend werden 1,5 g der gemahlenen und gesiebten Hanfschäben zugegeben. Nach einer Inkubationszeit von 15 min bei Raumtemperatur wird das erfindungsgemäße Agrarmittel erhalten.

### Beispiel 9: Beispiel-Rezept für ein erfindungsgemäßes Agrarmittel mit Phosphat als Pflanzennährstoff:

Ausgangsstoff A: Cholinchlorid, Ausgangsstoff B: Vanillin; Mol-%-Verhältnis: 33 Mol-% Cholinchlorid zu 67 Mol-% Vanillin (bezogen auf Gesamtstoffmenge DES),
Gesamtstoffmenge DES: 1 mol (Einwaage: 46 g Cholinchlorid + 101 g Vanillin),
Poröse sorptionsfähige organische Komponente: 50 g gemahlene und gesiebte Hanfschäben
Pflanzennährstoff: 15 g Natriumdihydrogenphosphat

### Versuchsdurchführung:

Es werden 50 g Hanfschäben abgewogen, welche zuvor gemahlen und gesiebt wurden. Anschließend werden 46 g Cholinchlorid und 101 g Vanillin abgewogen und in ein Becherglas überführt, in dem das DES nach einer Inkubationszeit von 90 min bei 100 °C in einem Sandbad und 200 /min als klare Flüssigkeit erhalten wird. Dazu werden 15 g Natriumdihydrogenphosphat gegeben und für 60 min bei 100 °C und 170 /min in einem Sandbad gelöst beziehungsweise homogen verteilt. Anschließend werden 50 g der gemahlenen und gesiebten Hanfschäben zugegeben. Nach einer Inkubationszeit von 15 min bei Raumtemperatur und stetigem Rühren wird das erfindungsgemäße Agrarmittel erhalten und über Nacht getrocknet.

### Beispiel 10: Beispiel-Rezept für ein erfindungsgemäßes Agrarmittel mit Eisen als Pflanzennährstoff:

Ausgangsstoff A: Cholinchlorid, Ausgangsstoff B: Urea; Mol-%-Verhältnis: 33 Mol-% Cholinchlorid zu 67 Mol-% Urea (bezogen auf Gesamtstoffmenge DES),
Gesamtstoffmenge DES: 30 mmol, (Einwaage: 1,39 g Cholinchlorid + 1,2 g Urea),
Poröse sorptionsfähige organische Komponente: 1,5 g gemahlene und gesiebte Hanfschäben
Pflanzennährstoff: 150 mg Eisensulfat Heptahydrat

### Versuchsdurchführung:

Es werden 1,5 g Hanfschäben abgewogen, welche zuvor gemahlen und gesiebt wurden. Anschließend werden 1,39 g Cholinchlorid und 1,2 g Urea abgewogen und in eine Schottflasche überführt, in der das DES nach einer Inkubationszeit von 30 min bei 100 °C in einem Sandbad und 500 /min als klare Flüssigkeit bei Raumtemperatur erhalten wird. Dazu werden 150 mg Eisensulfat Heptahydrat gegeben und für eine halbe Stunde bei 100 °C und 500 /min im Sandbad gelöst beziehungsweise homogen verteilt. Anschließend werden 1,5 g der gemahlenen und gesiebten Hanfschäben zugegeben. Nach einer Inkubationszeit von 15 min bei Raumtemperatur und stetigem Rühren wird das erfindungsgemäße Agrarmittel erhalten.

### Beispiel 11: Wiederholte Messung der Wasser-Sorptionskapazität gemahlener Hanfschäben (gemahlenes Rohmaterial)

### Versuchsdurchführung:

Die Reversibilität der Sorption von Wasser der zerkleinerten Hanfschäben ist in Tabelle 14 gezeigt. Eine definierte Menge an zerkleinerten Hanfschäben (Probe 1 bis 3 jeweils 0,5 g) wurde iterativ mit 10 mL Wasser inkubiert. Die in Tabelle 14 jeweils angegebenen Mengen Wasser wurden von den zerkleinerten Hanfschäben sorbiert. Die die sorbierte Menge Wasser aufweisenden zerkleinerten Hanfschäben wurden anschließend bis zu ihrem Ausgangsgewicht, also bis zu dem Gewicht vor der Sorption der in Tabelle 14 angegebenen Menge Wasser, bei Raumtemperatur getrocknet. Dies dauerte zwei Tage. Anschließend wurden die getrockneten zerkleinerten Hanfschäben wieder mit 10 mL Wasser inkubiert und danach wieder getrocknet. Insgesamt wurden sechs Sorptions-Trocknungsdurchgänge durchgeführt. Die Ergebnisse sind in Figur 11 in einem Balkendiagramm zusammengefasst, wobei ein Balken das Gewicht in Gramm (y-Achse) der zerkleinerten Hanfschäben zeigt und gegen die Zeit in Tagen (x-Achse) aufgetragen ist. Ein Nassgewicht-Balken zeigt das Gewicht der Hanfschäben direkt nach der Sorption von Wasser und ein Trockengewicht-Balken zeigt das Gewicht der Hanfschäben während des Trocknens an Luft an. Die Reversibilität der Wasseraufnahme, die für diverse Anwendungen genutzt werden kann, wurde durch Beispiel 11 bestätigt.

Nachfolgend sind die Resultate der Versuche zu Beispiel 11 tabellarisch dargestellt (Tabelle 14).

**Tabelle 14: Wasseraufnahme in mL von Hanfschäben-Proben bei mehrmaligem Trocknen und erneuter Sorption.**

| | **Probe 1** | **Probe 2** | **Probe 3** |
|---|---|---|---|
| 1. Sorption von Wasser | 2,1 mL | 2,0 mL | 2,2 mL |
| 2. Sorption von Wasser | 1,9 mL | 1,9 mL | 2,0 mL |
| 3. Sorption von Wasser | 2,0 mL | 1,9 mL | 2,0 mL |
| 4. Sorption von Wasser | 1,9 mL | 2,0 mL | 1,9 mL |
| 5. Sorption von Wasser | 1,8 mL | 2,2 mL | 1,9 mL |
| 6. Sorption von Wasser | 1,9 mL | 1,9 mL | 1,9 mL |

### Beispiel 12: Sorption der Hanfschäben von DES oder Wasser - Untersuchungen zum möglichen Schimmelbefall

Um die Lagerfähigkeit von erfindungsgemäßen Agrarmitteln einschätzen zu können, wurden Langzeitversuche durchgeführt. In einem ersten Versuch wurde von Hanfschäben DES Glucose/Harnstoff, 18 Mol-%: 82 Mol-% sorbiert und offen bei Raumtemperatur für 22 Monate gelagert. Dabei wurde kein Schimmelbefall beobachtet.

In einem zweiten Versuch wurden mit Wasser sorbierte Hanfschäben bei 37 °C 12 Monate gelagert, wobei ebenfalls kein Schimmelbefall beobachtet wurde.

Auf Basis dieser Ergebnisse kann von einer guten Lagerfähigkeit der Materialien ausgegangen werden. Diese exklusive Bio-Funktionalität ist ein weiterer Vorteil des erfindungsgemäßen Agrarmittels.

### Beispiel 13: Sorption von DES und Phosphat von Hanfschäben und anschließender Inkubation mit Wasser

### Beispiel 13.1: Sorption von DES und Phosphat von Hanfschäben zur Herstellung von erfindungsgemäßem Düngemittel

Neben Stickstoff spielt Phosphor eine wichtige Rolle in Düngemitteln. Deswegen wurden zwei erfindungsgemäße Düngemittel aus Hanfschäben und jeweils einem sorbierten DES sowie 10 Gew-% Natriumdihydrogenphosphat (bezogen auf das DES) als Pflanzennährstoff untersucht. Um die Einflüsse von unterschiedlichen DES auf die Qualität des erfindungsgemäßen Düngemittels besser zu verstehen, wurden zwei DES mit unterschiedlichen Eigenschaften, Cholinchlorid-Harnstoff, nachfolgend DES (CH), 67 Mol-%:33 Mol-%, und Cholinchlorid-Vanillin, nachfolgend DES (CV), 33 Mol-%:67 Mol-%, für die Experimente ausgewählt.

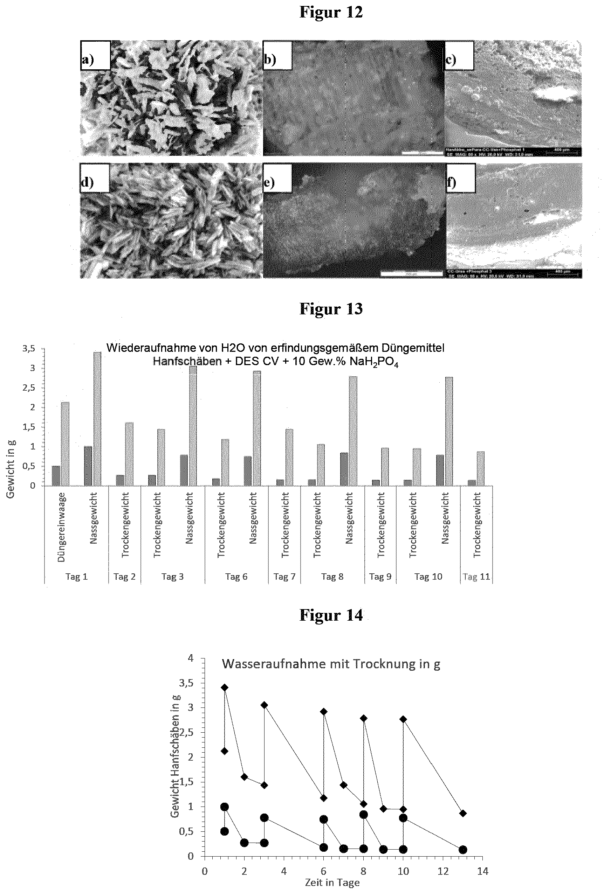

Das erste erfindungsgemäße Düngemittel, Hanfschäben + DES (CV) + 10 Gew-% NaH₂PO₄ (Figur 12 a bis c)), weist eine feste Konsistenz auf. Die Hanfschäben sorbieren das DES und NaH₂PO₄ vollständig und sind komplett mit einer Schicht DES und NaH₂PO₄ ummantelt, was die Aufnahmen eines Querschnittes der Hanfschäben unter dem Mikroskop bestätigen (Figur 12b). Das erste erfindungsgemäße Düngemittel wurde hinsichtlich ihrer Zusammensetzung und Haptik analysiert.

Die Probe zeigte eine höhere Schüttdichte im Vergleich zu unbehandelten Hanfschäben und verbesserte Eigenschaften für die Ausbringung (homogeneres Streubild, größere Wurfweite, geringere Staubbildung). Aus 50 g Hanfschäben wurden 212 g des ersten erfindungsgemäßen Düngemittels erhalten, also aufweisend Hanfschäben, DES (CV) und NaH₂PO₄.

Das zweite erfindungsgemäße Düngemittel (Figur 12 d bis f)), Hanfschäben + DES (CH) + 10 Gew-% NaH₂PO₄ ist aufgrund des bei Raumtemperatur flüssigen DES feucht und klebt stärker zusammen als das erste erfindungsgemäße Düngungsmittel. Aus 50 g Hanfschäben wurden insgesamt 150 g des zweiten erfindungsgemäßen Düngemittels erhalten, also aufweisend Hanfschäben, DES (CH) und NaH₂PO₄.

Um eine ähnliche Haptik wie das erste erfindungsgemäße Düngungsmittel zu erhalten, müsste der Schmelzpunkt des DES erhöht werden. Dazu könnten die Bestandteile des DES oder die Stoffmengenverhältnisse angepasst werden.

Zusätzlich wurden Querschnitte der beiden erfindungsgemäßen Düngemittel am Rasterelektronenmikroskop untersucht. Auf den Bildern ist deutlich zu erkennen, dass für verschiedene DES das Sorptionsverhalten unterschiedlich ist. Während das Hanfschäben-Porengerüst bei Verwendung des DES (CH) komplett durchdrungen und dadurch nicht mehr zu erkennen ist (Figur 12f), ist bei Verwendung des DES (CV) dieses nicht bis in die Mitte der Hanfschäben vorgedrungen, weshalb das Porengerüst deutlich erkennbar ist (Figur 12c).

REM-EDX (Rasterelektronenmikroskopie mit Energiedispersive Röntgenspektroskopie) Aufnahmen haben zudem gezeigt, dass bei beiden erfindungsgemäßen Düngemitteln der Phosphat-Anteil am Außenrand der Hanfschäben höher ist als im Inneren der Hanfschäben, da die Aufnahme der DES-Phosphatmischung zeigte, dass diese keine komplett homogene Mischung ist.

### Beispiel 13.2: Reversible Wasseraufnahme Hanfschäben + DES + 10 Gew.% NaH₂PO₄

Nachfolgend sind die Ergebnisse von Versuchen zur Untersuchung der reversiblen Wasseraufnahme von zwei Proben umfassend Hanfschäben + DES + 10 Gew.% NaH₂PO₄, also die beiden erfindungsgemäßen Düngemittel gemäß Beispiel 13.1, dargestellt.

Eine unterschiedliche Gewichtsabnahme bei Inkubation der zwei Düngemittelmaterialien mit Wasser und anschließenden Trocknungsschritten verdeutlicht, dass die Wahl des DES auch die Abgabe des sorbierten DES und Pflanzennährstoffes des erfindungsgemäßen Düngemittels beeinflussen kann (siehe Figur 13). Bei der ersten Inkubation wurden bei beiden Proben nur geringe Mengen Wasser aufgenommen, da womöglich die Hanfschäben nahezu vollständig mit der DES-Phosphatmischung gesättigt sind. Bei weiteren Behandlungsschritten nimmt die aufgenommene Menge an Wasser je nach erfindungsgemäßem Düngemittel unterschiedlich stark zu. Dies zeigt, dass das DES dabei aus den Hanfschäben ausgewaschen beziehungsweise abgegeben wird. Dabei wäscht sich das DES (CH) schneller aus den Hanfschäben, bereits nach 1 - 2 Waschschritten, im Vergleich zum DES (CV), das auch nach 5 Waschschritten noch nicht vollständig aus den Hanfschäben gewaschen wurde. Dies macht deutlich, dass die Auswahl der Ausgangsstoffe die Eigenschaften der Düngemittel enorm beeinflusst. Es kann dadurch unter anderem abgestimmt werden, wie schnell die sorbierten DES und Pflanzennährstoffe ausgewaschen werden. Die Hanfschäben als Basis zeigen den weiteren Vorteil, dass, nachdem die DES und Pflanzennährstoffe allmählich abgegeben wurden, die Hanfschäben bis zur Verrottung noch als reversibler Wasserspeicher fungieren und schließlich einen Beitrag zur Humusschicht im Boden liefern.

### Beispiel 13.2.1: Reversible Wasseraufnahme Hanfschäben + DES (CV) + 10 Gew.% NaH₂PO₄ (erstes erfindungsgemäßes Düngemittel)

Figur 13 zeigt ein Balkendiagramm, wobei ein Balken das Gewicht in Gramm (y-Achse) zweier unterschiedlicher Einwaagen des ersten erfindungsgemäßen Düngemittels zeigt und gegen die Zeit in Tagen (x-Achse) aufgetragen ist. Ein Nassgewicht-Balken zeigt das Gewicht des ersten erfindungsgemäßen Düngemittels direkt nach der Aufnahme von Wasser des eingesetzten Düngemittels mit DES und Pflanzennährstoff, ein Trockengewicht-Balken zeigt das Gewicht des ersten erfindungsgemäßen Düngemittels während des Trocknens an Luft an.

In Figur 14 werden ebenfalls wie in Figur 13 gezeigt, zwei unterschiedliche Einwaagen des ersten erfindungsgemäßen Düngemittels verglichen. Dabei entspricht Probe 1 (Dunkelgrauer Balken in Figur 13 und Kreissymbol in Figur 14) 0,5 g des erfindungsgemäßen Düngermittels (entspricht 0,12 g Hanfschäben) und Probe 2 (Hellgrauer Balken in Figur 13 und Vierecksymbol in Figur 14) 2,12 g des ersten erfindungsgemäßen Düngemittels (entspricht 0,5 g Hanfschäben).

Probe 2 ist mit den bisherigen Wasseraufnahmeversuchen (vergleiche beispielsweise Beispiele 1 und 11) aufgrund gleicher Hanfschäben-Einwaagen vergleichbar.

### Beispiel 13.2.2: Reversible Wasseraufnahme Hanfschäben + DES (CH) + 10 Gew.% NaH₂PO₄ (zweites erfindungsgemäßes Düngemittel):

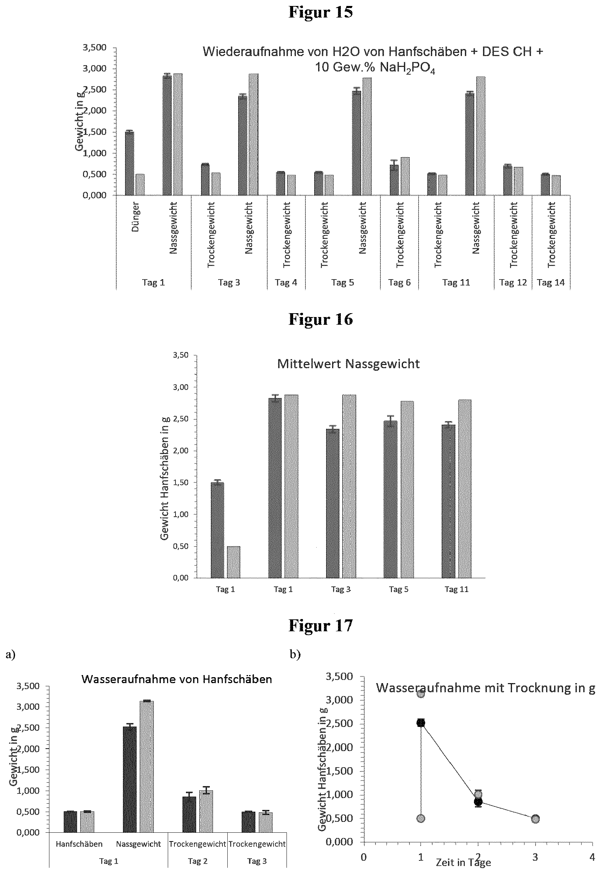

Figur 15 zeigt ein Balkendiagramm, wobei ein Balken das Gewicht in Gramm (y-Achse) zweier unterschiedlicher Einwaagen des zweiten erfindungsgemäßen Düngemittels zeigt und gegen die Zeit in Tagen (x-Achse) aufgetragen ist. Ein Nassgewicht-Balken zeigt das Gewicht des zweiten erfindungsgemäßen Düngemittels mit dem entsprechenden DES und Pflanzennährstoff direkt nach der Aufnahme von Wasser, ein Trockengewicht-Balken zeigt das Gewicht des zweiten erfindungsgemäßen Düngemittels während des Trocknens an Luft an. Dabei entspricht die Probe hellgrau in Figur 15: 0,5 g des zweiten erfindungsgemäßen Düngermittels (entspricht 0,17 g Hanfschäben) und die Probe dunkelgrau in Figur 15: 1,5 g des erfindungsgemäßen Düngermittels (entspricht 0,5 g Hanfschäben).

Figur 16 zeigt das Nassgewicht des eingesetzten Düngemittels 13.3 von zwei unterschiedlich eingesetzten Mengen (hellgrau: 0,5 g Düngemittel mit DES und Nährstoff (entspricht 0,17 g Hanfschäben) und dunkelgrau: 1,5 g Düngemittel mit DES und Nährstoff (entspricht 0,5 g Hanfschäben). Die Probe dunkelgrau ist mit den bisherigen Wasseraufnahmeversuchen aufgrund gleicher Hanfschäben-Einwaagen vergleichbar (vergleiche beispielsweise Beispiele 1 und 11).

Bei der ersten Behandlung mit Wasser zeigt sich, dass das Nassgewicht vom zweiten erfindungsgemäßen Düngemittel bei beiden Einwaagen im gleichen Nassgewicht resultiert.

Dies lässt darauf schließen, dass die Wasseraufnahme unabhängig vom DES abläuft, bis die maximale Kapazität der Hanfschäben erreicht ist.

### Beispiel 14: Beladung der Hanfschäben mit DES und einem Eisensalz

Die Reversibilität der Sorption von Metallsalzen in unterschiedlichen Mengen von Hanfschäben wurde anhand von Waschschritten nach der Sorption von Hanfschäben mit einem DES-Metall-Gemisch untersucht (150 mg und 300 mg FeSO₄ × 7 H₂O in jeweils 30 mmol DES (CH) (2,6 g DES (CH), 67 Mol-%:33 Mol) gelöst und von 1,5 g Hanfschäben sorbiert). Nach zwei Waschschritten mit Wasser zu je 1 min wurde das DES-Metall-Gemisch fast vollständig von den Hanfschäben abgegeben beziehungsweise aus den Hanfschäben ausgewaschen. Das Ausgangsgewicht der Hanfschäben wurde nahezu wieder erreicht, REM-EDX Aufnahmen zeigen nur noch einen sehr geringen Eisenanteil (0,1 At-% bei 150 mg Eisenbeladung und 0,2 At-% bei 300 mg Eisenbeladung) in den Partikeln und die AAS-Messungen (Atomabsorptionsspektroskopie-Messung) bestätigen, dass sich der Großteil des Eisensalzes in der wässrigen Lösung befindet.

Mit dem verwendeten Eisensalz konnte beispielhaft gezeigt werden, dass die Metallsalze grundsätzlich als Kurzeit-Düngemittelkomponente fungieren können, da sie reversibel wieder von den Hanfschäben abgegeben beziehungsweise ausgewaschen werden können. Je nach Auswahl des zu sorbierenden DES ist auch eine Abgabe der Komponenten über einen längeren Zeitraum denkbar (vergleiche Beispiel 13.2.1 Wasseraufnahme DES CV).

### Beispiel 15: Wasseraufnahme von zerkleinerten Hanfschäben von zwei unterschiedlichen Herstellern

### Versuchsdurchführung:

Es wurden jeweils drei 0,5 g Einwaagen Hanfschäben von zwei verschiedenen Herstellern in einem 50 ml Falcon abgewogen und in 10 ml dest. Wasser für 30 Minuten bei Raumtemperatur inkubiert.

Der Überstand des nicht sorbierten Wassers wurde in einen Messzylinder überführt. Die mit Wasser sorbierten Hanfschäben wurden über Nacht bei Raumtemperatur getrocknet.

Die Ergebnisse sind in Tabelle 15 dargestellt.

**Tabelle 15:**

| Zeit | | Firma 1 | Firma 1 | Firma 1 | Firma 2 | Firma 2 | Firma 2 |
|---|---|---|---|---|---|---|---|
| Tag 1 | Leergewicht Falcon | 12,818 g | 12,834 g | 12,829 g | 12,803 g | 12,772 g | 12,810 g |
| | Falcon + Hanfschäben | 13,319 g | 13,336 g | 13,334 g | 13,305 g | 13,272 g | 13,311 g |
| | Nassgewicht | 15,244 g | 15,410 g | 15,392 g | 15,827 g | 16,036 g | 15,939 g |
| | Volumen ÜS | 7,9 ml | 7,8 ml | 7,8 ml | 7,3 ml | 7,0 ml | 7,2 ml |
| Tag 2 | Trockengewicht | 13,531 g | 13,747 g | 13,773 g | 13,823 g | 13,739 g | 13,857 g |
| Tag 3 | Trockengewicht | 13,315 g | 13,333 g | 13,331 g | 13,285 g | 13,245 g | 13,301 g |

Figur 17 a) zeigt ein Balkendiagramm, wobei ein Balken jeweils das Gewicht in Gramm (y-Achse) von Hanfschäben zweier unterschiedlicher Firmen zeigt und gegen die Zeit in Tagen (x-Achse) aufgetragen ist. Ein dunkelgrauer Balken ist den Hanfschäben der Firma 1 und ein hellgrauer Balken ist den Hanfschäben der Firma 2 zuzuordnen. Ein Nassgewicht-Balken zeigt das Gewicht der Hanfschäben direkt nach der Sorption von Wasser, ein Trockengewicht-Balken zeigt das Gewicht der Hanfschäben während des Trocknens an Luft an.

Figur 17 b) zeigt ebenfalls wie bereits in Figur 17 a) gezeigt, die Gewichtsänderung von zwei von unterschiedlichen Firmen (schwarze Punkte Firma 1, hellgraue Punkte Firma 2) bezogenen mit Wasser sorbierten Hanfschäben.

Die zerkleinerten Hanfschäben der Firma 2 können mehr Wasser (circa 0,5 ml mehr Wasser/ 0,5 g Hanfschäben) aufnehmen. Grundsätzlich bleibt die Aufnahme konstant und unterscheidet sich für eine poröse sorptionsfähige Komponente nicht bedeutend.

## Patentansprüche

1. Agrarmittel, insbesondere Dünge- oder Futtermittel, umfassend mindestens eine poröse sorptionsfähige organische Komponente und mindestens ein von der porösen sorptionsfähigen organischen Komponente sorbiertes stark eutektisches Lösungsmittel (DES).

2. Agrarmittel nach Anspruch 1, insbesondere Dünge- oder Futtermittel, umfassend mindestens eine poröse sorptionsfähige organische Komponente und mindestens ein von der porösen sorptionsfähigen organischen Komponente sorbiertes verflüssigtes stark eutektisches Lösungsmittel (DES).

3. Agrarmittel nach einem der Ansprüche 1 oder 2, wobei die poröse sorptionsfähige organische Komponente ein pflanzliches, tierisches oder pilzliches Biopolymer, insbesondere eine Lignin-, Hemicellulose-, Cellulose- und/oder Chitosan-haltige Komponente umfasst oder daraus besteht.

4. Agrarmittel nach einem der vorhergehenden Ansprüche, wobei die poröse sorptionsfähige organische Komponente Schäben, insbesondere Hanfschäben, gemahlene Hanfschäben, Samenschalen, insbesondere Rapsschalen, Sojaschalen, Hanfschalen, Holz, Holzabfälle, Naturfasern, Stroh, insbesondere Hanfstroh, Sägespäne, Chitosan, Lignin, poröse nachwachsende Materialien oder eine Kombination davon umfasst, insbesondere aus diesen besteht.

5. Agrarmittel nach einem der vorhergehenden Ansprüche, wobei das DES ein natürliches stark eutektisches Lösungsmittel (NADES), ein Typ I DES, ein Typ II DES, ein Typ III DES, ein Typ IV DES oder eine Kombination davon ist.

6. Agrarmittel nach einem der vorhergehenden Ansprüche, wobei das DES eine Mischung aus mindestens zwei Ausgangsstoffen A und B umfasst, insbesondere daraus besteht und wobei der mindestens eine Ausgangsstoff A ein Wasserstoffbrückenbindungs-Akzeptor, insbesondere ein Salz, und der mindestens eine Ausgangsstoff B ein Wasserstoffbrückenbindungs-Donor ist.

7. Agrarmittel nach einem der vorhergehenden Ansprüche, wobei der Ausgangsstoff A des DES ein Halogen- und/oder Ammoniumsalz, insbesondere ein quartäres Ammoniumsalz, ein Metallsalzhydrat, ein Zucker, ein Zuckerderivat, eine Carbonsäure, ein Carbonsäurederivat, Chitosan, ein Chitosanderivat, Chitin, Lignin, eine Aminosäure, ein Amin, Harnstoff oder ein Harnstoff-Derivat ist.

8. Agrarmittel nach einem der vorhergehenden Ansprüche, wobei der Ausgangsstoff A des DES ausgewählt ist aus der Gruppe bestehend aus einem Cholinsalz, einem Acetylcholinsalz, einem Betainsalz, einem Benzyltrimethyl-Ammoniumsalz, Fructose, Glucose, Maltose, Vanillin, Galactose, Maltit, Oxalsäure, Malonsäure, Äpfelsäure, Weinsäure, Zitronensäure, Lignin, Chitosan, Chitin, Glucosamin-Hydrochlorid, N-Acetyl-D-Glucosamin, Cellulose, Campher, Raffinose, Arabinose, Rhamnose, Lactose, Xylose, L-Arginin-Monohydrochlorid, 4-Aminoantipyrin, 5-Hydroxymethylfurfural, Benzimidazol, Malonamid, Adipinsäure, Harnstoff, Thioharnstoff, 1,1-Dimethylharnstoff und 1,3-Dimethylharnstoff.

9. Agrarmittel nach einem der vorhergehenden Ansprüche, wobei der Ausgangsstoff B des DES ausgewählt ist aus der Gruppe bestehend aus Zuckern, Zuckerderivaten, Carbonsäuren, Carbonsäurederivaten, Harnstoff, Harnstoffderivaten, Chitosan, Chitosanderivaten, Chitin, Lignin, Aminosäuren und Aminen.

10. Agrarmittel nach einem der vorhergehenden Ansprüche, wobei der Ausgangsstoff B des DES ausgewählt ist aus der Gruppe bestehend aus Saccharose, Fructose, Glucose, Maltose, Mannitol, Sorbitol, Vanillin, Galactose, Erythrit, Xylit, Maltit, Oxalsäure, Malonsäure, Äpfelsäure, Weinsäure, Zitronensäure, Glycerol, Ethylenglykol, Lignin, Chitosan, Chitin, Glucosamin-Hydrochlorid, N-Acetyl-D-Glucosamin, Cellulose, Raffinose, Arabinose, Rhamnose, Lactose, Xylose, L-Arginin-Monohydrochlorid, Guanidin-Hydrochlorid, 4-Aminoantipyrin, 5-Hydroxymethylfurfural, Benzimidazol, Malonamid, Adipinsäure, Harnstoff, Thioharnstoff, 1,1-Dimethylharnstoff und 1,3-Dimethylharnstoff.

11. Agrarmittel nach einem der vorhergehenden Ansprüche, wobei das Agrarmittel mindestens einen organischen Zusatzstoff, insbesondere eine Kohlenstoff-haltige Verbindung, insbesondere einen bioaktiven Stoff, insbesondere ein Vitamin und/oder eine Aminosäure enthält.

12. Futtermittel nach einem der vorhergehenden Ansprüche, wobei das Futtermittel mindestens einen Mikronährstoff, insbesondere ein Mengen- oder Spurenelement, insbesondere ein Metallsalz oder ein Metalloxid enthält.

13. Düngemittel nach einem der vorhergehenden Ansprüche 1 bis 11, wobei das Düngemittel mindestens einen Pflanzennährstoff, insbesondere ein Phosphor-, Stickstoff-, Magnesium-, Schwefel-, Calcium-, Natrium-, Chlor-, Bor-, Fluor-, Silicium-, Vanadium-, Chrom-, Mangan-, Eisen-, Cobalt-, Kupfer-, Zink-, Arsen-, Selen-, Rubidium-, Molybdän-, Zinn-, Iod- oder Kalium-haltiges Salz oder Oxid, insbesondere ein Metallsalz oder ein Metalloxid enthält.

14. Agrarmittel nach einem der vorhergehenden Ansprüche, **dadurch gekennzeichnet, dass** das verflüssigte DES, einen Stickstoffanteil von 0 bis 45 Gew.-% aufweist.

15. Agrarmittel nach einem der vorhergehenden Ansprüche, **dadurch gekennzeichnet, dass** dieses einen Stickstoffgehalt von 1 bis 25 Gew.-%, einen Phosphorgehalt von 0 bis 30 Gew.-%, einen Kaliumgehalt von 0 bis 25 Gew.-% und/oder einen Metallkomponentengehalt von 0 bis 25 Gew.-% aufweist.

16. Verfahren zur Herstellung eines Agrarmittels, insbesondere eines Agrarmittels nach einem der Ansprüche 1 bis 15, umfassend folgende Verfahrensschritte:
a) Bereitstellen mindestens einer porösen sorptionsfähigen organischen Komponente und mindestens eines stark eutektischen Lösungsmittels (DES), insbesondere eines verflüssigten stark eutektischen Lösungsmittels (DES),
b) Mischen der in Verfahrensschritt a) bereitgestellten mindestens einen porösen sorptionsfähigen organischen Komponente mit dem mindestens einen stark eutektischen Lösungsmittel (DES), insbesondere einen verflüssigten stark eutektischen Lösungsmittel (DES), und
c) Erhalten des Agrarmittels.

17. Verfahren nach Anspruch 16, wobei in Verfahrensschritt a) zusätzlich mindestens ein Funktionsstoff ausgewählt aus der Gruppe bestehend aus einem Mikronährstoff, einem Pflanzennährstoff und einem organischen Zusatzstoff, insbesondere einem Metallsalz oder Metalloxid, bereitgestellt wird, in Verfahrensschritt b) mit der in Verfahrensschritt a) bereitgestellten mindestens einen porösen sorptionsfähigen organischen Komponente und dem mindestens einen stark eutektischen Lösungsmittel (DES), insbesondere einen verflüssigten stark eutektischen Lösungsmittel (DES) gemischt wird und in Verfahrensschritt c) das Agrarmittel erhalten wird.

18. Verwendung eines stark eutektischen Lösungsmittels (DES), insbesondere eines NADES, eines Typ I DES, eines Typ II DES, eines Typ III DES, eines Typ IV DES oder einer Kombination davon, als Düngemittel, insbesondere als Kurzzeit- oder Langzeitdüngemittel, oder als Futtermittel, insbesondere als Futtermittelzusatz.

19. Verwendung nach Anspruch 18, wobei das DES zusätzlich mindestens einen Mikronährstoff und/oder einen Pflanzennährstoff, insbesondere ein Metallsalz oder Metalloxid, und/oder einen organischen Zusatzstoff enthält.
